(19) Europäisches Patentamt
European Patent Office
Office européen des brevets

(11) EP 1 936 431 A2

(12) EUROPEAN PATENT APPLICATION

(43) Date of publication:
**25.06.2008 Bulletin 2008/26**

(51) Int Cl.:
***G02F 1/13363*** *(2006.01)* ***G02B 5/30*** *(2006.01)*

(21) Application number: **07025005.5**

(22) Date of filing: **21.12.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **21.12.2006 JP 2006344063**
**23.01.2007 JP 2007012206**
**25.07.2007 JP 2007193207**

(71) Applicant: **FUJIFILM Corporation**
**Minato-ku**
**Tokyo (JP)**

(72) Inventors:
- **Toyama, Hirofumi**
**Minami-ashigara-shi**
**Kanagawa 250-0193 (US)**
- **Yasuda, Kotaro**
**Minami-ashigara-shi**
**Kanagawa 250-0193 (US)**
- **Nakayama, Hajime**
**Minami-ashigara-shi**
**Kanagawa 250-0193 (US)**
- **Fukagawa, Nobutaka**
**Minami-ashigara-shi**
**Kanagawa 250-0193 (US)**
- **Taguchi, Keiichi**
**Minami-ashigara-shi**
**Kanagawa 250-0193 (US)**

(74) Representative: **HOFFMANN EITLE**
**Patent- und Rechtsanwälte**
**Arabellastrasse 4**
**81925 München (DE)**

# (54) Liquid crystal display device

(57) A liquid crystal display device comprising first and second polarizing elements of which transmission axes are perpendicular to each other, and, disposed between the polarizing elements, a liquid crystal layer vertically aligned in a black state, and first and second optically anisotropic layer is disclosed. In the liquid crystal display device, the first optically anisotropic layer is a biaxial optically anisotropic layer of which in-plane retardation (Re) and thickness-direction retardation (Rth) are larger at a longer wavelength range within a range of from 400 nm to 700 nm, and the second optically anisotropic layer satisfies Orim<lRe(550)1<10nm and |Rth (550) |/|Re(550) |>10
in which Re (550) is in-plane retardation (Re) at a wavelength of 550 nm and Rth (550) is thickness-direction retardation at the same wavelength.

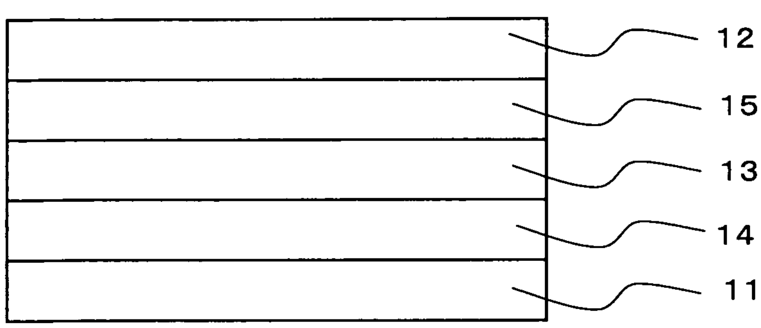


FIG. 1

EP 1 936 431 A2

Printed by Jouve, 75001 PARIS (FR)

## Description

BACKGROUND OF THE INVENTION

FIELD OF THE INVENTION

The present invention relates to a liquid crystal display device improved in viewing-angle properties.

RELATED ART

A liquid crystal display device (LCD) has been more and more widely used instead of a CRT, because it has a thin shape, lightweight and small electric power consumption. Various LCD modes employing a liquid crystal cell in which liquid crystal molecules are aligned in any alignment state have been proposed. Among these, the 90 degree-twisted nematic cell, TN cell, is the most widely used LC cell.

In general, a liquid crystal display device comprises a liquid crystal cell, an optical compensation sheet and a polarizing plate. The optical compensation sheet is used for reducing coloration on the images or widening the viewing angle, and stretched birefringent films or films having a coated liquid crystal layer thereon are utilized. For example, as an optical compensation film capable of widening the viewing angle of a TN mo-do LCD, an optical compensation sheet prepared by fixing discotic liquid crystal in an alignment on a cellulose acylate film is proposed. However, the viewing angle properties required for large-screen LCD televisions, which may be viewed in various directions, are so tough that they cannot be achieved by employing such the optical compensation sheet. And various modes such as IPS(In-Plane Switching), OCB(Optically Compensatory Bend) and VA (Vertically Aligned) modes other than the TN-mode have been researched and developed. Especially, the VA mode can provide high contrast and good productivity, and LCDs employing the VA mode have been developed as televisions. Although the VA mode can achieve near-complete black state in the normal direction with respect to the display plane, it suffers from light leaking in the oblique direction, namely narrow viewing-angle properties. For overcoming this defect, JPA No. 2003-344856 proposes a wide viewing angle liquid crystal display device is provided with an optical retardation thin polymer film satisfying an inequality nx>ny>nz. Although the technique disclosed in the document may prevent light falling within the limited range such as green light around 550 nm, it doesn' t mention other wavelength such as blue light around 450 nm and red light around 650 nm. Viewing the LCD in the black state, coloration in red or blue, namely color shift, is observed in the oblique direction.

Japanese Patent No. 3648240 discloses the LCD improved in terms of color-shift comprising two retardation films having a predetermined wavelength dispersion of retardation.

SUMMARY OF THE INVENTION

In order to meet the needs of high-displaying quality, further improvement of the above mentioned properties is required.

One object of the invention is to provide a liquid crystal display device, especially VA-mode liquid crystal display device, which can provide high contrast images in the wide viewing-angle range and reduce the color-shift in an oblique direction.

In one aspect, the invention provides a liquid crystal display device comprising:

first and second polarizing elements of which transmission axes are perpendicular to each other, and, disposed between the polarizing elements,
a liquid crystal layer vertically aligned in a black state, and
first and second optically anisotropic layer;

wherein the first optically anisotropic layer is a biaxial optically anisotropic layer of which in-plane retardation (Re) and thickness-direction retardation (Rth) are larger at a longer wavelength range within a range of from 400 nm to 700 nm, and the second optically anisotropic layer satisfies $0nm<|Re(550)|<10nm$ and $|Rth(550)|/|Re(550)|>10$
in which Re (550) is in-plane retardation (Re) at a wavelength of 550 nm and Rth (550) is thickness-direction retardation at the same wavelength.

As embodiments of the invention, there are provided, the liquid crystal display device wherein the first optically anisotropic layer has an Nz value ($Nz=Rth(550)/Re(550)+0.5$) falling within the range from 0.5 to 10; the liquid crystal display device wherein the first optically anisotropic layer has an Nz value ($Nz=Rth (550) /Re (550) +0.5$) falling within the range from 1.1 to 5; the liquid crystal display device wherein the first optically anisotropic layer satisfies $Re(550) >20nm$; the liquid crystal display device, wherein the first optically anisotropic layer satisfies the following relational formulae (1) to (3):

(1) $-2.5\times Re(550)+300 < Rth(550) < -2.5\times Re(550)+500$
(2) $-2.5\times Re(450)+250 < Rth(450) < -2.5\times Re(450)+450$
(3) $-2.5\times Re(630)+350 < Rth(630) < -2.5x Re(630)+550$;

the liquid crystal display device, wherein the first optically anisotropic layer satisfies all of the three following relational formulae:

$Re(550) > 20nm$
$0.5 < Nz < 10$
$-2.5\times Re(550)+300 < Rth(550) < -2.5\times Re(550)+500$

where Re(λ) and Rth(λ) (unit:nm) mean in-plane retardation and thickness direction retardation for an incident light having a wavelength of λnm respectively and Nz is defined as Nz=Rth(550)/Re(550)+0.5; the liquid crystal display device, wherein the first optically anisotropic layer further satisfies the following relational formula:

$$-2.5\times Re(450)+250 < Rth(450) < -2.5\times Re(450)+450;$$

the liquid crystal display device, wherein the first optically anisotropic layer further satisfies the following relational formula:

$$-2.5\times Re(630)+350 < Rth(630) < -2.5\times Re(630)+550;$$

and
the liquid crystal display device, wherein the first optically anisotropic layer further satisfies the following relational formulae (6) to (9):

(6) $0.60 \leqq Re(450)/Re(550) \leqq 1$
(7) $1 \leqq Re(630)/Re(550) \leqq 1.25$
(8) $0.60 \leqq Rth(450)/Rth(550) \leqq 1$
(9) $1 \leqq Rth(630)/Rth(550) \leqq 1.25$ .

The first optically anisotropic layer may be a cellulose acylate film. And the cellulose acylate film may comprise an Re enhancer.
The Re enhancer may comprises at least one compound represented by formula (A):

Formula (A)

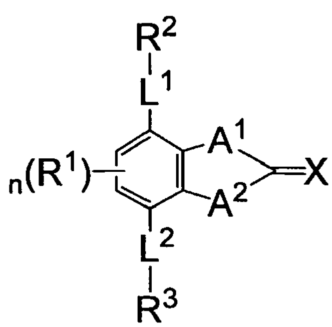

where $L^1$ and $L^2$ independently represent a single bond or a divalent linking group; $A^1$ and $A^2$ independently represent a group selected from the group consisting of -O-,-NR- where R represents a hydrogen atom or a substituent, -S- and -CO-;$R^1$, $R^2$ and $R^3$ independently represent a substituent; X represents a nonmetal atom selected from the groups 14-16 atoms, provided that X may bind with at least one hydrogen atom or substituent; and n is an integer from 0 to 2.
The Re enhancer may comprise at least two types of compounds different from each other.
The first optically anisotropic layer may have a thickness of from 30 to 200 μm.

The second optically anisotropic layer may satisfy the following relational formula (4):

(4) $Rth(630)-Rth(450) \leqq 0$ .

The second optically anisotropic layer may satisfy the following relational formula (5):

(5) $Rth(630)-Rth(450) > 0$.

The second optically anisotropic layer may be or comprise a cellulose acylate film. And The cellulose acylate film may comprise an Rth enhancer.

The Rth enhancer may comprise at least one compound showing an absorption peak at a wavelength from 250nm to 380nm.

The second optically anisotropic layer may be or comprise a layer formed of a liquid crystal composition.

The second optically anisotropic layer may have a thickness of from 30 to 200 $\mu$m.

As embodiments of the invention, the liquid crystal display device further comprising an outer protective film having a degree of moisture permeation of at most 300 g/ ($m^2$·day) on the other surface of the first and/or second polarizing element is provided.

The outer protective film may be a norbornene-base polymer film.

BRIEF DESCRIPTION OF THE DRAWINGS

FIG. 1 is a schematic cross-sectional view of one example of a liquid-crystal display device of the invention.
FIG. 2 is a view used for explaining one example of the optical compensatory mechanism of a liquid-crystal display device of the invention, on a Poincare sphere.
FIG. 3 is a view used for explaining one example of the optical compensatory mechanism of a liquid-crystal display device of the invention, on a Poincare sphere.
FIG. 4 is a view used for explaining one example of the optical compensatory mechanism of a liquid-crystal display device of the invention, on a Poincare sphere.
FIG. 5 is a graph showing, as obtained by simulation, the result of the Re-Rth correlation of an optical film that enables the conversion of the polarization state shown in FIG. 2.
FIG. 6 is a graph of FIG. 5 with Nz=1.1, Nz=1.3, Nz=4.7 and Nz=5 added thereto.
FIG. 7 is a schematic view used for explaining the relationship between the change in the Nz value of an optical film (first optically-anisotropic layer) and the change in Rth of a second optically-anisotropic layer.
FIG. 8 is a schematic cross-sectional view of examples of a polarizing plate of the invention.
FIG. 9 is a graph showing Re and Rth of various optical films to be used as a first optically anisotropic layer produced in Example 2, as plotted along with the range of formula (1) and the range of Nz falling from 1.1 to 5.0.
FIG. 10 is a graph showing Re and Rth of various optical films to be used as a first optically anisotropic layer produced in Example 2, as plotted along with the range of formula (2) and the range of Nz falling from 1.1 to 5.0.
FIG. 11 is a graph showing Re and Rth of various optical films to be used as a first optically anisotropic layer produced in Example 2, as plotted along with the range of formula (3) and the range of Nz falling from 1.1 to 5.0.
FIG. 12 is a schematic outline view of one example of an ordinary VA-mode liquid-crystal display device.
FIG. 13 is a schematic outline view of one example of an ordinary VA-mode liquid-crystal display device.
FIG. 14 is a schematic outline view of one example of a conventional VA-mode liquid-crystal display device.
FIG. 15 is a view used for explaining one example of the optical compensatory mechanism of a conventional VA-mode liquid-crystal display device, on a Poincare sphere.

In the drawings, the reference numerals have the following meanings:

| | |
|---|---|
| 11, 51 | Polarizing Element |
| 12, 52 | Polarizing Element |
| 13, 53 | Liquid-Crystal Cell |
| 14, 24 | First Optically-Anisotropic Layer |
| 15, 25 | Second Optically-Anisotropic Layer |
| 16, 16' | Outside Protective Film |
| 54 | Optically-Compensatory Film (A plate) |
| 55 | Optically-Compensatory Film (C plate) |

DETAILED DESCRIPTION OF THE INVENTION

The invention is described hereinunder. In this description, the numerical range expressed by the wording "a number to another number" means the range that falls between the former number indicating the lowermost limit of the range and the latter number indicating the uppermost limit thereof. "Substantially perpendicular or parallel" is meant to include a range of strict angle ± 10°.

In this *description,* Re(λ) and Rth(λ) are an in-plane retardation (nm) and a thickness-direction retardation (nm), respectively, at a wavelength of λ. Re(λ) is measured by applying light having a wavelength of λ nm to a film in the normal direction of the film, using KOBRA 21ADH or WR (by Oji Scientific Instruments).

When a film to be analyze by a monoaxial or biaxial index ellipsoid, Rth (λ) of the film is calculated as follows. Rth (λ) is calculated by KOBRA 21ADH or WR based on six Re (λ) values which are measured for incoming light of a wavelength λ nm in six directions which are decided by a 10° step rotation from 0° to 50° with respect to the normal direction of a sample film using an in-plane slow axis, which is decided by KOBRA 21ADH, as an inclination axis (a rotation axis; defined in an arbitrary in-plane direction if the film has no slow axis in plane) ; a value of hypothetical mean refractive index; and a value entered as a thickness value of the film.

In the above, when the film to be analyzed has a direction in which the retardation value is zero at a certain inclination angle, around the in-plane slow axis from the normal direction as the rotation axis, then the retardation value at the inclination angle larger than the inclination angle to give a zero retardation is changed to negative data, and then the Rth(λ) of the film is calculated by KOBRA 21ADH or WR.

Around the slow axis as the inclination angle (rotation angle) of the film (when the film does not have a slow axis, then its rotation axis may be in any in-plane direction of the film), the retardation values are measured in any desired inclined two directions, and based on the data, and the estimated value of the mean refractive index and the inputted film thickness value, Rth may be calculated according to the following formulae (21) and (22):

(21):

$$\mathrm{Re}(\theta) = \left[ nx - \frac{ny \times nz}{\sqrt{\left\{ ny \sin\left(\sin^{-1}\left(\frac{\sin(-\theta)}{nx}\right)\right)\right\}^2 + \left\{ nz \cos\left(\sin^{-1}\left(\frac{\sin(-\theta)}{nx}\right)\right)\right\}^2}} \right] \times \frac{d}{\cos\left\{\sin^{-1}\left(\frac{\sin(-\theta)}{nx}\right)\right\}}$$

(22):

$$Rth = \{(nx+ny)/2 - nz\} \times d$$

wherein Re(θ) represents a retardation value in the direction inclined by an angle θ from the normal direction; nx represents a refractive index in the in-plane slow axis direction; ny represents a refractive index in the in-plane direction perpendicular to nx; and nz represents a refractive index in the direction perpendicular to nx and ny. And "d" is a thickness of the sample.

When the film to be analyzed is not expressed by a monoaxial or biaxial index ellipsoid, or that is, when the film does not have an optical axis, then Rth(λ) of the film may be calculated as follows:

Re (λ) of the film is measured around the slow axis (judged by KOBRA 21ADH or WR) as the in-plane inclination axis (rotation axis), relative to the normal direction of the film from -50 degrees up to +50 degrees at intervals of 10 degrees, in 11 points in all with a light having a wavelength of λ nm applied in the inclined direction; and based on the thus-measured retardation values, the estimated value of the mean refractive index and the inputted film thickness value, Rth(λ) of the film may be calculated by KOBRA 21ADH or WR.

In the above-described measurement, the hypothetical value of mean refractive index is available from values listed in catalogues of various optical films in Polymer Handbook (John Wiley & Sons, Inc.). Those having the mean refractive indices unknown can be measured using an Abbe refract meter. Mean refractive indices of some major optical films are listed below:

cellulose acylate (1.48), cycloolefin polymer (1.52), polycarbonate (1.59), polymethylmethacrylate (1.49) and polystyrene (1.59).

KOBRA 21ADH or WR calculates nx, ny and nz, upon enter of the hypothetical values of these mean refractive indices and the film thickness. Base on thus-calculated nx, ny and nz, Nz=(nx-nz)/(nx-ny) is further calculated.

In this description, Re(λ) and Rth(λ) such as Re(450), Re(550), Re(630), Rth(450), Rth(550) and Rth(630) are measured as follows: Using a measuring instrument, a sample is analyzed at three or more different wavelengths (for example, λ = 479.2, 546.3, 632.8, 745.3 nm), and Re and Rth of the sample are calculated at those wavelengths. The data are approximated according to a Cauchy's formula (up to the trinominal expression, $Re = A+B/\lambda^2+C/\lambda^4$), to obtain the values A, B and C. From the above, Re and Rth at a wavelength λ are plotted, and Re and Rth at the wavelength λ are obtained as Re(λ) and Rth(λ).

[Liquid-Crystal Display Device]

One embodiment of a liquid-crystal display device of the invention is shown in FIG. 1. FIG. 1 is an example of a constitution of a VA-mode liquid-crystal display device, comprising a VA-mode liquid-crystal cell 13, and a pair of first polarizing element 11 and second polarizing element 12 disposed to sandwich the liquid-crystal cell 13 therebetween. Between the first polarizing element 11 and the liquid-crystal cell 13, the device has a first optically-anisotropic layer 14; and between the second polarizing element 12 and the liquid-crystal cell 13, the device has a second optically-anisotropic layer 15. The polarizing elements 11 and 12 are so disposed that their transmission axes are perpendicular to each other. Preferably, the first optically-anisotropic layer 14 is so disposed that its in-plane slow axis is perpendicular to the absorption axis of the first polarizing element 11.

Any of the polarizing elements 11 and 12 may be on the backlight side or the display panel side. The first optically-anisotropic layer 14 and the second optically-anisotropic layer 15 may be disposed to be in contact with the surface of the polarizing elements 11 and 12 as a protective film for them. Between the polarizing element 11 and the first optically-anisotropic layer 14, and between the polarizing element 12 and the second optically-anisotropic layer 15, a protective film may be additionally disposed. In this case, the protective film is preferably an isotropic film having a retardation of nearly 0.

In the embodiment shown in FIG. 1, the first optically-anisotropic layer 14 is an optically-biaxial optically-anisotropic layer having the property that its Re and Rth are larger at a longer wavelength within a range of from 400 nm to 700 nm. The second optically-anisotropic layer 15 is such that its in-plane retardation at a wavelength of 550 nm, Re (550) and its thickness-direction retardation at the same wavelength, Rth(550) satisfies 0 nm < |Re(550)| < 10 nm and |Rth(550) |/|Re(550)| > 10. In this embodiment, the first optically-anisotropic layer 14 and the second optically-anisotropic layer 15 satisfying the optical characteristics are used to thereby solve the problem of light leakage in the normal direction and the oblique direction in the black state and to thereby reduce the color shift that may occur in the oblique direction in the black state. One example of a preferred combination of the first optically-anisotropic layer 14 and the second optically-anisotropic layer 15 is that the first optically-anisotropic layer 14 satisfies the following formulae (a) to (c) and the second optically-anisotropic layer 15 satisfies the following formula (d):

(a): Re(550) > 20 nm,
(b): 0.5 < Nz < 10,
(c): $-2.5 \times Re(550) + 300 < Rth(550) < -2.5 \times Re(550) +500$,
(d): Rth(550)/Re(550) > 10.

In the formulae, Re(λ) and Rth(λ) are the in-plane and out-plane retardations (unit: nm), respectively, as measured with incident light having a wavelength of λ nm; and Nz = Rth(550)/Re(550) + 0.5.

Now for explaining the effect of this embodiment, first clarified for comparison are problems with a conventional VA-mode liquid-crystal display device. FIG. 12 shows a schematic view of a constitution of an ordinary VA-mode liquid-crystal display device. The VA-mode liquid-crystal display device generally comprises a liquid-crystal cell 53 that has a liquid-crystal layer in which the liquid crystal is vertically aligned relative to the substrate face in no voltage application thereto, or that is, in the black state, and polarizing plates (regarding the term "polarizer", occasionally referred to as "polarizer") 51 and 52 that are so disposed as to sandwich the liquid-crystal cell 53 therebetween and that their transmission axes (shown by stripes in FIG. 12) are perpendicular to each other. In FIG. 12, light comes into the device from the side of the polarizer 51. When light comes into the device in the normal direction, or that is, in the z-axis direction in no voltage application to the device, then the light having passed through the polarizer 51 further passes through the liquid-crystal cell 53 while keeping its linear polarization state, and then completely blocked by the polarizer 52. As a result, the device displays a high-contrast image.

However, the condition differs in oblique light application as in FIG. 13. When light comes into the device not in the z-axis direction but in an oblique direction, or that is, when the incident light to the device is in the oblique direction relative to the polarization direction of the polarizers 51 and 52 (so-called off-axis), then the incident light is influenced by the oblique-direction retardation while passing through the vertically-aligned liquid-crystal layer of the liquid-crystal

cell 53, whereby its polarization state changes. Further, the apparent transmission axes of the polarizer 51 and the polarizer 52 shift from the perpendicularly-crossing disposition. Because of these two factors, the incident light in the oblique direction in the off-axis condition could not be completely blocked by the polarizer 52, and as a result, there may occur light leakage in the black state, thereby causing contract reduction.

A polar angle and an azimuth angle are defined herein. The polar angle is an angle as inclined in the normal direction of a film face, or that is, from the z-axis in FIG. 12 and FIG. 13, and, for example, the normal direction of the film face is a direction at a polar angle of 0 degree. The azimuth angle indicates a direction as rotated in the counterclockwise direction based on the positive direction of the x-axis, and for example, the positive direction of the x-axis is a direction at an azimuth angle of 0 degree. The positive direction of the y-axis is a direction of an azimuth angle of 90 degrees. The above-mentioned oblique direction in off-axis condition mainly indicates a case where the polar angle is not 0 degree and the azimuth angle is 45 degrees, 135 degrees, 225 degrees or 315 degrees.

Heretofore, it is proposed to solve the problem of contrast reduction in the oblique direction in a VA-mode liquid-crystal display device, by the use of a biaxial plate and a C plate (for example, Patent Reference 2). Heretofore, various stretched polymer films are used in ordinary optically-compensatory films; but in general, most stretched polymer films satisfy a relation of $Re(450) \geq Re(550) \geq Re(650)$ and $Rth(450) \geq Rth(550) \geq Rth(650)$, in which Re indicates the in-plane retardation and Rth indicates the thickness-direction retardation of the films, or that is, they have larger Re and Rth values at shorter wavelengths (hereinafter this characteristic may be referred to as "regular wavelength dispersion characteristics of the retardation").

FIG. 14 shows a schematic view of one example of a conventional VA-mode liquid-crystal display device comprising a biaxial plate and a C plate. The liquid-crystal display device of FIG. 14 comprises a liquid-crystal cell 53 and a pair of polarizers 51 and 52, and has an optically-compensatory film 54 of A plate between the polarizer 51 and the liquid-crystal cell 53, and an optically-compensatory film 55 of C plate between the polarizer 52 and the liquid-crystal cell 53. FIG. 15 is a view showing the compensatory mechanism of the constitution of FIG. 14, using a Poincare sphere. The Poincare sphere is a three-dimensional map to describe a polarization state, and the equator of the sphere indicates linear polarization. In this, the light propagation direction in the liquid-crystal display device is at an azimuth direction of 45 degrees and a polar direction of 34 degrees. In FIG. 15, the S2 axis is an axis running through the paper vertically from the back to the top; and FIG. 15 shows a view to see a Poincare sphere from the positive direction of the S2 axis. In this, S1, S2 and S3 coordinates indicate values of stoke parameters in a certain polarization state. FIG. 15 shows the two-dimensional condition, in which, therefore, the displacement at the point before and after the change of the polarization state is shown by the linear arrow in the drawing. In fact, however, the polarization state change of light having passed through a liquid-crystal layer and an optically-compensatory film is represented by rotation at a specific angle around a specific axis determined in accordance with the individual optical characteristics, on a Poincare sphere.

The polarization state of the incident light having passed through the polarizer 51 in FIG. 14 corresponds to the point (i) in FIG. 15; and the polarization state of the light as blocked by the absorption axis of the polarizer 52 in FIG. 14 corresponds to the point (ii) in FIG. 15. Heretofore, in a VA-mode liquid-crystal display device, the off-axis light leakage in an oblique direction is caused by the shift of the polarization state of the out-going light at the point (ii). An optically-anisotropy film is generally used for changing the polarization state of the incident light correctly from the point (i) to the point (ii), including the polarization state change in the liquid-crystal layer.

The polarization state change of the incident light having passed through the optically-compensatory film 54 of A plate follows, on a Poincare sphere, the trace shown by the arrow "A" in FIG. 15. The rotation angle on a Poincare sphere is proportional to a value $\Delta n'd'/\lambda$ that is obtained by dividing an effective retardation in the oblique direction, $\Delta n'd'$, by the wavelength of light, $\lambda$. As described in the above, when an ordinary stretched polymer film is used as the optically-compensatory film 54, then Re is larger at a shorter wavelength, and the effective retardation Re of R, G and B differs, and the reciprocal of the wavelength $\lambda$ is larger at a shorter wavelength, and accordingly, the rotation angles at different wavelengths of R, G and B are in an order of B > G > R. In other words, the polarization state of R, G and B after rotation, or that is, the (S1, S2, S3) coordinates are as shown in FIG. 15.

The liquid-crystal layer of the liquid-crystal cell 53 shows positive refractive anisotropy, and is vertically aligned, and therefore, the polarization state change of the incident light having passed through the liquid-crystal layer follows the trace as indicated by the arrow with "LC" running from the top to the bottom in FIG. 15 and is represented by the rotation around the S1 axis, on a Poincare sphere.

Now, the polarization state change of B, G and R running through the optically-compensatory film 54 of C plate is represented by the movement in the normal direction on the S1-S2 plane, as indicated by the arrow with "C" in FIG. 15, on a Poincare sphere. As shown in FIG. 15, all the R light, G light and B light of which the S1 coordinates are not the same and which are in different polarization states in this movement could not be converted into the polarization state at the point (ii) . Since the light shifted at different wavelengths could not be blocked by the polarizer 52, therefore causing light leakage. The color of light results from the addition of R, G and B, and therefore, when light at a specific wavelength leaks out, then the addition ratio of R, G and B may change, therefore causing color shift. This may be observed as "color shift" when a liquid-crystal display device is watched in an oblique direction.

In this description, the wavelengths of R, G and B are as follows:

R is at a wavelength of 650 nm; G is at a wavelength of 550 nm; and B is a wavelength at 450 nm. R, G and B are not always represented typically by these wavelengths, but they may be suitable wavelengths for specifically defining the optical characteristics of the liquid-crystal display device that exhibits the effect of the invention.

The present inventors have specifically noted the following points for solving the prior-art problems. The polarization state change occurring when light passes through a birefringent medium having a larger thickness-direction retardation Rth than the in-plane retardation Re, such as typically a VA-mode liquid-crystal cell in the black state and a C-plate, produces little displacement on the S1 coordinates for any of R light, G light and B light on a Poincare sphere, as indicated by the arrows "LC" and "C" in FIG. 15. Accordingly, when the polarization state of the R light, B light and C light, after having passed first through a polarizing element and then through a first optically-anisotropic layer having an optical axis in the optically biaxial plane, such as typically an A plate, could almost correspond on the S1 coordinates on a Poincare sphere, as shown in FIG. 2, then, even after the light passes later through a vertically-aligned liquid-crystal layer or a second optically-anisotropic layer satisfying predetermined optical characteristics, the polarization state of the R light, the B light and the G light could still correspond on the S1 coordinates. Accordingly, the color shift is reduced more than in FIG. 15 that indicates a conventional VA-mode device in which the states of the R light, the B light and the G light do not correspond on the S1 coordinates.

Afterwards, as in FIG. 3, the polarization state of the R light, the G light and the B light having passed through the VA-mode liquid-crystal cell changes like the arrow 13 shown in the drawing, with the result that the S3 coordinates differ for light separation; and the separation may be evaded by utilizing the wavelength dispersion characteristics of the retardation of the second optically-anisotropic layer. More concretely, when a material satisfying 0 nm < |Re(550)| < 10 nm and |Rth(550)|/|Re(550)| > 10, of which the wavelength dispersion characteristics of Rth shows regular wavelength dispersion characteristics of the retardation, is used for the second optically-anisotropic layer, then, as in FIG. 4, the polarization state of all the R light, the G light and the B light may be converted into that on the S1 axis, or that is, into the extinction point (ii) with no difference in the S1 coordinates for the light, as indicated by the arrow 15 in the drawing. As a result, in the oblique direction, the color shift may be reduced more and the contrast may be improved more.

Some examples of optical compensatory mechanisms are shown in FIG. 2 to FIG. 4, to which, however, the invention should not be limited. In the invention, Re and Rth of the first optically-anisotropic layer may show reversed dispersion characteristics of the retardation; and the wavelength dispersion characteristics of the retardation of the second optically-anisotropic layer is not specifically defined. The wavelength dispersion characteristics of Rth of the second optically-anisotropic layer may be any of regular wavelength dispersion characteristics of the retardation, reversed wavelength dispersion characteristics of the retardation, or constant. Depending on the mode and the optical characteristics of the liquid-crystal cell, the wavelength dependency of Rth of the second optically-anisotropic layer may be selected, and the viewing angle contrast may be thereby improved ant the color shift may be reduced.

Regarding the retardation of the first and second optically-anisotropic layers, the total of Rth(550) of the first optically-anisotropic layer and Rth(550) of the second optically-anisotropic layer is preferably from 100 nm to 400 nm or so, more preferably from 200 nm to 300 nm or so in a vertically-aligned mode, VA-mode.

Preferred embodiments of the first and second optically-anisotropic layer which can be employed in the invention are described in detail hereinunder, with respect to the optical characteristics, the materials and the production methods thereof.

[Optical Characteristics of First optically-anisotropic layer]

(Wavelength Dispersion Characteristics of Re and Rth)

In the liquid crystal display device, the first optically anisotropic layer having the properties capable of the conversion shown in FIG. 2 is employed. The layer is required to exhibit reversed wavelength dispersion characteristics of Re and Rth at a wavelength range of from 400 nm to 700 nm and to be optically biaxial.

Regarding the wavelength dispersion characteristics of the retardation of the first optically anisotropic layer, both Re and Rth thereof show a reversed wavelength dispersion profile, concretely satisfying the following formulae (6) to (9):

(6) $0.60 \leq Re(450)/Re(550) \leq 1$,
(7) $1 \leq Re(630)/Re(550) \leq 1.25$,
(8) $0.60 \leq Rth(450)/Rth(550) \leq 1$,
(9) $1 < Rth(630)/Rth(550) \leq 1.25$;

more preferably, the following formulae (6)' to (9)':

(6)' $0.65 \leq Re(450)/Re(550) \leq 1$,
(7)' $1 \leq Re(630)/Re(550) \leq 1.20$,
(8)' $0.65 \leq Rth(450)/Rth(550) \leq 1$,
(9)' $1 < Rth(630)/Rth(550) \leq 1.20$;

even more preferably, the following formulae (6)" to (9)":

(6)" $0.70 \leq Re(450)/Re(550) \leq 1$,
(7)" $1 \leq Re(630)/Re(550) \leq 1.15$,
(8)" $0.70 \leq Rth(450)/Rth(550) \leq 1$,
(9)" $1 < Rth(630)/Rth(550) \leq 1.15$.

(Relationship between Re and Rth of First optically anisotropic layer)

Further, the inventors have studied (1) a rotation matrix that indicates the polarization state change in passing through optically-anisotropic layers having different Re and/or Rth; and reacted the rotation matrix obtained in (1) with the stoke parameters of incident light (S1, S2, S3) to obtain (2) (S1', S2', S3') after passing through the optically-anisotropic layer, through computation; and, (3) as a result of optimization of Re and Rth so that S1' obtained in (2) could correspond on the S1 coordinates at the extinction point, have found that, with an optically-anisotropic layer of which Re and Rth satisfy the graph shown in FIG. 5 at a wavelength of 450, 550 and 630 nm, the polarization state of R light, B light and G light may nearly correspond on the S1 coordinates on a Poincare sphere. Further, the inventors actually prepared some samples and confirmed their effect, and as a result, have found that, when the first optically-anisotropic layer satisfies the following formulae (1) to (3), then the R light, the G light and the B light having come into the first optically-anisotropic layer could follow the trace of their conversion and may be converted into the polarization state indicating the same S1 coordinates as those for the extinction point (in the drawing, thick strip line), irrespective of Re and Rth (that is, irrespective of the rotation axis and the rotation angle). When an optically-biaxial, first optically-anisotropic layer which shows reversed wavelength dispersion characteristics of Re and Rth and which satisfies the following formulae (1) to (3) is used, then it is significantly effective for greatly reducing the color shift in the oblique direction, as compared with conventional cases. Specifically, it is desirable that the first optically anisotropic layer, which is optically biaxial, satisfies all the following formulae (1) to (3):

(1) $-2.5 \times Re(550) + 300 < Rth(550) < -2.5 \times Re(550) + 500$,
(2) $-2.5 \times Re(450) + 250 < Rth(450) < -2.5 \times Re(450) + 450$,
(3) $- 2.5 \times Re(630) + 350 < Rth(630) < -2.5 \times Re(630) + 550$.

More preferably, the first optically anisotropic layer satisfies the following formulae (1)' to (3)', as having a more excellent effect:

(1)' $-2.5 \times Re(550) + 320 < Rth(550) < -2.5 \times Re(550) + 480$,
(2)' $-2.5 \times Re(450) + 270 < Rth(450) < -2.5 \times Re(450) + 430$,
(3)' $- 2.5 \times Re(630) + 370 < Rth(630) < -2.5 \times Re(630) + 530$.

(Nz Value of First optically anisotropic layer)

Nz is a variable of Re and Rth, and is defined as follows: $Nz = Rth(550)/Re(550) + 0.5$. Nz of the first optically-anisotropic layer is preferably from 1.1 to 5, more preferably from 1.3 to 4.7.

Nz of the first optically-anisotropic layer is preferably larger, as capable of reducing the color shift in watching in an azimuth angle direction within a broader range. When a biaxial, first optically-anisotropic layer is observed in a predetermined polar angle direction, then the apparent Re thereof changes depending on the azimuth angle in that direction. For example, in case where the first optically-anisotropic layer is disposed in the direction parallel to the panel, then the apparent Re is larger when the azimuth angle is larger, but is smaller when the azimuth angle is smaller. When Nz is small, or that is, when Re is large, then the apparent Re change may increase depending on the azimuth angle; and even though the layer has suitable display characteristics at a predetermined azimuth angle, there may occur slight light leakage or color shift at some other azimuth angle. In order that Re could fall within an ordinary producibility range and that the apparent Re change depending on the azimuth angle could be controlled within a range that could not be detectable by viewers as fluctuation of display characteristics, Nz is preferably at least 0.5. When Re is too large and

when axial shifting in attaching to a polarizing element in-plane axial fluctuation has occurred in the film face, then light leakage in watching the panel in the front direction may increase with the result that the front contrast ratio may lower. From this viewpoint, the preferred uppermost limit of Re of the first optically-anisotropic layer is investigated, and Re is preferably not larger than 130 nm. In order that Re and Rth of the first optically-anisotropic layer could satisfy the relationship shown in FIG. 5 and that Re could be at most 130 nm, or that is, in order to further reduce the light leakage and the color shift depending on the azimuth angle in the watching direction, Nz of the first optically anisotropiuc layer is at least 1.1, as shown in FIG. 6. More preferably, it is at least 1.3.

As described in the above, from the viewpoint of the latitude in azimuth dependence and axial shift tolerance of light leakage and color shift in the black state, it is desirable that Re of the first optically-anisotropic layer is smaller, or that is, Nz thereof is larger. On the other hand, the sum total of Rth of the first and second optically-anisotropic layers necessary for optical compensation in VA-mode displays is from 100 to 400 nm or so, and therefore, when Nz of the first optically-anisotropic layer is larger, for example, when Rth of the first optically-anisotropic layer is lager, then Rth necessary to the second optically-anisotropic layer shall be small. In order that the polarization state change after passing through the liquid-crystal layer and the second optically-anisotropic layer could reach the extinction point at any wavelength, it is desirable that Rth of the second optically-anisotropic layer shows regular wavelength dispersion characteristics of the retardation (the property that the value is larger at a shorter wavelength) ; but when Rth of the second optically-anisotropic layer is smaller, then the regular wavelength dispersion profile may be steep. It is difficult to product a film having the property; and from the viewpoint of the production aptitude, it is desirable that Nz of the first optically-anisotropic layer, or that is, the first optically anisotropic layer is at most 5, as shown in FIG. 6. More preferably, it is at most 4.7.

A preferred uppermost limit of Nz of the first optically-anisotropic layer is described more concretely.

As described in the above, for optical compensation of VA-mode displays, it is desirable that the total of Rth (550) of the first optically-anisotropic layer and Rth(550) of the second optically-anisotropic layer is from 100 to 400 nm; and therefore, when Rth (550) of the first optically-anisotropic layer becomes large, then the optimum Rth (550) of the second optically-anisotropic layer shall be small. This relation is schematically shown in FIG. 7. The dots A and A' in FIG. 7 are the marks indicating the optical characteristics of one example of a preferred combination of the first optically-anisotropic layer and the second optically-anisotropic layer for optically compensating a VA-mode liquid-crystal display device. If Nz of the first optically-anisotropic layer becomes large, or that is, if the optical characteristics of the first optically-anisotropic layer move from the point A to the point B, then Re of the first optically-anisotropic layer decreases and Rth thereof increases. On the other hand, with the change of the optical characteristics of the first optically-anisotropic layer, the preferred optical characteristics necessary for the second optically-anisotropic layer also move from the point A' to the point B', and the optimum Rth necessary for the second optically-anisotropic layer shall be small.

In case where predetermined Re(λ) and Rth(λ) of the first optically-anisotropic layer are given, then the Rth wavelength dispersion characteristics of the second optically-anisotropic layer necessary for reducing the viewing angle-dependent light leakage and color shift are determined by Rth (550) of the second optically-anisotropic layer, Δnd (550) of the liquid-crystal layer and the wavelength dispersion characteristics of And. For simple explanation, a case of an ideal first optically-anisotropic layer is taken into consideration and discussed herein.

Now, a case where the wavelength dispersion characteristics of the retardation of the first optically-anisotropic layer is given by λ/n (n is a positive real number) is taken into consideration and discussed. In this case, when the panel is watched in an oblique direction, then it is ideal that the polarization state after passing through the first optically-anisotropic layer does not change depending on the wavelength. The rotation amount on a Poincare sphere is determined by Δnd/λ; and for reducing the viewing angle light leakage and color shift, the polarization of light of all wavelengths must correspond at the extinction point after passing through the second optically-anisotropic layer. From the condition that "light at 450 nm and that at 550 nm correspond at the extinction point", the following formula (11) maybe established. In this, $\Delta nd^{VA}$ indicates Δnd of the liquid-crystal layer; and $Rth^{B}$ indicates Rth of the film B. (450), (550), (630) each indicate Rth at 450 nm, 550 nm, 630 nm, respectively.

When summarized, the formula (11) may be expressed by the formula (12). Similarly, under the condition that "light at 630 nm and that at 550 nm correspond at the extinction point", the following formula (13) maybe established. The formula (12) and the formula (13) give the formula (14).
In this, the following definitions are made:

$$\delta(Rth^{B}) = Rth^{B}(630) - Rth^{B}(450),$$

$$\delta(\Delta nd^{VA}) = \Delta nd^{VA}(630) - \Delta nd^{VA}(450).$$

When $\delta(Rth^B) < 0$, then Rth of the second optically-anisotropic layer shows regular wavelength dispersion characteristics of the retardation; and when $\delta(Rth^B) > 0$, then Rth of the second optically-anisotropic layer shows a profile of reversed wavelength dispersion characteristics of the retardation. Using $\delta(Rth^B)$ and $\delta(\Delta nd^{VA})$, the formula (14) may be revised into the formula (15).

In general, $Rth^B(550)$ is smaller than $\Delta nd^{VA}$ (550). In case where $\Delta nd$ of the liquid-crystal layer shows regular wavelength dispersion characteristics of the retardation, then the right side of the formula (9) shows a negative value. Since $\delta(Rth^B)$ on the left side of the formula (15) has a negative value, Rth of the second optically-anisotropic layer shows regular wavelength dispersion characteristics of the retardation. When Rth (550) of the second optically-anisotropic layer is smaller, then the absolute value of the first member on the right side of the formula (15) becomes large. Accordingly, $\delta(Rth^B)$ on the left side is negative and its absolute value is large, and the regular wavelength dispersion characteristics of the retardation is therefore larger.

$$\frac{\Delta nd^{VA}(450)}{450} - \frac{Rth^B(450)}{450} = \frac{\Delta nd^{VA}(550)}{550} - \frac{Rth^B(550)}{550} \qquad \text{formula (11)}$$

$$\Leftrightarrow Rth^B(450) = \frac{450}{550}(Rth^B(550) - \Delta nd^{VA}(550)) + \Delta nd^{VA}(450) \qquad \text{formula (12)}$$

$$Rth^B(630) = \frac{630}{550}(Rth^B(550) - \Delta nd^{VA}(550)) + \Delta nd^{VA}(630) \qquad \text{formula (13)}$$

$$Rth^B(630) - Rth^B(450) = \frac{630-450}{550}(Rth^B(550) - \Delta nd^{VA}(550)) + (\Delta nd^{VA}(630) - \Delta nd^{VA}(450)) \qquad \text{formula (14)}$$

$$\delta(Rth^B) = \frac{630-450}{550}(Rth^B(550) - \Delta nd^{VA}(550)) + \delta(\Delta nd^{VA}) \qquad \text{formula (15)}$$

From the above discussion, when Nz of the first optically-anisotropic layer is too large, then Rth necessary for the second optically-anisotropic layer become small in optical compensation of VA-mode displays, and with that, the second optically-anisotropic layer is required to have a steep profile of regular wavelength dispersion characteristics of the retardation in point of Rth thereof. In case where a polymer film having the necessary characteristics for the second optically-anisotropic layer is produced, the polymer film may be limited in some degree in point of the regular wavelength dispersion characteristics of Rth thereof from the viewpoint of the producibility aptitude. Taking it into consideration, Nz of the first optically-anisotropic layer is preferably at most 5 in order that the degree of the regular wavelength dispersion characteristics of the retardation necessary for Rth of the second optically-anisotropic layer is not too large; more preferably, it is at most 4.7.

(Method of Nz Control)

The method of controlling Nz of the first optically-anisotropic layer may be selected depending on the material of the first optically-anisotropic layer. In case where the first optically-anisotropic layer is formed of a cellulose acylate

film, examples of a method of increasing Nz include adding a compound of a general formula (A) mentioned below, increasing the amount of the compound, lowering the degree of substitution in cellulose acylate, and lowering the draw ratio in film stretching. On the other hand, examples of a method for lowering Nz include reducing the amount of the compound of the formula (A) to be mentioned below, increasing the degree of substitution in cellulose acylate, and increasing the draw ratio in film stretching.

[Second Optically-Anisotropic Layer]

The liquid-crystal display device of the invention preferably comprises a second optically-anisotropic layer having a relatively large Nz value, as combined with the above-mentioned first optically-anisotropic layer (optical film of the invention), in which, concretely, the second optically-anisotropic layer satisfies 0 nm < |Re(550)| < 10 nm and |Rth (550)|/|Re(550)| > 10. More preferably, the second optically-anisotropic layer satisfies IRth(550)/Re(550)1| > 15; and |Re(550)| is as small as possible. The second optically-anisotropic layer satisfying these optical characteristics enables the polarization state change shown in FIG. 4.

Not specifically defined, the wavelength dispersion characteristics of Rth of the second optically-anisotropic layer may be reversed wavelength dispersion characteristics of the retardation satisfying the following formula (4), or regular wavelength dispersion characteristics of the retardation satisfying the following formula (5). Especially preferably, the second optically-anisotropic layer has Rth that shows regular wavelength dispersion characteristics satisfying the following formula (5).

(4) Rth(630) - Rth(450) > 0,
(5) Rth(630) - Rth(450) ≤ 0.

[Production of First and Second optically-anisotropic layers]

The materials of the first and second optically-anisotropic layers are not specifically defined. When the layers are polymer films, a polarizing element may be stuck to it. As a single member, for example, as an optical compensatory film, it may be built in a liquid-crystal display device. The material for the polymer film is preferably a polymer having good optical properties, transparency, mechanical strength, thermal stability, water shieldability and isotropic properties; however, any material satisfying the above-mentioned condition may be employed herein. For example, it includes polycarbonate-type polymer, polyester-type polymer such as polyethylene terephthalate and polyethylene naphthalate, acrylic polymer such as polymethyl methacrylate, and styrenic polymer such as polystyrene and acrylonitrile/styrene copolymer (AS resin). In addition, also employable are polyolefin-type polymer, for example, polyolefin such as polyethylene and polypropylene, and ethylene/propylene copolymer; vinyl chloride-type polymer; amide-type polymer such as nylon and aromatic polyamide; imide-type polymer, sulfone-type polymer, polyether sulfone-type polymer, polyether-ether ketone-type polymer, polyphenylene sulfide-type polymer, vinylidene chloride-type polymer, vinyl alcohol-type polymer, vinyl butyral-type polymer, arylate-type polymer, polyoxymethylene-type polymer, epoxy-type polymer; and mixed polymer of the above polymers.

As the material to form the polymer film, preferably used is a thermoplastic norbornene-type resin. The thermoplastic norbornene-type resin includes Nippon Zeon's ZEONEX and ZEONOR, and JSR's ARTON, etc.

As the material to form the polymer film, especially preferred is a cellulose polymer heretofore used as a transparent protective film for polarizer (hereinafter this may be referred to as cellulose acylate). One typical example of cellulose acylate is triacetyl cellulose. The cellulose material for cellulose acylate includes cotton liter and wood pulp (hardwood pulp, softwood pulp), and cellulose acylate obtained from any such cellulose material is usable herein. As the case may be, those cellulose materials may be mixed for use herein. The cellulose materials are described in detail, for example, in Marusawa & Uda's "Plastic Material Lecture (17), Cellulose Resin" by Nikkan Kogyo Shinbun (1970) and Hatsumei Kyokai's Disclosure Bulletin 2001-1745 (pp. 7-8), and those celluloses described therein may be usable herein. There should not be any specific limitation to the cellulose acylate film for use in the invention.

The degree of substitution of cellulose acylate means the degree of acylation of three hydroxyl groups existing in the constitutive unit ((β)1,4-glycoside-bonding glucose) of cellulose. The degree of substitution (degree of acylation) may be computed by measuring the bonding fatty acid amount per the constitutive unit mass of cellulose. The determination may be carried out according to "ASTM D817-91".

The cellulose acylate for use in forming the first and second optically-anisotropic layers in the invention is cellulose acetate having a degree of acetyl substitution of from 2.50 to 3.00. More preferably, the degree of acetyl substitution is from 2.70 to 2.97.

Preferably, the cellulose acylate has a mass-average degree of polymerization of from 350 to 800, more preferably from 370 to 600. Also preferably, the cellulose acylate for use in the invention has a number-average molecular weight of from 70000 to 230000, more preferably from 75000 to 230000, even more preferably from 78000 to 120000.

The cellulose acylate may be produced, using an acid anhydride or an acid chloride as the acylating agent for it. One most general production method for producing the cellulose acylate on an industrial scale comprises esterifying cellulose obtained from cotton linter, wood pulp or the like with a mixed organic acid component comprising an organic acid corresponding to an acetyl group and other acyl group (acetic acid, propionic acid, butyric acid) or its acid anhydride (acetic anhydride, propionic anhydride, butyric anhydride).

The cellulose acylate film is preferably produced according to a solvent-casting method. Examples of production of cellulose acylate film according to a solvent-casting method are given in USP 2, 336, 310, 2,367,603, 2,492,078, 2,492,977, 2,492,978, 2,607,704, 2,739,069 and 2,739,070, British Patents 640731, 736892, JP-B 45-4554, 49-5614, and JPA Nos. syo 60-176834, syo 60-203430, and syo 62-115035, and their descriptions are referred to herein. The cellulose acylate film may be stretched. Regarding the method and condition for stretching treatment, for example, referred to are JPA Nos. syo 62-115035, hei 4-152125, hei 4-284511, hei 4-298310, and hei 11-48271.

[Re enhancer]

For preparing a cellulose acylate film satisfying the condition required for the first optically anisotropic layer, an Re enhancer may be added to the cellulose acylate film. It is noted that the term "Re enhancer" is used for any compounds capable of developing or enhancing birefringence in the film plane. The cellulose acylate film to be used as the first optically anisotropic layer may comprise at least one compound represented by the formula (A) as an Re enhancer.

Formula (A)

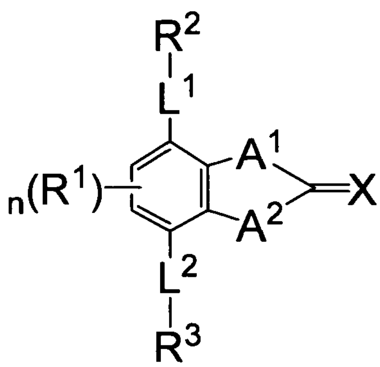

In the formula, $L^1$ and $L^2$ independently represent a single bond or a divalent linking group; $A^1$ and $A^2$ independently represent a group selected from the group consisting of -O-, -NR- where R represents a hydrogen atom or a substituent, -S- and -CO-; $R^1$, $R^2$ and $R^3$ independently represent a substituent; X represents a nonmetal atom selected from the groups 14-16 atoms, provided that X may bind with at least one hydrogen atom or substituent; and n is an integer from 0 to 2.

Among the compounds represented by the formula (A), the compounds represented by the formula (B) are preferred as a retardation enhancer.

Formula (B)

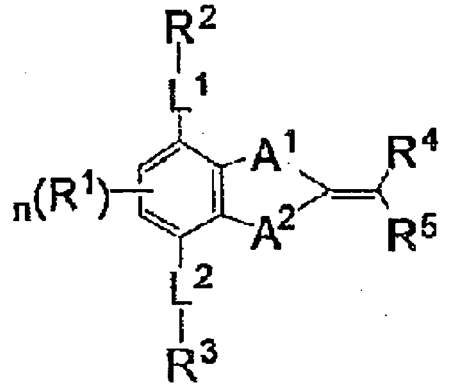

In the formula (B), $L^1$ and $L^2$ independently represent a single bond or a divalent group. $A^1$ and $A^2$ independently represent a group selected from the group consisting of -O-,-NR- where R represents a hydrogen atom or a substituent, -S- and -CO-. $R^1$, $R^2$ and $R^3$ independently represent a substituent. And n is an integer from 0 to 2.

Preferred examples of the divalent linking group represented by $L^1$ or $L^2$ in the formula (A) or (B) include those shown below.

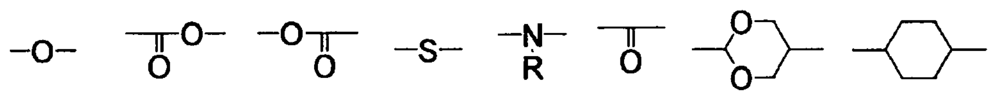

And further preferred are -O-, -COO- and -OCO-.

In the formulae (A) and (B), $R^1$ represents a substituent, if there are two or more R, they may be same or different from each other, or form a ring. Examples of the substituent include those shown below.

Halogen atoms such as fluorine, chlorine, bromine and iodine atoms; alkyls (preferably $C_{1-30}$alkyls) such as methyl, ethyl, n-propyl, iso-propyl, tert-butyl, n-octyl, and 2-ethylhexyl; cylcoalkyls (preferably $C_{3-30}$ substituted or non-substituted cycloalkyls) such as cyclohexyl, cyclopentyl and 4-n-dodecylcyclohexyl; bicycloalkyls (preferably $C_{5-30}$ substitute or non-substituted bicycloalkyls, namely monovalent residues formed from $C_{5-30}$bicycloalkanes from which a hydrogen atom is removed) such as bicyclo [1,2,2]heptane-2-yl and bicyclo [2,2,2]octane-3-yl; alkenyls (preferably $C_{2-30}$ alkenyls) such as vinyl and allyl; cycloalkenyls (preferably $C_{3-30}$ substituted or non-substituted cycloalkenyls, namely monovalent residues formed from $C_{3-30}$ cycloalkenes from which a hydrogen atom is removed) such as 2-cyclopentene-1-yl and 2-cyclohexene-1-yl; bicycloalkenyls (preferably $C_{5-30}$ substituted or non-substituted bicycloalkenyls, namely monovalent residues formed from $C_{5-30}$ bicycloalkenes from which a hydrogen atom is removed) such as bicyclo[2,2,1]hepto-2-en-1-yl and bicyclo[2,2,2]octo-2-en-4-yl; alkynyls (preferably $C_{2-30}$ substitute or non-substituted alkynyls) such as etynyl and propargyl; aryls (preferably $C_{6-30}$ substitute or non-substituted aryls) such as phenyl, p-tolyl and naphthyl; heterocyclic groups (preferably (more preferably $C_{3-30}$) substituted or non-substituted, 5-membered or 6-membered, aromatic or non-aromatic heterocyclic monovalent residues) such as 2-furyl, 2-thienyl, 2-pyrimidinyl and 2-benzothiazolyl; cyano, hydroxyl, nitro, carboxyl, alkoxys (preferably $C_{1-30}$ substituted or non-substituted alkoxys) such as methoxy, ethoxy, iso-propoxy, t-butoxy, n-octyloxy and 2-methoxyethoxy; aryloxys (preferably $C_{6-30}$ substituted or non-substituted aryloxys) such as phenoxy, 2-methylphenoxy, 4-t-butylphenoxy, 3-nitrophenoxy and 2-tetradecanoyl aminophenoxy; silyloxys (preferably $C_{3-20}$ silyloxys) such as trimethylsilyloxy and t-butyldimethylsilyloxy; hetero-cyclic-oxys (preferably $C_{2-30}$ substituted or non-substituted hetero-cyclic-oxys) such as 1-phenyltetrazole-5-oxy and 2-tetrahydropyrenyloxy; acyloxys (preferably $C_{2-30}$ substitute or non-substituted alkylcarbonyloxys and $C_{6-30}$ substituted or non-substituted arylcarbonyloxys) such as formyloxy, acetyloxy, pivaloyloxy, stearoyoxy, benzoyloxy and p-methoxyphenylcarbonyloxy; carbamoyloxys (preferably $C_{1-30}$ substituted or non-substituted carbamoyloxys) such as N,N-dimethyl carbamoyloxy, N,N-diethyl carbamoyloxy, morpholinocarbonyloxy, N,N-di-n-octylaminocarbonyloxy and N-n-octylcarbamyloxy; alkoxy carbonyloxys (preferably $C_{2-30}$ substituted or non-substituted alkoxy carbonyloxys) such as methoxy carbonyloxy, ethoxy carbonyloxy, t-butoxy carbonyloxy and n-octyloxy carbonyloxy; aryloxy carbonyloxys (preferably $C_{7-30}$ substituted or non-substituted aryloxy carbonyloxys) such as phenoxy carbonyloxy, p-methoxyphenoxy carbonyloxy and p-n-hexade-

cyloxyphenoxy carbonyloxy; aminos (preferably $C_{0-30}$ substituted or non-substituted alkylaminos and $C_{6-30}$ substituted or non-substituted arylaminos) such as amino, methylamino, dimethylamino, anilino, N-methyl-anilino and diphenylamino; acylaminos (preferably $C_{1-30}$ substituted or non-substituted alkylcarbonylaminos and $C_{6-30}$ substituted or non-substituted arylcarbonylaminos) such as formylamino, acetylamino, pivaloylamino, lauroylamino and benzoylamino; aminocarbonylaminos (preferably $C_{1-30}$ substituted or non-substituted aminocarbonylaminos) such as carbamoylamino, N, N-dimethylaminocarbonylamino, N,N-diethylamino carbonylamino and morpholino carbonylamino; alkoxycarbonylaminos (preferably $C_{2-30}$ substituted or non-substituted alkoxycarbonylaminos) such as methoxycarbonylamino, ethoxycarbonylamino, t-butoxycarbonylamino, n-octadecyloxycarbonylamino and N-methyl-methoxy carbonylamino; aryloxycarbonylaminos (preferably $C_{7-30}$ substituted or non-substituted aryloxycarbonylaminos) such as phenoxycarbonylamino, p-chloro phenoxycarbonylamino and m-n-octyloxy phenoxy carbonylamino; sulfamoylaminos (preferably $C_{0-30}$ substituted or non-substituted sulfamoylaminos) such as sulfamoylamino, N,N-dimethylamino sulfonylamino and N-n-octylamino sulfonylamino; alkyl- and aryl-sulfonylaminos (preferably $C_{1-30}$ substituted or non-substituted alkyl-sulfonylaminos and $C_{6-30}$ substituted or non-substituted aryl-sulfonylaminos) such as methyl-sulfonylamino, butyl-sulfonylamino, phenylsulfonylamino, 2,3,5-trichlorophenyl-sulfonylamino and p-methylphenyl-sulfonylamino; mercapto; alkylthios (preferably substituted or non-substituted $C_{1-30}$ alkylthios such as methylthio, ethylthio and n-hexadecylthio; arylthios (preferably $C_{6-30}$ substituted or non-substituted arylthios) such as phenylthio, p-chlorophenylthio and m-methoxyphenylthio; heterocyclic-thios (preferably $C_{2-30}$ substituted or non-substituted heterocyclic-thios such as 2-benzothiazolyl thio and 1-phenyltetrazol-5-yl-thio; sulfamoyls (preferably $C_{0-30}$ substituted or non-substituted sulfamoyls) such as N-ethylsulfamoyl, N-(3-dodecyloxypropyl)sulfamoyl, N,N-dimethylsulfamoyl, N-acetylsulfamoyl, N-benzoylsulfamoyl, N-(N'-phenylcarbamoyl)sulfamoyl; sulfo; alkyl- and aryl-sulfinyls (preferably $C_{1-30}$ substituted or non-substituted alkyl- or $C_{6-30}$ substituted or non-substituted aryl-sulfinyls) such as methylsulfinyl, ethylsulfinyl, phenylsulfinyl and p-methylphenylsulfinyl; alkyl- and aryl-sulfonyls (preferably $C_{1-30}$ substituted or non-substituted alkyl-sulfonyls and $C_{6-30}$ substituted or non-substituted arylsulfonyls) such as methylsulfonyl, ethylsulfonyl, phenylsulfonyl and p-methylphenylsulfonyl; acyls (preferably $C_{2-30}$ substituted non-substituted alkylcarbonyls, and $C_{7-30}$ substituted or non-substituted arylcarbonyls) such as formyl, acetyl and pivaloyl benzyl; aryloxycarbonyls (preferably $C_{7-30}$ substituted or non-substituted aryloxycarbonyls) such as phenoxycarbonyl, o-chlorophenoxycarbonyl, m-nitrophenoxycarbonyl and p-t-butylphenoxycarbonyl; alkoxycarbonyls (preferably $C_{2-30}$ substituted or non-substituted alkoxycarbonyls) methoxycarbonyl, ethoxycarbonyl, t-butoxycarbonyl and n-octadecyloxycarbonyl; carbamoyls (preferably $C_{1-30}$ substituted or non-substituted carbamoyls) such as carbamoyl, N-methylcarbamoyl, N,N-dimethylcarbamoyl, N,N-di-n-octylcarbamoyl and N-(methylsulfonyl)carbamoyl; aryl- and heterocyclic-azos (preferably $C_{6-30}$ substituted or non-substituted arylazos and $C_{3-30}$ substituted or non-substituted heterocyclicazos) such as phenylazo and p-chlorophenylazo, 5-ethylthio-1,3,4 -thiadiazol-2-yl-azo, imides such as N-succinimide and N-phthalimide; phosphinos (preferably $C_{2-30}$ substituted or non-substituted phosphinos) such as dimethyl phosphino, diphenyl phosphino and methylphenoxy phosphino; phosphinyls (preferably $C_{2-30}$ substituted or non-substituted phosphinyls) such as phosphinyl, dioctyloxy phosphinyl and diethoxy phosphinyl; phosphinyloxys (preferably $C_{2-30}$ substituted or non-substituted phosphinyloxys) such as diphenoxyphosphinyloxy and dioctyloxyphosphinyloxy; phosphinylaminos (preferably $C_{2-30}$ substituted or non-substituted phosphinylaminos) such as dimethoxy phosphinylamino and dimethylamino phosphinylamino; and silyls (preferably $C_{3-30}$ substituted or non-substituted silyls) such as trimethylsilyl, t-butylmethylsilyl and phenyldimethylsilyl.

The substituents, which have at least one hydrogen atom, may be substituted by at least one substituent selected from these. Examples such substituent include alkylcarbonylaminosulfo, arylcarbonylaminosulfo, alkylsulfonylaminocarbonyl and arylsulfonylaminocarbonyl. More specifically, methylsulfonylaminocarbonyl, p-methylphenylsulfonylaminocarbonyl, acetylaminosulfonyl and benzoylaminosulfonyl are exemplified.

Preferably, $R^1$ represents a hydrogen atom, an alkyl group, an alkenyl group, an aryl group, a heterocyclic group, hydroxyl, carboxyl, an alkoxy group, an acyloxy group, cyano or an amino group; and more preferably, a halogen atom, an alkyl group, cyano or an alkoxy group.

$R^2$ and $R^3$ independently represent a substituent. Examples of the substituent include those exemplified above as examples of $R^1$. Preferably, $R^2$ and $R^3$ independently represent a substituted or non-substituted phenyl or a substituted or non-substituted cyclohexyl; more preferably, a substituted phenyl or a substituted cyclohexyl; and much more preferably, a phenyl having a substituent at a 4-position or a cyclohexyl having a substituent at a 4-position.

$R^4$ and $R^5$ independently represent a substituent. Examples of the substituent include those exemplified above as examples of $R^1$. Preferably, $R^4$ and $R^5$ independently represent an electron-attractant group having the Hammett value, $\sigma_p$, more than 0; more preferably an electron-attractant group having the Hammett value, $\sigma_p$, from 0 to 1.5. Examples of such an electron-attractant group include trifluoromethyl, cyano, carbonyl and nitro. $R^4$ and $R^5$ may bind to each other to form a ring.

It is to be noted that, regarding Hammett constant of the substituent, $\sigma_p$ and $\sigma_m$, there are detailed commentaries on the Hammett constant of the substituent, $\sigma_p$ and $\sigma_m$ in "Hammett Rule-Structure and Reactivity-(Hammeto soku -Kozo to Hanohsei)" published by Maruzen and written by Naoki Inamoto; "New Experimental Chemistry 14 Synthesis and Reaction of Organic Compound V (Shin Jikken Kagaku Koza 14 Yuuki Kagoubutsu no Gousei to Hannou)" on p.

2605, edited by Chemical Society of Japan and published by Maruzen; "Theory Organic Chemistry Review (Riron Yuuki Kagaku Gaisetsu) "on p. 217, published by TOKYO KAGAKU DOZIN CO. LTD., and written by Tadao Nakatani; and Chemical Reviews, Vol. 91, No.2, pp.165-195(1991).

In the formula, $A^1$ and $A^2$ independently represent a group selected from the group consisting of -O-, -NR- where R represents a hydrogen atom or a substituent, -S- and -CO-; and preferably, -O-, -NR- where R represents a substituent selected from those exemplified above as examples of $R^1$, or -S-.

In the formula, X represents a nonmetal atom selected from the groups 14-16 atoms, provided that X may bind with at least one hydrogen atom or substituent. Preferably, X represents =O, =S, =NR or =C(R)R where R represents a substituent selected from those exemplified as examples of $R^1$.

In the formula, n is an integer from 0 to 2, and preferably 0 or 1.

Examples of the compound represented by the formula (A) or (B) include, but examples of the Re enhancer are not limited to, those shown below. Regarding the compounds shown below, each compound to which is appended (X) is referred to as "Example Compound (X)" unless it is specified.

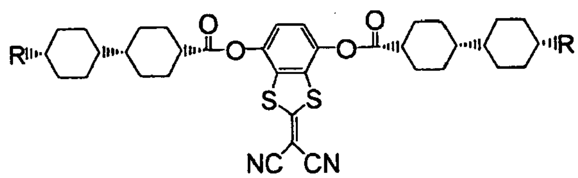

R= $-C_5H_{11}$ (1)
$-C_4H_9$ (2)
$-C_3H_7$ (3)
$-C_2H_5$ (4)

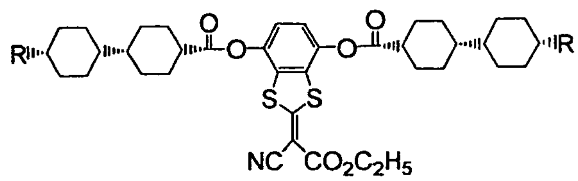

R= $-C_5H_{11}$ (5)
$-C_4H_9$ (6)
$-C_3H_7$ (7)
$-C_2H_5$ (8)

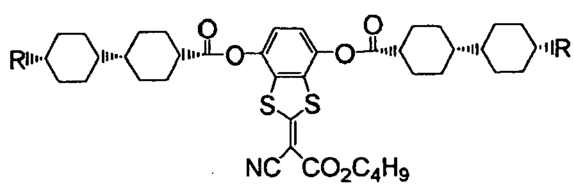

R= $-C_5H_{11}$ (9)
$-C_4H_9$ (10)
$-C_3H_7$ (11)
$-C_2H_5$ (12)

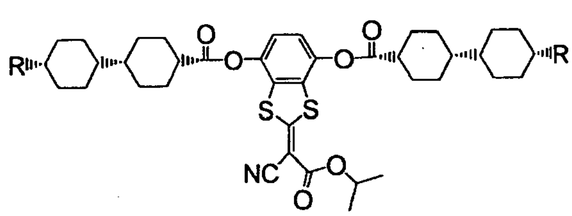

R= $-C_5H_{11}$ (13)
$-C_4H_9$ (14)
$-C_3H_7$ (15)
$-C_2H_5$ (16)

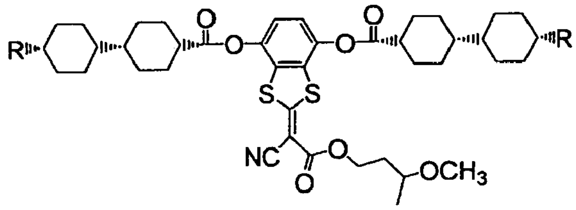

R= $-C_5H_{11}$ (17)
$-C_4H_9$ (18)
$-C_3H_7$ (19)
$-C_2H_5$ (20)

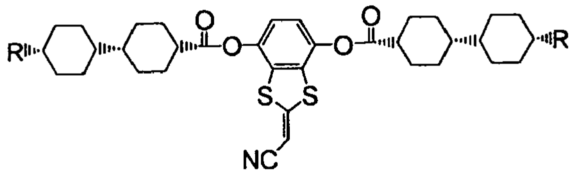

R= $-C_5H_{11}$ (21)
$-C_4H_9$ (22)
$-C_3H_7$ (23)
$-C_2H_5$ (24)

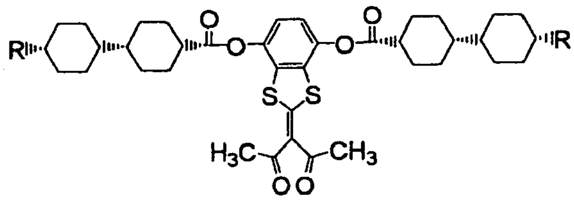

R= $-C_5H_{11}$ (25)
$-C_4H_9$ (26)
$-C_3H_7$ (27)
$-C_2H_5$ (28)

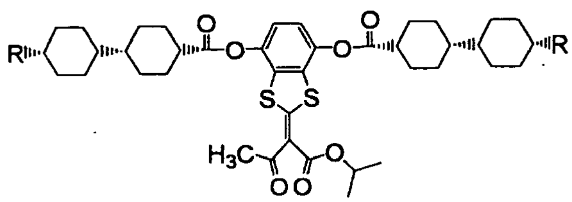

R= $-C_5H_{11}$ (29)
$-C_4H_9$ (30)
$-C_3H_7$ (31)
$-C_2H_5$ (32)

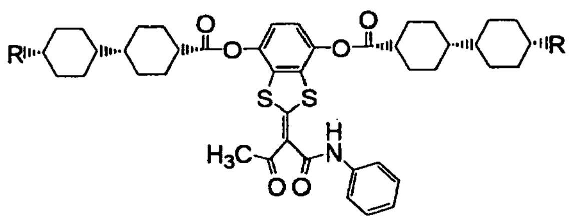

R= $-C_5H_{11}$ (33)
$-C_4H_9$ (34)
$-C_3H_7$ (35)
$-C_2H_5$ (36)

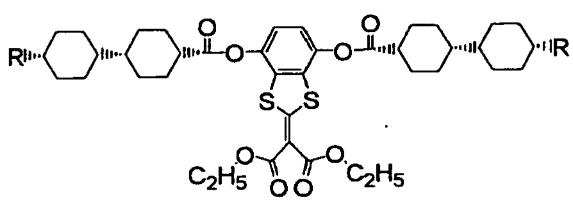

R= $-C_5H_{11}$ (37)
$-C_4H_9$ (38)
$-C_3H_7$ (39)
$-C_2H_5$ (40)

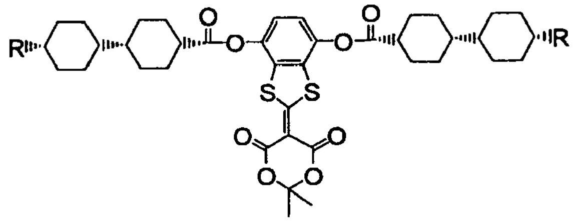

R= $-C_5H_{11}$ (41)
$-C_4H_9$ (42)
$-C_3H_7$ (43)
$-C_2H_5$ (44)

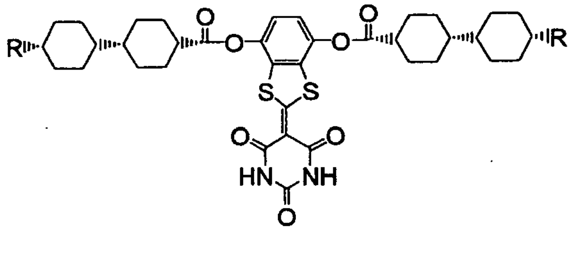

R= $-C_5H_{11}$ (45)
$-C_4H_9$ (46)
$-C_3H_7$ (47)
$-C_2H_5$ (48)

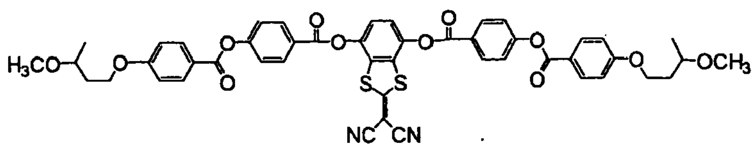

(49)

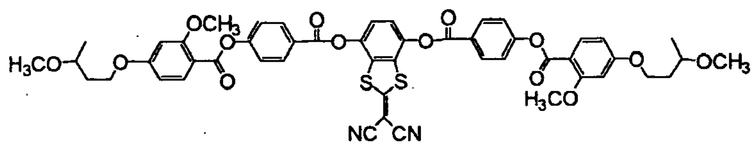

(50)

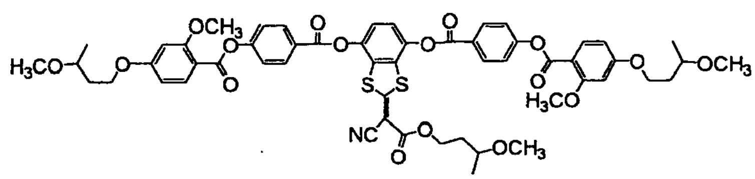

(51)

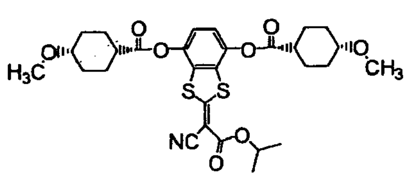

(52)

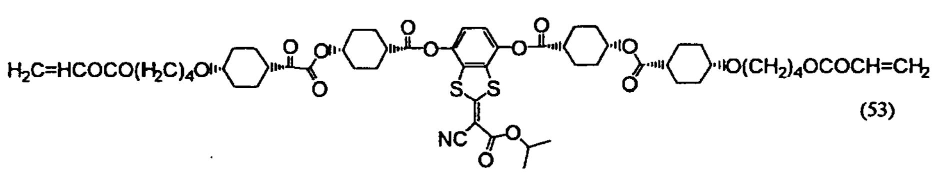

(53)

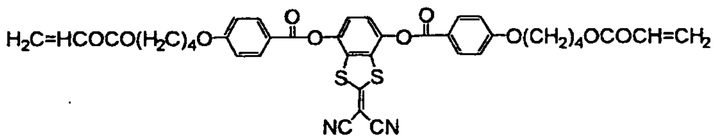
(54)

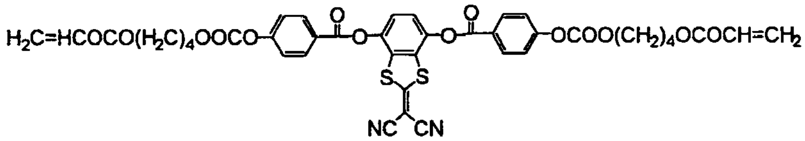
(55)

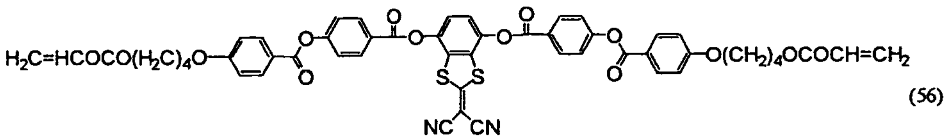
(56)

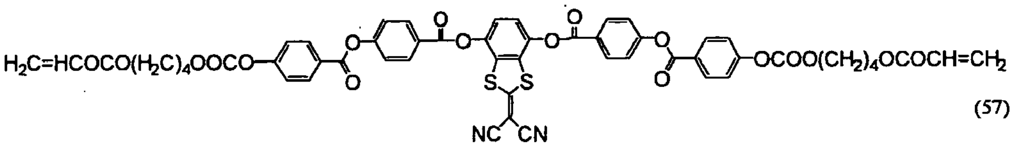
(57)

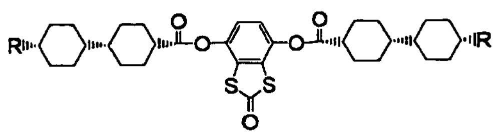

R= $-C_5H_{11}$ (58)
$-C_4H_9$ (59)
$-C_3H_7$ (60)
$-C_2H_5$ (61)

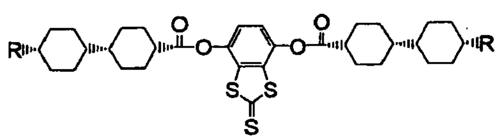

R= $-C_5H_{11}$ (62)
$-C_4H_9$ (63)
$-C_3H_7$ (64)
$-C_2H_5$ (65)

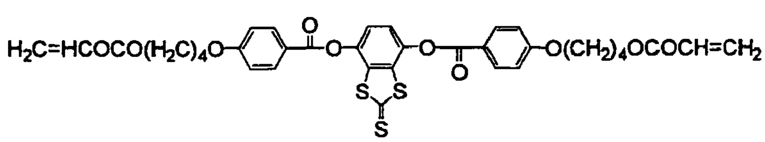
(66)

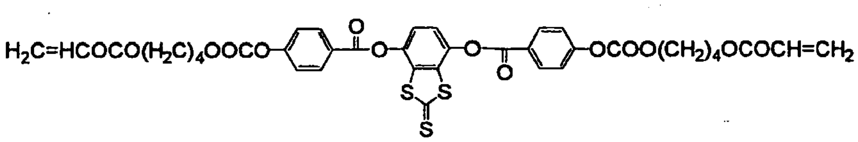

(67)

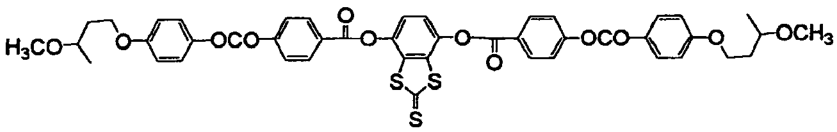

(68)

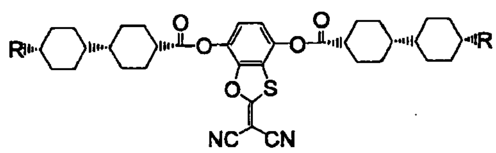

R= $-C_5H_{11}$ (69)
$-C_4H_9$ (70)
$-C_3H_7$ (71)
$-C_2H_5$ (72)

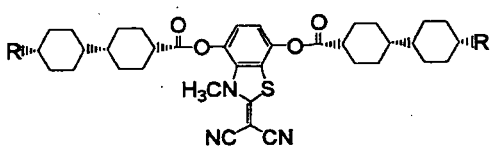

R= $-C_5H_{11}$ (73)
$-C_4H_9$ (74)
$-C_3H_7$ (75)
$-C_2H_5$ (76)

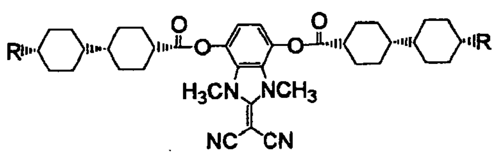

R= $-C_5H_{11}$ (77)
$-C_4H_9$ (78)
$-C_3H_7$ (79)
$-C_2H_5$ (80)

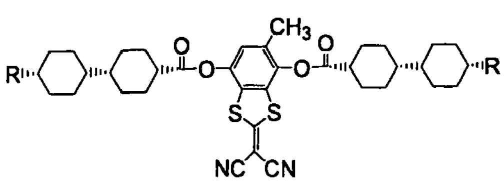

R= $-C_5H_{11}$ (81)
$-C_4H_9$ (82)
$-C_3H_7$ (83)
$-C_2H_5$ (84)

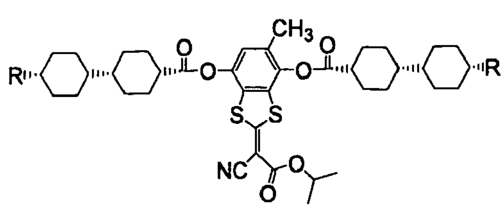

R= $-C_5H_{11}$ (85)
$-C_4H_9$ (86)
$-C_3H_7$ (87)
$-C_2H_5$ (88)

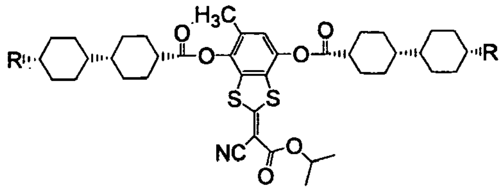

R= $-C_5H_{11}$ (89)
$-C_4H_9$ (90)
$-C_3H_7$ (91)
$-C_2H_5$ (92)

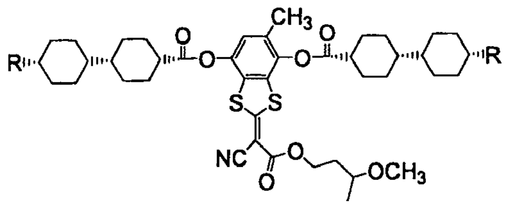

R= $-C_5H_{11}$ (93)
$-C_4H_9$ (94)
$-C_3H_7$ (95)
$-C_2H_5$ (96)

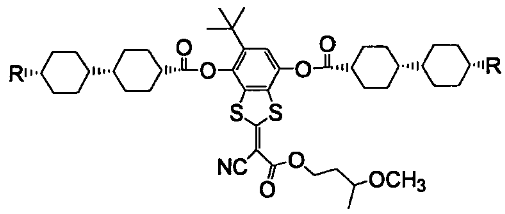

R= $-C_5H_{11}$ (97)
$-C_4H_9$ (98)
$-C_3H_7$ (99)
$-C_2H_5$ (100)

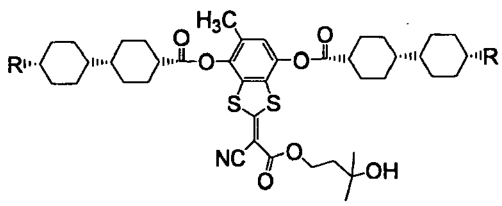

R= $-C_5H_{11}$ (101)
$-C_4H_9$ (102)
$-C_3H_7$ (103)
$-C_2H_5$ (104)

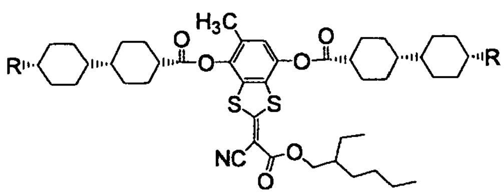

R= $-C_5H_{11}$ (105)
$-C_4H_9$ (106)
$-C_3H_7$ (107)
$-C_2H_5$ (108)

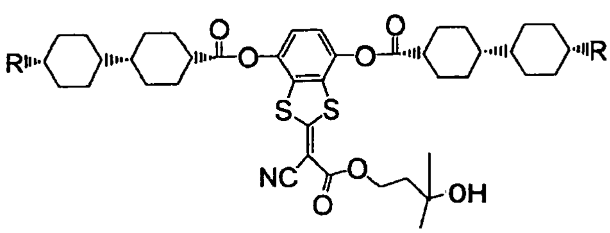

R= $-C_5H_{11}$ **(109)**
$-C_4H_9$ **(110)**
$-C_3H_7$ **(111)**
$-C_2H_5$ **(112)**

The compound represented by the formula (A) or (B) may be synthesized referring to known methods. For example, Example Compound (1) may be synthesized according to the following scheme.

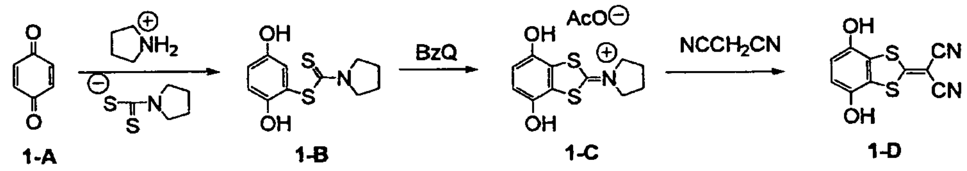


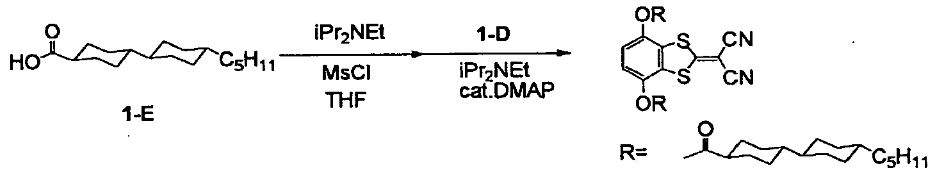


Example Compound (1)

In the above scheme, the steps for producing Compound (1-d) from Compound (1-A) may be carried out referring to the description in "Journal of Chemical Crystallography" (1997); 27(9); p.515-526.

As shown in the above scheme, Example Compound (1) may be produced as follows. A tetrahydrofuran solution of Compound (1-E) is added with methanesulfonic acid chloride, added dropewise with N,N-di-iso-propylethylamine and then stirred. After that, the reaction solution is added with N,N-di-iso-propylethylamine, added dropewise with a tetrahydrofuran of Compound (1-D), and then added dropewise with a tetrahydrofuran solution of N,N-dimethylamino pyridine (DMAP).

The rod-like aromatic compounds described in Japanese Laid-open Patent publication (occasionally referred to as "JPA") No. 2004-50516, on pages 11-14, may be employed as the Re enhancer.

One species or two or more species of compounds may be used as the Re enhancer. Employing two or more species as the Re enhancer is preferable since it is possible to widening the adjustable retardation range and to facilitate adjustment of retardation within the preferred range.

The amount of the Re enhancer is preferably from 0.1 to 20 mass % and more preferably from 0.5 to 10 mass % with respect to 100 parts mass of cellulose acylate. When the cellulose acylate film is produced according to a solvent cast method, the Re enhancer may be added to the dope. The addition of the Re enhancer to the dope may be conducted any stage, and for example, a solution of the Re enhance may be prepared by dissolving it in an organic solvent such as alcohol, methylene chloride or dioxolane and then added to the dope; or the Re enhancer may be added to the dope directly.

And the optical film to be used as the first optically anisotropic layer may comprise two or more additives. Preferably, with the liquid crystal compound represented by the formula (A), the rod-like liquid crystal compound represented by the formula (a) is used together as the Re enhancer. The ratio of the compound represented by the formula (A) to the total mass of the compounds represented by the formulae (A) and (a) is preferably from 10 to 90 % and more preferably from 20 to 80 %.

$$\text{Formula (a): } Ar^1\text{-}L^{12}\text{-}X\text{-}L^{13}\text{-}Ar^2$$

In the formula (a), $Ar^1$ and $Ar^2$ independently represent an aromatic group; $L^{12}$ and $L^{13}$ independently represent -O-CO- or -CO-O-;X represents 1,4-cyclohexylen, vinylene or ethynylene.

In the description, the term "aromatic group" is used for any substituted or non-substituted aryl (aromatic hydrocarbon) group and any substituted or non-substituted aromatic heterocyclic group.

Substituted or non-substituted aryl groups are preferred to substituted or non-substituted aromatic heterocyclic group. A hetero ring in the aromatic heterocyclic group is generally unsaturated. Preferably, the aromatic hetero ring is selected from 5-, 6- and 7-membered rings; and more preferably 5- and 6-membered rings. An aromatic hetero ring generally has the maximum number of double bonds. Preferred examples of the hetero atom embedded in the hetero ring include nitrogen, oxygen and sulfur atoms; and more preferred examples include nitrogen and sulfur atoms.

Examples of the aromatic ring in the aromatic group include benzene, furan, thiophene, pyrrole, oxazole, thiazole, imidazole, triazole, pyridine, pyrimidine and pyrazine rings; and among these, a benzene ring is especially preferred.

Examples of the substituent, that the substituted aryl group and the substituted aromatic heterocyclic group have, include halogen atoms (e.g., F, Cl, Br, and I), hydroxyl, carboxyl, cyano, amino, alkylaminos (e.g., methylamino,

ethylamino, butylamino and dimethylamino), nitro, sulfo, carbamoyl, alkylcarbamoyls (e.g., N-methylcarbamoyl, N-ethylcarbamoyl, and N,N-dimethylcarbamoyl), sulfamoyl, alkylsulfamoyls (e.g., N-methylsulfamoyl, N-ethylsulfamoyl, and N, N-dimethylsulfamyl), ureido, alkylureidos (e.g., N-methylureido, N,N-dimethylureido, andN,N,N'-trimethyl ureido), alkyls (e.g., methyl, ethyl, propyl, butyl, pentyl, heptyl, octyl, isopropyl, s-butyl, t-amyl, cyclohexy, and cyclopentyl), alkenyls (e.g., vinyl, allyl, and hexenyl), alkynyls (e.g., ethynyl and butynyl), acyls (e.g., formyl, acetyl, butyryl, hexanoyl and lauryl), acyloxys (e.g., acetoxy, butyryloxy, hexanoyloxy, and lauryloxy), alkoxys (e.g., methoxy, ethoxy, propoxy, butoxy, pentyloxy, heptyloxy, and octyloxy), aryloxys (e.g., phenoxy), alkoxycarbonyls (e.g., methoxycarbonyl, ethoxycarbonyl, propoxycarbonyl, butoxycarbonyl, pentyloxycarbonyl, and heptyloxycarbonyl), aryloxycarbonyls (e.g., phenoxycarbonyl), alkoxycarbonylaminos (e.g., butoxycarbonylamino, and hexylcarbonylamino), alkylthios (e.g., methylthio, ethylthio, propylthio, butylthio, pentylthio, heptylthio and octylthio), arylthios (e.g., phenylthio), alkylsulfonyl (e.g., methylsulfonyl, ethylsulfonyl, propylsulfonyl, butylsulfonyl, pentylsulfonyl, heptylsulfonyl, and octylsulfonyl), amidos (e.g., acetamido, butylamido, hexylamido, and laurylamido), and non-aromatic hetero ring residues (e.g., morpholino, and pyridyl).

Among these, halogen atoms, cyano, carboxyl, hydroxyl, amino, alkyl-substituted aminos, acyls, acyloxys, amidos, alkoxycarbonyls, alkoxys, alkylthios and alkyls are preferred.

The alkyl moiety in the alkyl amino, alkoxycarbonyl, alkoxy or alkylthio may have at least one substituent, Examples of the substituent in the alkyl moieties or in the alkyls include halogen atoms, hydroxyl, carboxyl, cyano, amino, alkylaminos, nitro, sulfo, carbamoyl, alkylcarbamoyls, sulfamoyl, alkylsulfamoyls, ureido, alkylureidos, alkenyls, alkynyls, acyls, acyloxys, acylaminos, alkoxys, aryloxys, alkoxycarbonyls, aryloxycarbonyls, alkoxycarbonylaminos, alkylthios, arylthios, alkylsulfonyls, amidos and non-aromatic hetero ring residues. Among these, halogen atoms, aminos, alkylaminos, alkoxycarbonyls and alkoxys are preferred.

In the formula (a), $L^{12}$ and $L^{13}$ independently represent -O-CO- or- CO-O-.

In the formula (a), X represents 1,4-cyclohexylen, vinylene or ethynylene.

Examples of the compound represented by the formula (a) include, but are not limited to, those shown below.

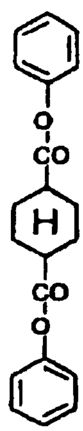
(1)
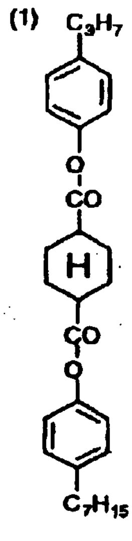
(2)
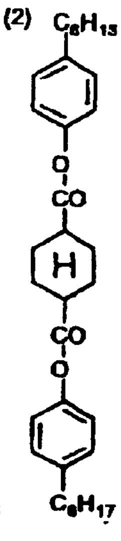
(3)
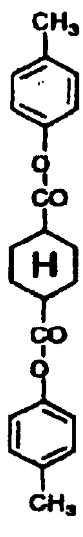
(4)
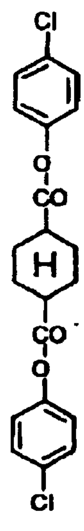
(5)
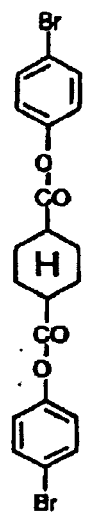
(6)
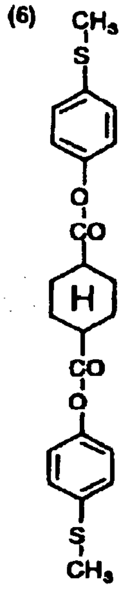
(7)

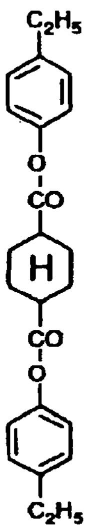
(8)

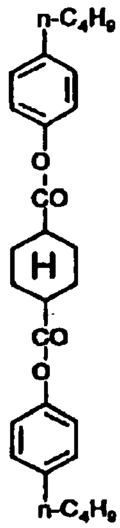
(9)

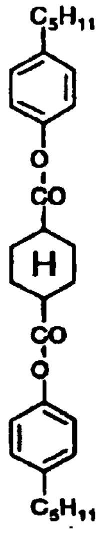
(10)

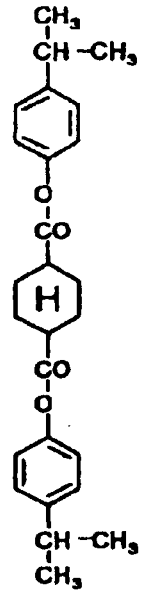
(11)

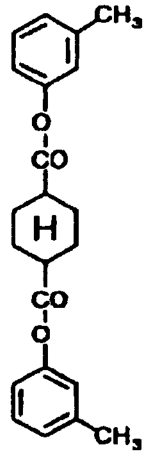
(12)

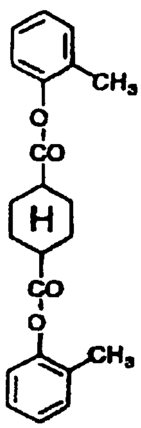
(13)

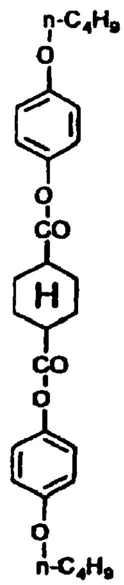
(14)

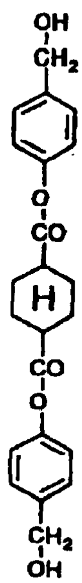
(15)

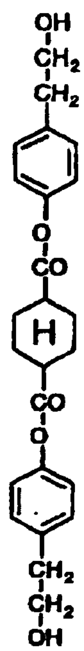
(16)

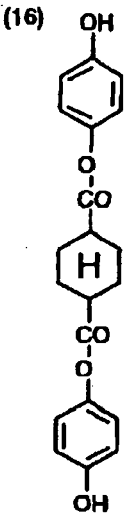
(17)

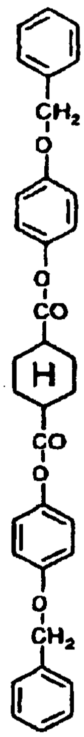
(18)

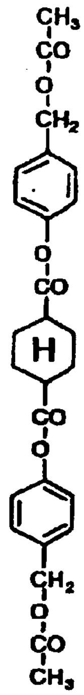
(19)

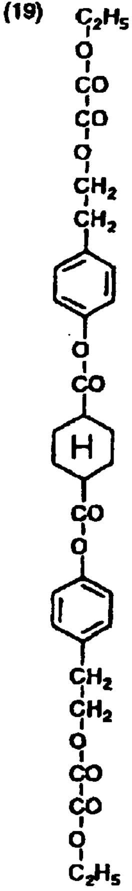
(20)

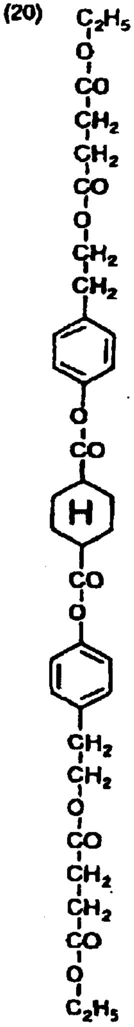
(21)

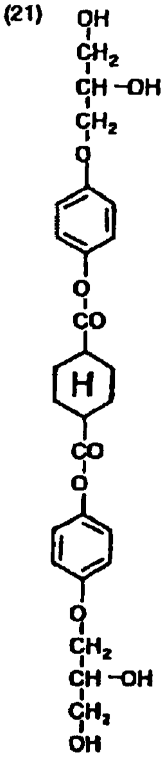
(22)

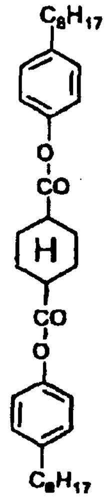
(23)

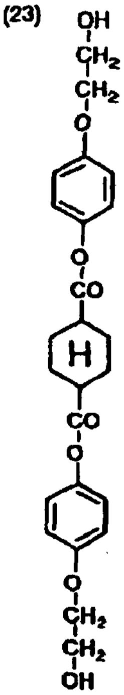
(24)

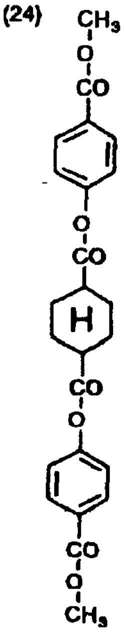
(25)

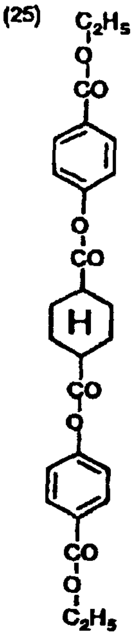
(26)

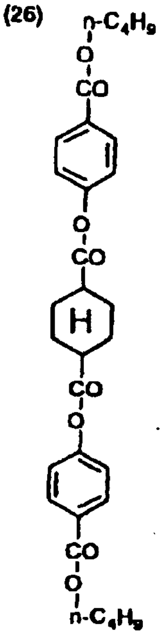
(27)

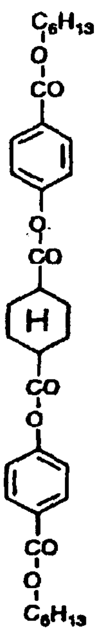
(28)

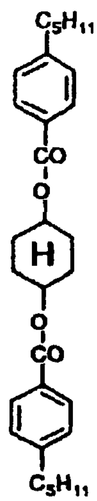
(29)

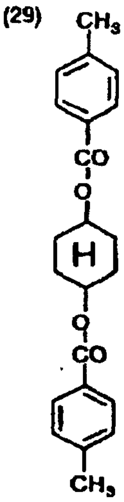
(30)

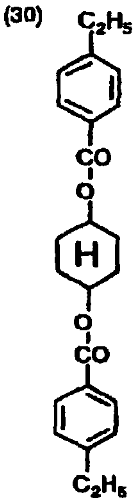
(31)

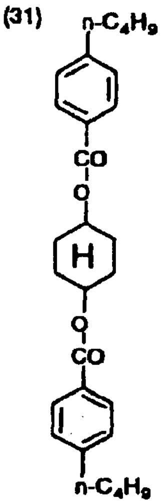
(32)

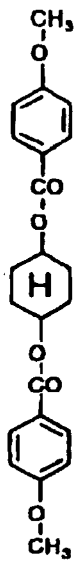 (33)

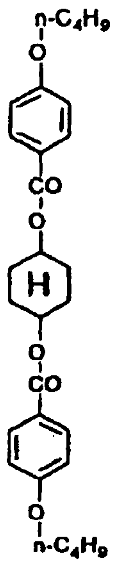 (34)

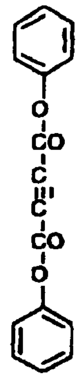 (35)

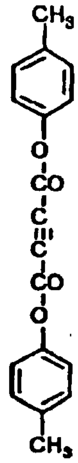 (36)

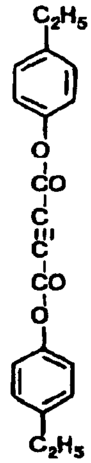 (37)

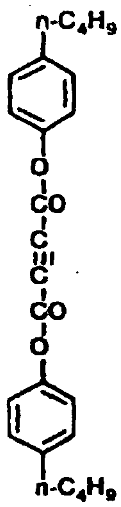 (38)

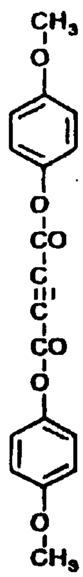 (39)

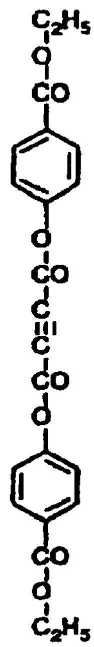 (40)

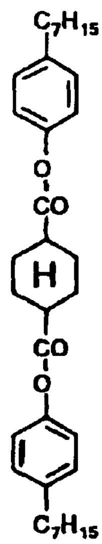 (41)

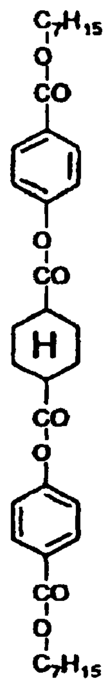 (42)

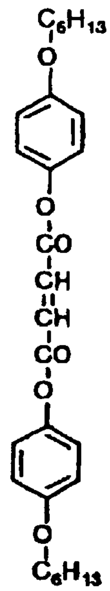
(43)
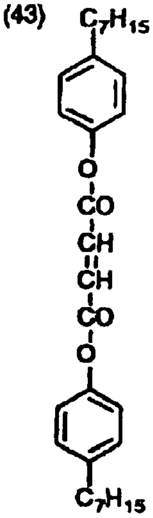
(44)
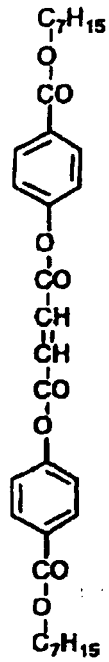
(45)

The example compounds (1) to (34), (41) and (42) have two asymmetric carbon atoms in the 1- and 4- positions in the cyclohexane ring, however it is noted that their molecular structures are meso-type structures and symmetric. Therefore, there is no enantiomer thereof, and are only geometric isomers, trans and cis types thereof. Of the example compound (1), the trans (1-trans) and cis (1-cis) types are shown below.

(1-trans)
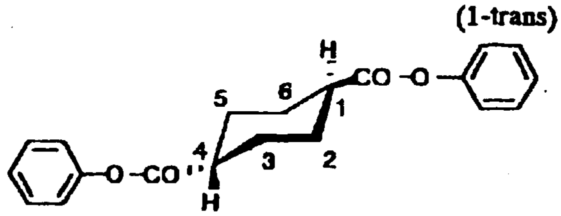

(1-cis)
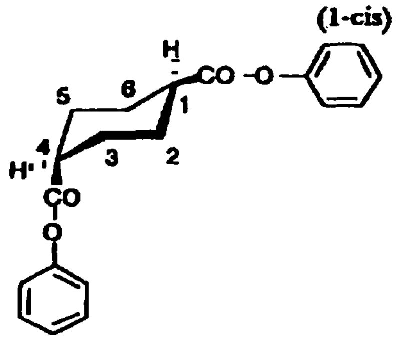

As described above, preferably, the molecular structures of the rod-like compounds are linear. Therefore, trans types are preferred to cis types.

Addition to the geometric isomers, there are enantiomers of the example compound (2) and (3), and the total number of the isomers is four. Among the geometric isomers, trans types are preferred to the cis types. And among the enantiomers, they are nearly equal, and D-, L- and racemic bodies are used equally.

There are trans and cis types as a center of the vinylene bond of the example compounds (43) to (45). On the same reason as above, the trans types are preferred to the cis types.

Any combinations of two or more species of which maximum absorption peak wavelengths, λmax, are shorter

than 250 nm found in their UV absorption spectra may be employed.

The rod-like compounds may be produced referring to the methods described various literatures such as Mol. Cryst. Liq. Cryst., vol. 53, p.229 (1979); Mol. Cryst. Liq. Cryst., vol. 89, p. 93(1982); Mol. Cryst. Liq. Cryst., vol. 145, p. 111 (1987); Mol. Cryst. Liq. Cryst., vol. 170, p. 43 (1989); J. Am. Chem. Soc., vol. 113, p. 1349 (1991); J. Am. Chem. Soc. , vol. 118, p. 5346 (1996); J. Am. Chem. Soc. , vol. 92, p. 1582 (1970); J. Org. Chem., vol. 40, p. 420 (1975); and Tetrahedron, vol. 48, number 16, p. 3437 (1992).

Aligning the Re enhancer to a higher degree of alignment than that of the polymer imparts a high Re to the polymer film. For this, the Re enhancer preferably has liquid crystallinity. The above-mentioned liquid-crystalline compound for use as the Re enhancer may be added to a polymer composition (preferably cellulose acylate composition) along with other optional additives thereto. More concretely, the Re enhancer is dissolved in an organic solvent such as alcohol, methylene chloride or dioxolane, and then added to a polymer solution (preferably cellulose acylate solution) . The ratio by mass of the liquid-crystalline compound relative to all additives to be added is preferably from 40 to 100 % by mass, more preferably from 50 to 100 % by mass. Also preferably, the amount of the liquid-crystalline compound to be added is from 0.1 o 30 % by mass, more preferably from 0.5 to 20 % by mass, even more preferably from 1 to 10 % by mass.

[Stretching Treatment for Film]

The cellulose acylate film to be used as the first optically-anisotropic layer is preferably produced through stretching. The stretching direction may be any of a transverse direction or a machine direction, any of which is preferred.

A method of stretching in a transverse direction is described, for example, in JPA Nos. syo 62-115035, hei 4-152125, hei 4-284211, hei 4-298310, and hei 11-48271.

Film stretching is attained at room temperature or under heat. The heating temperature is preferably not higher than (the glass transition temperature of the film + 20°C). The film may be stretched while dried, and in case where a solvent has remained in the film, dry stretching is especially effective. A case of stretching a long film in the machine direction is taken into consideration. In the case, the film may be stretched in the machine direction (MD), or that is, in the film-traveling direction; and it may be stretched in the transverse direction (TD), or that is, in the direction perpendicular to the machine direction. In MD stretching, for example, the speed of the film-conveying rollers may be controlled in such a manner that the film-winding speed is higher than the film-peeling speed, then the film may be MD-stretched. In TD stretching, the film is conveyed while held by a tenter in such a manner that the tenter width is gradually broadened, and the film may be TD-stretched. After dried, the film may be stretched using a stretcher (preferably monoaxial stretching with a long stretcher).

Also preferably, the film with solvent remaining therein may be stretched as such. In this case, the solvent content of the film is preferably from 0 % by mass to 100 % by mass relative to the overall solid content of the film, more preferably from 5 % by mass to 80 % by mass. In stretching the film with solvent remaining therein, the effective glass transition temperature of the film may lower and the film may be stretched at a lower stretching temperature to a desired draw ratio without broken.

The draw ratio in stretching the film (elongation relative to the unstretched film) is preferably from 1 % to 200 %, more preferably from 5 % to 150 %. Especially preferably, the film is stretched in the transverse direction by from 1 % to 200 %, more preferably by from 5 % to 150 %. Specifically, for the first optically anisotropic layer, a polymer film produced according to a solution film formation method or the like (preferably cellulose acylate film) is preferably TD-stretched by from 1.01 times to 2 times, more preferably by from 1.05 to 1.5 times. TD-stretching the film to the draw ratio falling within the above-mentioned range stably produces the polymer film that satisfies predetermined characteristics. The stretching speed is preferably from 1 %/min to 100 %/min, more preferably from 5 %/min to 80 %/min, even more preferably from 10 %/min to 60 %/min.

Preferably, the stretched cellulose acylate film is produced according to a process comprising a step of holding the film, after stretched to the maximum draw ratio, at a draw ratio lower than the maximum draw ratio for a predetermined period of time (the step is hereinafter referred to as a relaxation step). The draw ratio in the relaxation step is preferably from 50 % to 99 % of the maximum draw ration, more preferably from 70 % to 97 %, even more preferably from 90 % to 95 %. Also preferably, the time for the relaxation step is from 1 second to 120 seconds, more preferably from 5 seconds to 100 seconds.

The draw ratio and the time in the relaxation step, as defined to fall within the range mentioned above, increases the degree of alignment of the retardation enhancer, therefore producing a cellulose acylate film having a high retardation, in which the retardation fluctuation in the plane direction and the thickness direction of the film is reduced.

[Physical Properties of Film]

Now hereinunder described are the physical properties of the cellulose acylate film favorably used for the first

optically-anisotropic layer.

(Haze)

Preferably, the haze of the cellulose acylate film is from 0.01 % to 0.8 %, more preferably from 0.05 % to 0.6 %. When the haze is more than 0.8 %, then the contrast of the liquid-crystal display device tends to lower. The film having a lower haze has more excellent optical potency; but in consideration of the material selection and the production control, the above range is preferred.

The Re enhancer of the above general formula (A) is especially favorable since it hardly increases the haze of the film even though the film is stretched.

For measuring the haze thereof, a sample of the film having a size of 40 mm × 80 mm is tested at 25°C and 60 % RH, using a haze meter (HGM-2DP, by Suga Test Instruments) according to JIS K-7136.

(Transmittance)

The film transmittance may be measured by testing a film sample of 13 mm × 40 mm at 25°C and 60 % RH, using a spectrophotometer (U-3210, by Hitachi). The transmittance at a wavelength of 380 nm of the cellulose acylate film favorably used for the first optically-anisotropic layer in the invention is preferably at most 10 %, more preferably at most 5 %, even more preferably at most 1 %. The transmittance of the film at a wavelength of 430 nm is preferably at least 80 %, more preferably at least 85 %, even more preferably at least 90 %. Controlling the transmittance to fall within the range reduces the viewing angle-dependent color shift in the liquid-crystal displays with the optically-anisotropic layer built therein.

(Modulus of Elasticity, Elongation at Break)

The modulus of elasticity of the cellulose acylate film for use as the first optically-anisotropic layer is preferably from 2000 MPa to 6000 MPa, more preferably from 3000 MPa to 5500 MPa. The elasticity ratio in the transverse direction (TD) perpendicular to MD to the machine direction (MD), (TD/MD) is preferably from 0.1 to 10, more preferably from 1 to 2.

The elongation at break of the film is preferably from 3 % to 50 %, more preferably from 5 % to 40 %. The ratio of the elongation at break in TD to MD, (TD/MD) is preferably from 0.1 to 50, more preferably from 0.5 to 20.

The modulus of elasticity and the elongation at break may be measured as follows: A film sample of 10 mm × 150 mm is conditioned at 25°C and 60 % RH for 2 hours or more, and then, using a tensile tester (Strograph R2, by Toyo Seiki), this is pulled at a pulling rate of 10 mm/min. The chuck distance is 50 mm, and the temperature is 25°C.

Having a modulus of elasticity and an elongation at break falling within the range as above, the film has excellent workability into polarizers, and, when built in a liquid-crystal display device and when continuously turned on for a long period of time, it hardly causes uneven display.

(Friction Coefficient)

The static friction coefficient of the cellulose acylate film for use as the first optically-anisotropic layer is preferably from 0.1 to 3.0, more preferably from 0.2 to 2.0. The kinematic friction coefficient of the film is preferably from 0.05 to 2.5, more preferably from 0.1 to 1.5. Controlling the static friction coefficient and the kinematic friction coefficient to fall within the range as above stably produces a long film roll.

The friction coefficient of the film may be measured as follows: According to JIS-K-7125 (1987), film pieces are cut out so that their surface and back could be a contact face, then a weight of 200 g is put on it, and the weight is horizontally pulled at a moving speed of 100 mm/min under the condition of a contact area of 80 mm × 200 mm. The maximum load before the weight moved (Fs) and the mean load while the weight was moving (Fd) are measured, and the static friction coefficient and the kinematic friction coefficient +(μm) are obtained according to the following formulae:

Static Friction Coefficient = Fs (gf)/weight of the weight (gf),

Kinematic Friction Coefficient = Fd (gf)/weight of the weight (gf).

(Curl)

Preferably, the moisture-dependent curl fluctuation in the cellulose acylate film for use as the first optically-anisotropic layer is small. The curl fluctuation per relative humidity 1 % in the cellulose acylate film is preferably at most 0.02, more preferably at most 0.015, even more preferably at most 0.010. Controlling the curl fluctuation per relative humidity 1 % to fall within the range as above reduces the deformation of the film after worked into polarizer, depending on the service environment moisture change, and therefore prevents the light leakage from liquid-crystal display devices depending on the service environment change.

The curl degree may be measured as follows: The film is cut by 50 mm in the transverse direction and by 2 mm in the machine direction, and the resulting piece is conditioned at a predetermined humidity for 24 hours. Using a curvature scale, the curl degree of the film is measured. The curl value is represented by 1/R, in which R is the radius of curvature expressed by a unit, meter (see JIS K7619).

The moisture-dependent curl fluctuation may be controlled by controlling the additive concentration distribution in the film. The additive concentration distribution may be determined according to the following method.

A cross section of an unstretched film, parallel to the xz plane of the film, is divided into 5 portions from the side of the support used in film formation to the air interface side; and each portion is analyzed using a time-of-flight secondary ion mass spectrometer (TOF-SIMS). The intensity ratio of the cellulose acylate decomposition product-derived positive ion peak, m/Z=109 ($C_6H_5O_2^+$), to the additive ion peak (molecule $+H^+$) is obtained, and the data give the additive concentration distribution.

The Re enhancer of the above formula (A) is characterized in that its concentration in the film on the support side thereof during film formation is higher than the Rth enhancer of a general formula (I) to be mentioned below; and when the two are used as combined, the additive concentration distribution may be readily controlled in the thickness direction of the film, and the combined use is therefore favorable for reducing the moisture-dependent curl fluctuation in the film.

(Glass Transition Temperature)

The glass transition temperature (hereinafter this may be referred to as Tg) of the cellulose acylate film for use as the first optically-anisotropic layer is preferably from 130°C to 200°C, more preferably from 150°C to 180°C. Having a glass transition temperature controlled to fall within the above range, the cellulose acylate film has good dimensional stability under heat and has excellent workability.

Tg of the film may be measured according to the following method:

A film sample of 5 mm × 30 mm is conditioned at 25°C and 60 % RH for 2 hours or more, and then this is tested with a kinematic viscoelasticity meter (Vibron DVA-225 (by IT Keisoku Seigyo KK). The chuck distance is 20 mm, the heating speed is 2°C/min, the test temperature range is from 30°C to 200°C, and the frequency is 1 Hz. A storage elastic modulus is taken on the vertical axis as a logarithmic axis, and a temperature (°C) is taken on the horizontal axis as a linear axis; and on the graph, the rapid decrease in the storage elastic modulus shown when the storage elastic modulus transfers from the solid region to the glass transition region is drawn as a line 1, and it is drawn as a line 2 in the glass transition region. The point of intersection of the line 1 and the line 2 indicates a temperature at which the storage elastic modulus of the film rapidly decreases during heating and the film begins to soften, or that is, a temperature at which the film begins to transfer to the glass transition region; and this is the glass transition temperature Tg (kinematic viscoelasticity) of the film.

(Thermal Expansion Coefficient)

The thermal expansion coefficient of the cellulose acylate film for use as the first optically-anisotropic layer is preferably from 10 ppm/°C to 100 ppm/°C, more preferably from 15 ppm/°C to 80 ppm/°C, even more preferably from 20 ppm/°C to 60 ppm/°C. Having a thermal expansion coefficient that falls within the above range, the film may prevent display unevenness when the liquid-crystal display device having the optically-anisotropic layer of the film built therein is continuously turned on.

The thermal expansion coefficient of the film may be determined as a dimensional change relative to temperature elevation, as measured with a thermal mechanical analyzer when heated under a constant load given thereto.

(Dimensional Change)

The dimensional change of the cellulose acylate film for use as the first optically-anisotropic layer is preferably small. Concretely, the dimensional change of the film before and after treatment at 60°C and 90 % RH for 100 hours is

preferably at most 0.10 %, more preferably at most 0.05 %. The dimensional change of the film before and after treatment at 80°C and 10 % RH for 24 hours is preferably at most 0.10 %, more preferably at most 0.05 %. The ratio of the absolute value of the dimensional change of the film in MD to TD (MD/TD) is preferably from 0.1 to 100. Having a dimensional change that falls within the range as above, the deformation of the film, after worked into polarizer, may be reduced, depending on the service environment moisture change, and therefore the film may prevent the light leakage from liquid-crystal display devices depending on the service environment change.

The dimensional change may be determined as follows: Two film samples of 30 mm × 120 mm are prepared, and conditioned at 25°C and 60 % RH for 24 hours, and using a pin gauge (EF-PH by Mitsutoyo), 6 mmϕ holes are formed at both edges of the samples at intervals of 100 mm. The original punch distance is measured, L0. One sample is treated in a temperature & humidity chamber, ESPEC's PR-45, at 60°C and 90 % RH for 24 hours, and the punch distance is measured, L1. The other sample is treated in a constant temperature oven, Yamato's DN64, at 80°C and 10 % RH for 24 hours, and the punch distance is measured, L2. The dimensional change in the invention is expressed as a value read to the minimum scale, 1/1000 mm in every distance measurement. According to the following formulae, the dimensional change under each condition may be obtained.

$$\text{Dimensional change at 60°C and 90 \% RH} = \{(L0 - L1)/L0\} \times 100,$$

$$\text{Dimensional change at 80°C and 10 \% RH} = \{(L0 - L2)/L0\} \times 100.$$

(Film Thickness Fluctuation)

Preferably, the cellulose acylate film for use as the first optically-anisotropic layer has excellent surface smoothness. Concretely, the maximum thickness difference of the film (P-V value) is preferably at most 1 μm; and the RMS value of the film represented by the following formula is preferably at most 0.07 μm. More preferably, the P-V value of the film is at most 0.8 μm, even more preferably at most 0.6 μm, still more preferably at most 0.4 μm. The RMS value of the film is more preferably at most 0.06 μm, even more preferably at most 0.05 μm, still more preferably at most 0.04 μm. Having P-V and RMS falling within the range as above, the film has excellent surface smoothness, and may be evenly stuck to a polarizer; and the film may provide flat panels.

$$\text{(Thickness of RMS)} = \sqrt{\frac{\sum_{i=0}^{N-1} d_i^{\,2}}{N}}$$

$d_i$: Thickness within a range of a diameter of 60 mm
N: The member of points measuring thickness within a range of a diameter of 60 mm

The maximum thickness difference of the film (P-V value) and the RMS value of the film may be measured, using Fujinon's stripe analyzer, FX-03. The area for analysis is within a range of ϕ = 60 mm.

(Alignment Angle Fluctuation)

The cellulose acylate film for use as the first optically-anisotropic layer is preferably such that the difference between the maximum value and the minimum value of the alignment angle distribution within a range of 60 mm × 60 mm is at most 0.40 degrees, more preferably at most 0.30 degrees, even more preferably at most 0.20 degrees, still more preferably at most 0.10 degrees. The film thus improved in the alignment angle distribution to that effect in a small region can extremely reduce the unevenness in cross Nicol observation; and the film may provide flat panels.

In the invention, "alignment angle" does not indicate the angle of the alignment direction of a polymer film, based on a specific direction in the plane of the film. However, in a case of "difference between the maximum value and the minimum value of an alignment angle", it may mean, based on a common direction, though indefinite, a difference between the maximum value and the minimum value of the angle between that direction and the alignment direction of a polymer film; and therefore the value may be determined indiscriminately.

In the invention, the alignment angle distribution of the polymer film is determined with OPTIPRO (XY scanning

stage, halogen lamp light + 550 nm interference filter). In this case, the test area is 60 mm × 60 mm, and the sample is analyzed at intervals of 4 mm, using a 3 mmϕ beam.

(Photoelasticity Coefficient)

The photoelasticity coefficient of the cellulose acylate for use as the first optically-anisotropic layer is preferably from 0 $cm^2/N$ to 30 × $10^{-8}$ $cm^2/N$, more preferably not larger than 25 × $10^{-8}$ $cm^2/N$, even more preferably not larger than 18 × $10^{-8}$ $cm^2/N$, both in the machine direction and in the direction perpendicular to it. The photoelasticity coefficient may be determined with an ellipsometer. Having a photoelasticity coefficient that falls within the above range, the film, when it is built in a liquid-crystal display device and when the device is continuously turned on, may prevent uneven displays.

Preferably, the film to be used as the first optically-anisotropic layer satisfies the following formula, in point of the in-plane retardation thereof at a wavelength of 548 nm in an environment of 25°C and 10 % RH, 25°C and 80 % RH, and 25°C and 60 % RH, $Re_{10\%}(548)$, $Re_{80\%}(548)$ and $Re_{60\%}(548)$, respectively:

$$0.1\% \leq [\{Re_{10\%}(548) - Re_{80\%}(548)\}/Re_{60\%}(548)] \leq 20\%.$$

More preferably, it satisfies the following formula:

$$0.1\% \leq [\{Re_{10\%}(548) - Re_{80\%}(548)\}/Re_{60\%}(548)] \leq 10\%.$$

When the film to be used as the first optically-anisotropic layer shows environment dependence satisfying the above-mentioned relational formula in point of Re and when it is used in a liquid-crystal display device, then it is favorable since it provides an excellent liquid-crystal display device that hardly undergoes light leakage and color shift even when driven in high temperature and high humidity condition.

Not specifically defined, the thickness of the film to be used as the first optically-anisotropic layer is preferably as thin as possible in order to satisfy the requirement of thickness reduction for liquid-crystal display devices. On the other hand, however, the film must have a suitable thickness for satisfying predetermined optical characteristics. From the viewpoint, the film thickness is preferably from 30 to 200 μm, more preferably from 35 to 100 μm.

Also preferably, the optical film to be used as the first optically-anisotropic layer satisfies the following relational formula in point of the in-plane retardation thereof at a wavelength of 548 nm, Re(548) (unit, nm) and the film thickness (d) (unit, nm):

$$0.00125 < Re(548)/d < 0.00700.$$

More preferably, it satisfies the following relational formula:

$$0.0015 < Re(548)/d < 0.006.$$

Re(548)/d falling within the above range is favorable, from the viewpoint that the film satisfies desirable Re even though it is thin.

One embodiment of the optical film to be used as the first optically-anisotropic layer comprises a structure having a maximum refractive index in the direction nearly parallel to the film stretching direction (hereinafter this is referred to as "positive intrinsic birefringent component), and a structure having a maximum refractive index in the direction nearly perpendicular to the film stretching direction (hereinafter this is referred to as "negative intrinsic birefringent component), in which the negative intrinsic birefringent component has an absorption maximum on a longer wavelength side than the positive intrinsic birefringent component. The polymer that constitutes the major ingredient of the film may have the positive intrinsic birefringent component and the negative intrinsic birefringent component in its molecule; or the additive to the polymer may have them in its molecule. On the other hand, for contributing toward the reduction in the viewing angle-dependent contrast change and color shift of a liquid-crystal display device, Re must have reversed wavelength dispersion characteristics and the value of Re must be large in some degree. For this, there may be employed two methods; (1) a method of using a structure having a large intrinsic birefringence (that is, having a large polarizability anisotropy) both for the positive intrinsic birefringent component and the negative intrinsic birefringent

component; and (2) a method of increasing the degree of alignment.

Of those, in the method (1), when a polymer for the film is so designed that it may have a structure having a large polarizability anisotropy introduced thereinto, then the photoelasticity of the polymer may increase, therefore causing a problem in that, when the film is built in a liquid-crystal display device and when the device is kept in high temperature and high humidity condition, then light leakage may increase. On the other hand, in the method (2), the environment change-dependent Re change may tend to increase. In particular, the above problem is serious with a hydrophilic polymer having sufficient adhesiveness to polyvinyl alcohol used for polarizing elements, such as cellulose acylate.

Accordingly, it is especially desirable that the positive intrinsic birefringent component and the negative intrinsic birefringent component are added to both the polymer, or that, is the major ingredient of the film, and the additive thereto so as to complementarily use them, and this embodiment may provide an optical film having a high level of reversed wavelength dispersion characteristics of the retardation and a small photoelasticity coefficient and having a small Re moisture dependence.

(Photoelasticity of Optical Film)

The photoelasticity coefficient of the optical film to be used as the first optically anisotropic layer is preferably from 0 $cm^2/N$ to 30 $\times$ $10^{-8}$ $cm^2/N$, more preferably from 0 $cm^2/N$ to 20 $\times$ $10^{-8}$ $cm^2/N$. Having a photoelasticity coefficient that falls within the above range, the film is effective for reducing light leakage when it is built in a liquid-crystal display device and when the device is turned on for a long period of time in high temperature and high humidity condition.

[Rth enhancer]

For preparing a cellulose acylate film satisfying the condition required for the second optically anisotropic layer, an Rth enhancer may be added to the cellulose acylate film. It is noted that the term "Rth enhancer" is used for any compounds capable of developing or enhancing birefringence in the thickness direction. Preferably the compounds having an absorption peak at a wavelength from 250 nm to 380 nm and exhibiting high polarizability anisotropy are employed as the Rth enhancer. The compounds represented by the formula (I) are especially preferred as the Rth enhancer.

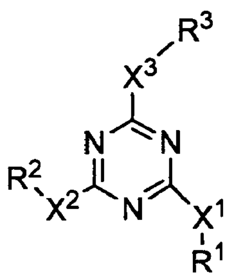

(I)

In the formula, $X^1$ represents a single bond, $-NR^4-$, -O- or -S-;$X^2$ represents a single bond, $-NR^5-$, -O- or -S-; $X^3$ represents a single bond, $-NR^6-$, -O- or -S-. And, $R^1$, $R^2$, and $R^3$ independently represent an alkyl group, an alkenyl group, an aromatic ring group or a hetero-ring residue; $R^4$, $R^5$ and $R^6$ independently represent a hydrogen atom, an alkyl group, an alkenyl group, an aryl group or a hetero-ring group.

Preferred examples, I-(1) to IV- (10), of the compound represented by the formula (I) include, but are not limited to, those shown below.

I −(1)

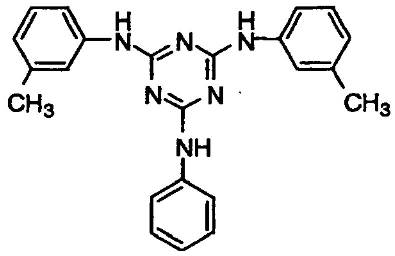

I −(2)

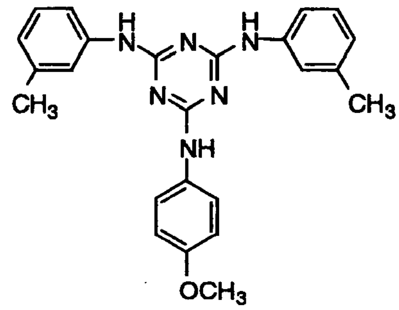

I −(3)

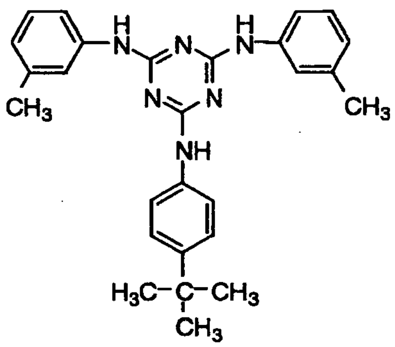

I −(4)

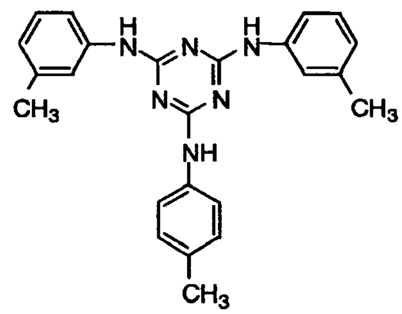

I −(5)

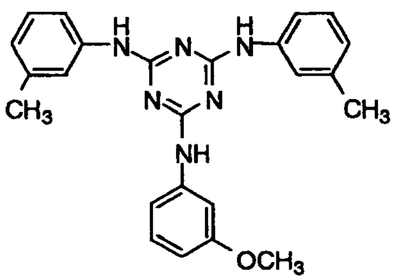

I −(6)

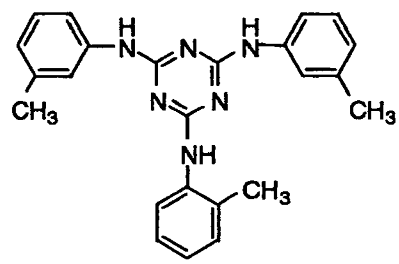

I −(7)

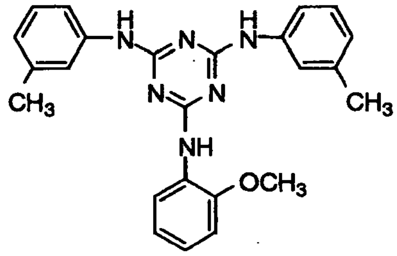

I −(8)

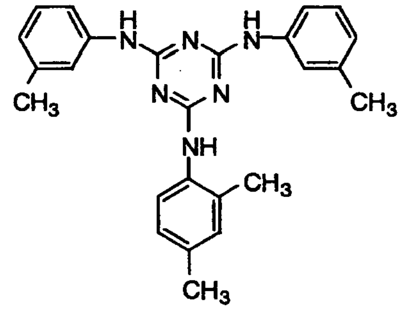

I −(9)

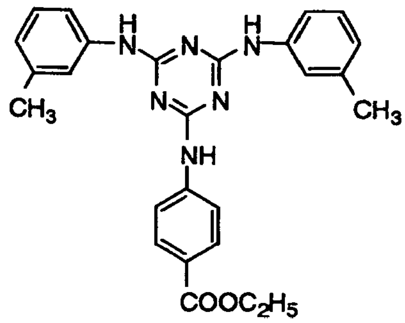

I −(10)

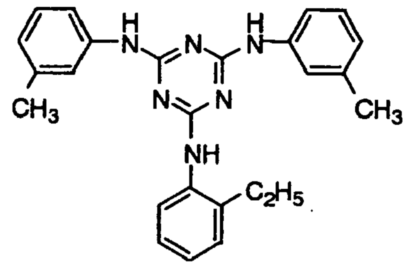

I −(11)

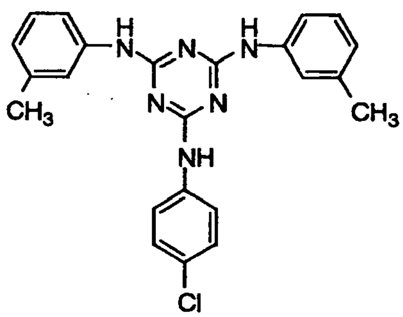

I −(12)

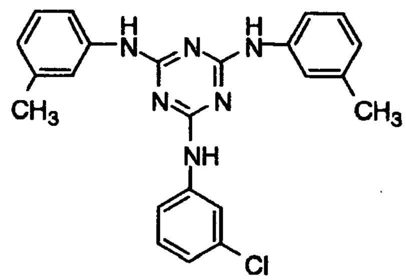

I −(13)

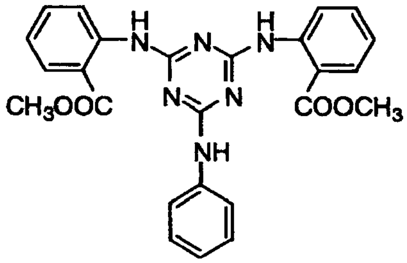

I −(14)

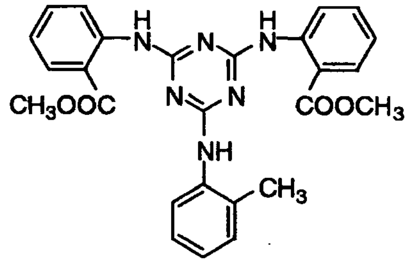

I −(15)

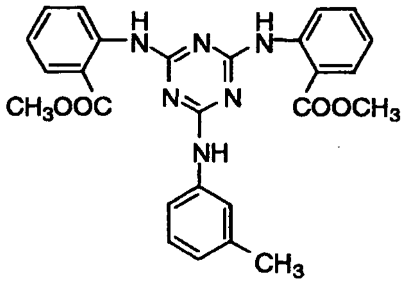

I −(16)

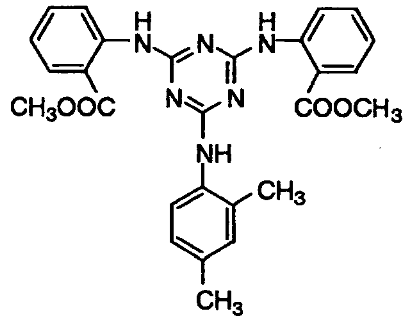

I −(17)

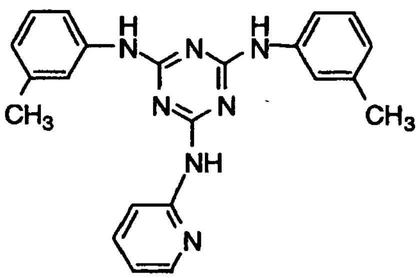

I −(18)

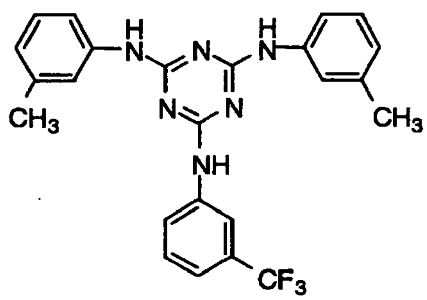

I −(19)

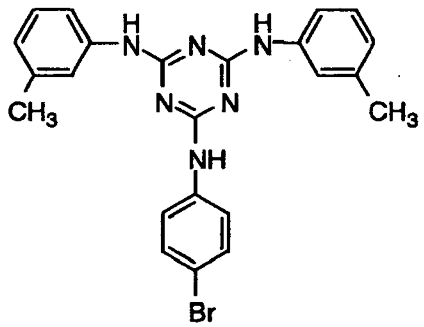

I −(20)

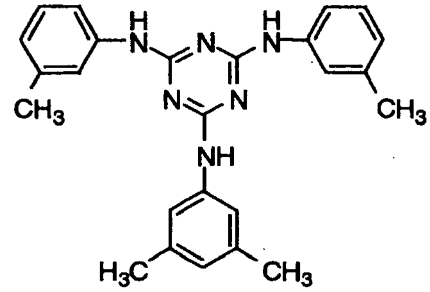

I −(21)

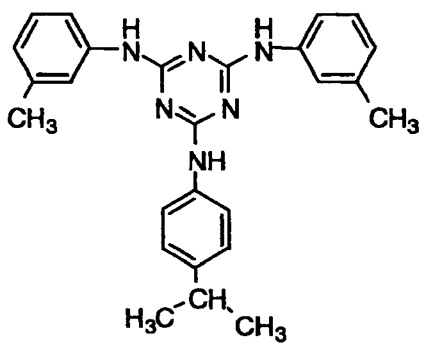

I −(22)

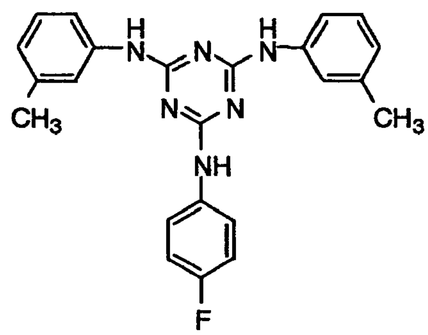

I −(23)

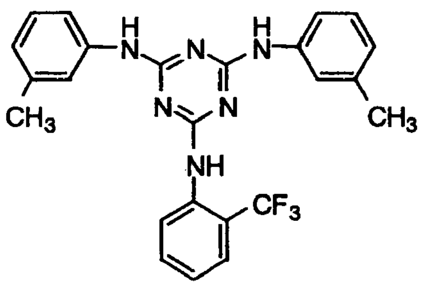

I −(24)

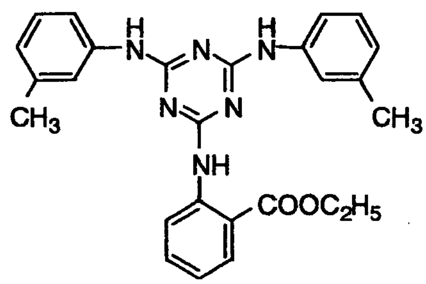

I-(25)

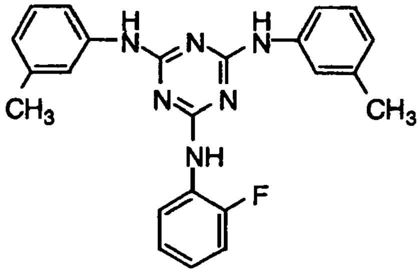

I-(26)

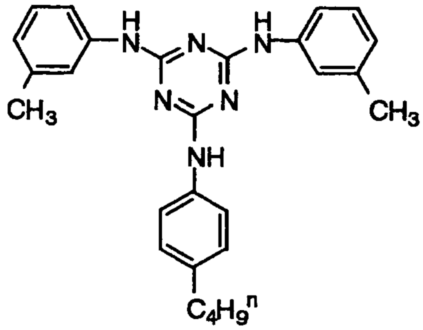

I-(27)

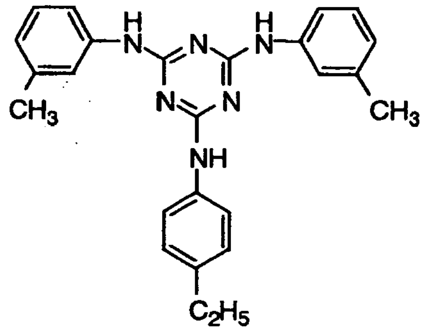

I-(28)

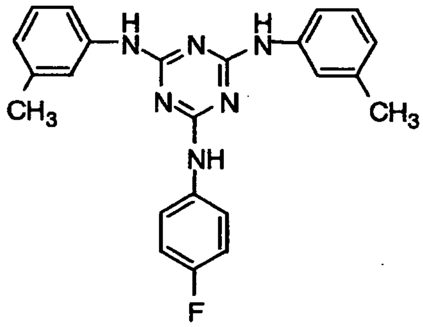

I-(29)

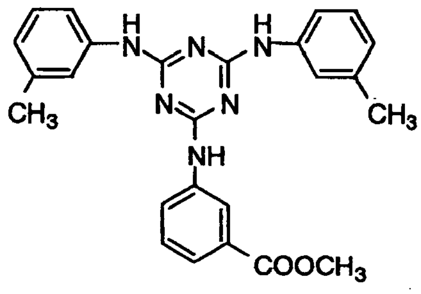

I-(30)

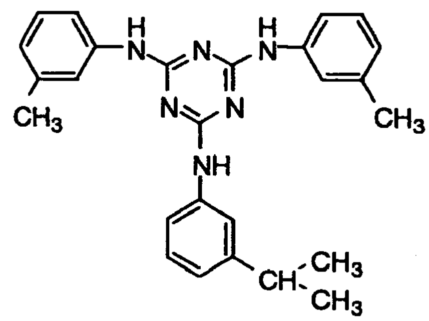

I-(31)

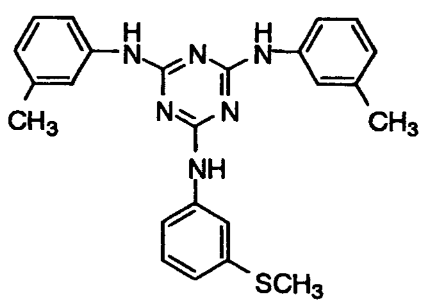

I-(32)

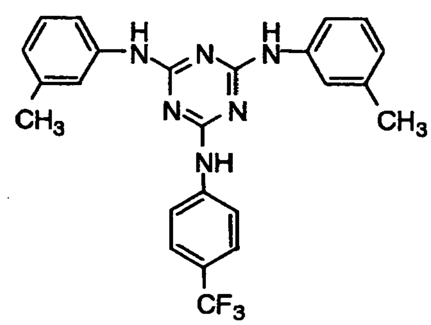

I −(33)

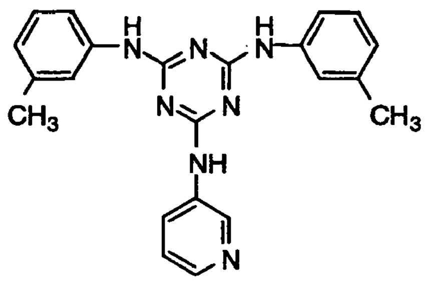

I −(34)

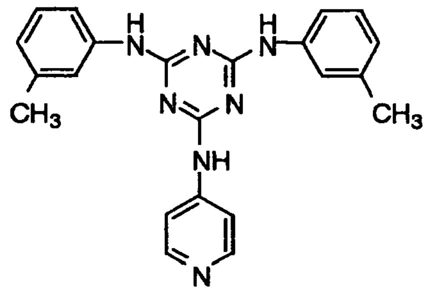

I −(35)

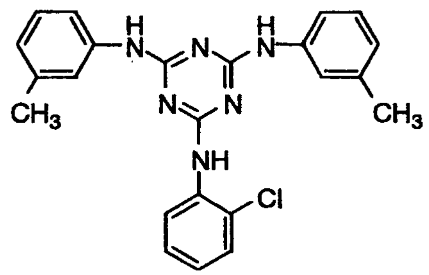

I −(36)

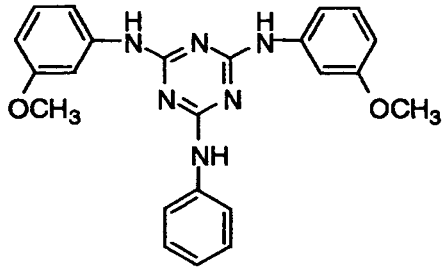

I −(37)

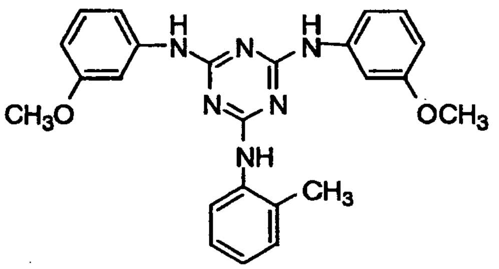

I −(38)

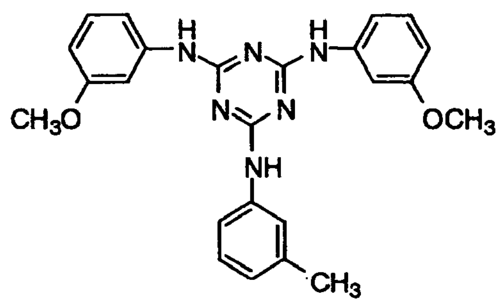

I −(39)

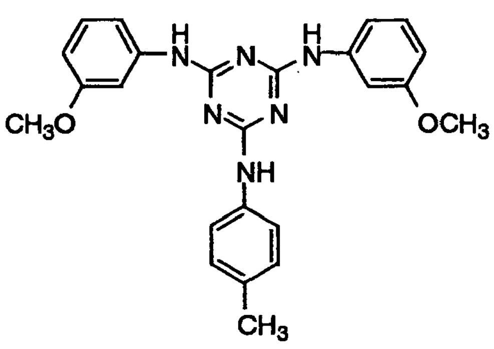

I −(40)

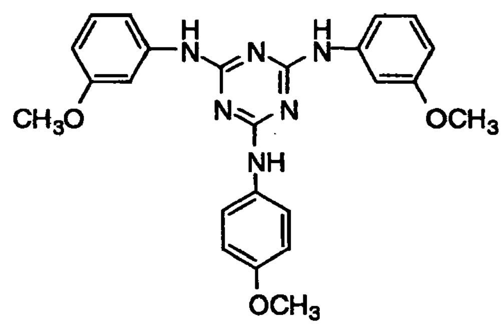

I -(41)

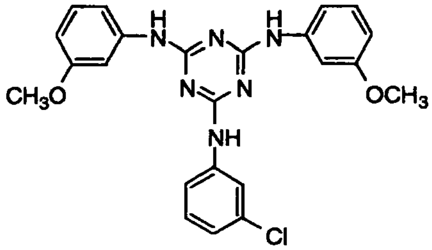

I -(42)

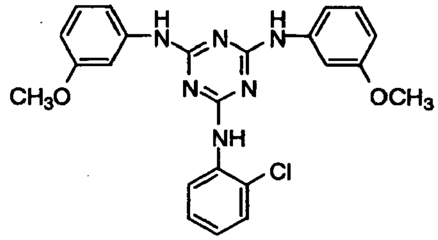

I -(43)

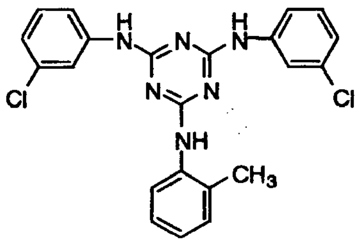

I -(44)

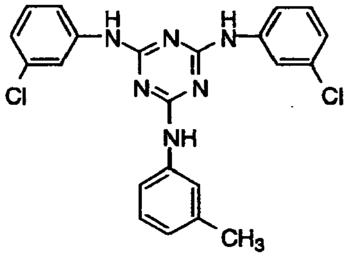

I -(45)

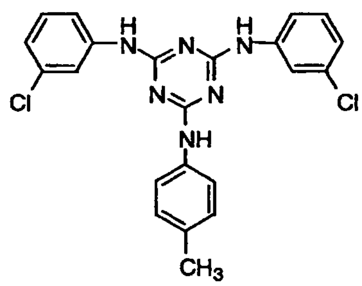

I -(46)

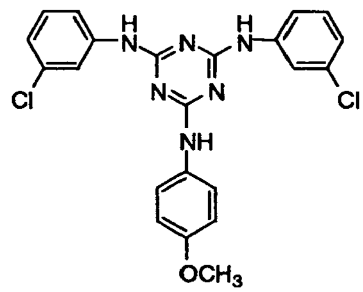

I -(47)

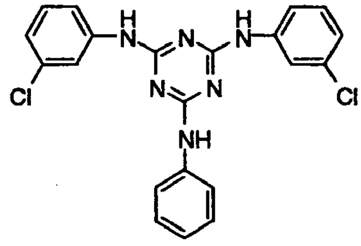

I -(48)

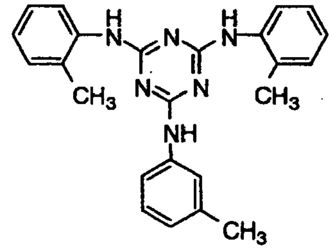

I -(49)

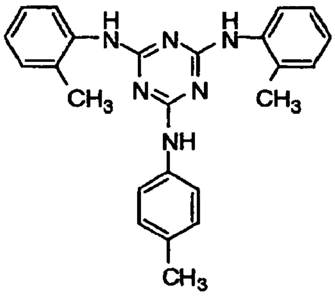

I -(50)

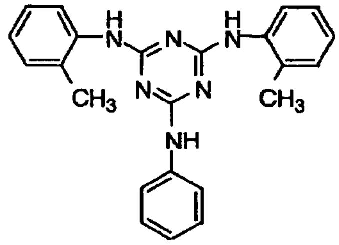

II-(1)

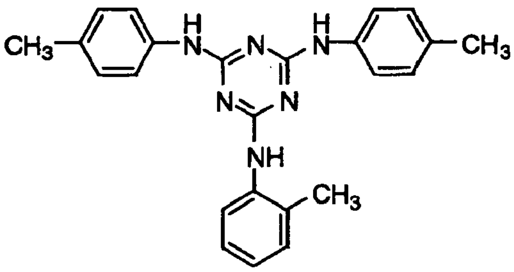

II-(2)

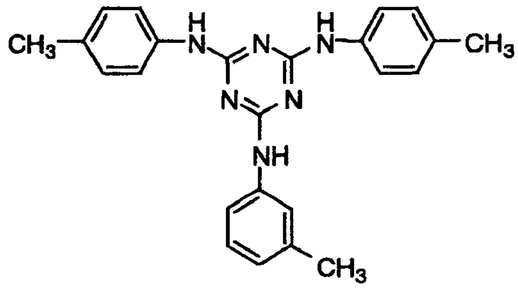

II-(3)

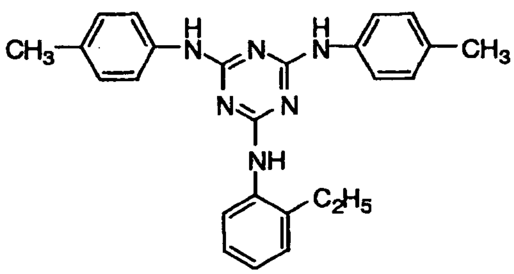

II-(4)

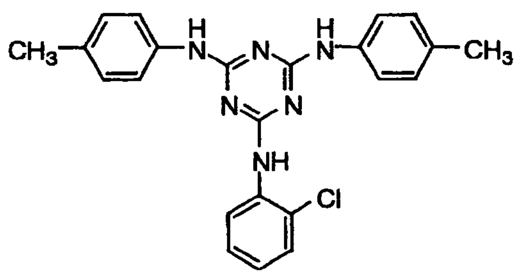

II-(5)

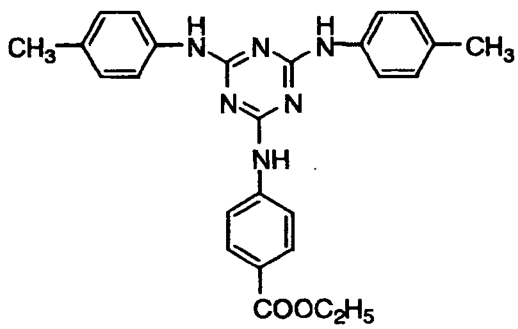

II-(6)

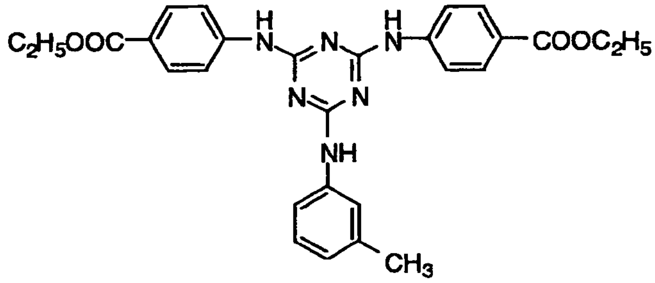

II-(7)

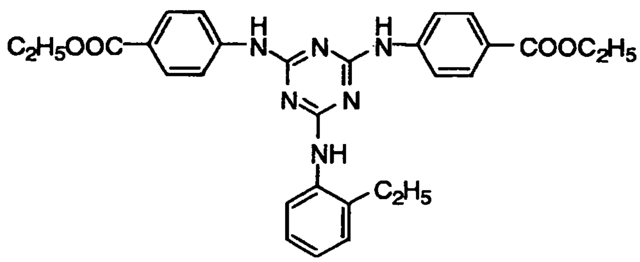

II-(8)

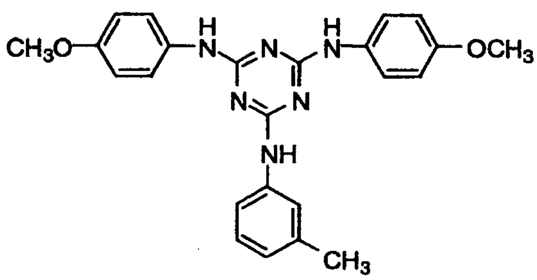

II-(9)

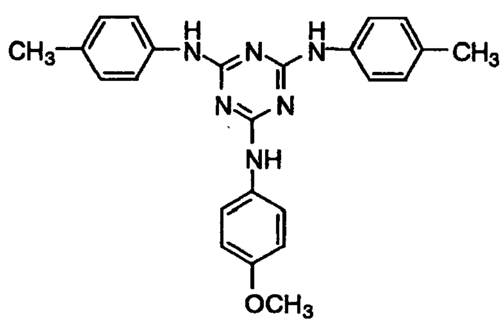

III-(1)

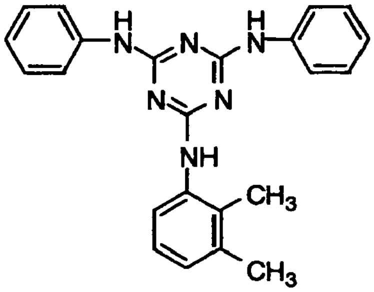

III-(2)

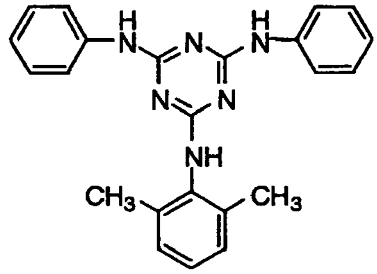

III-(3)

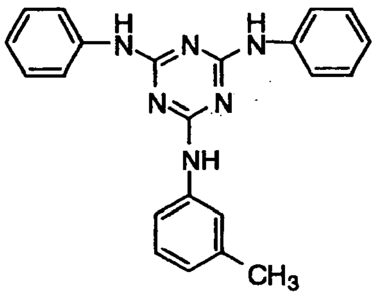

III-(4)

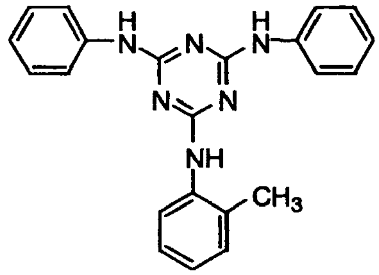

III-(5)

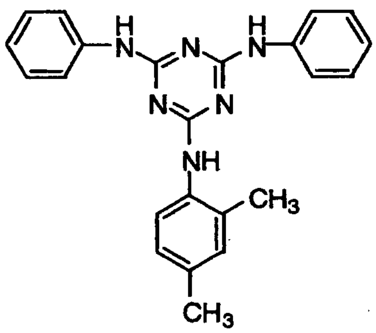

III-(6)

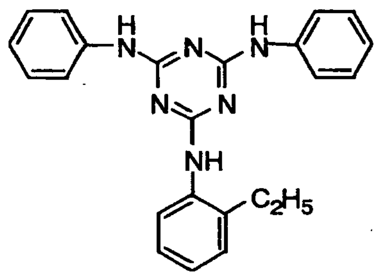

III-(7)

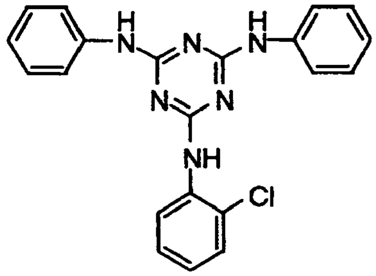

III-(8)

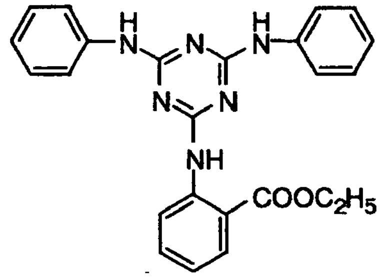

III-(9)

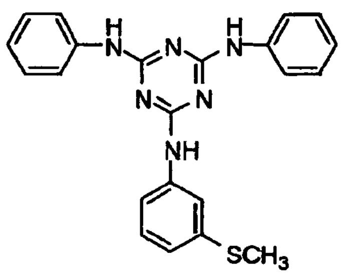

III-(10)

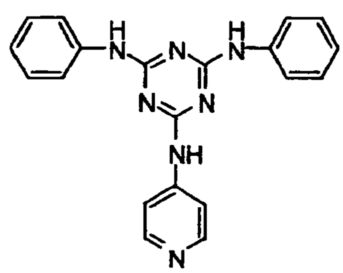

III-(11)

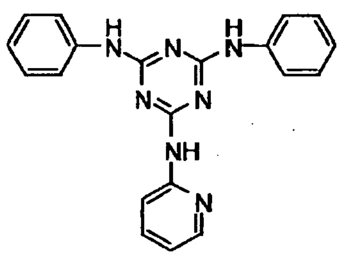

III-(12)

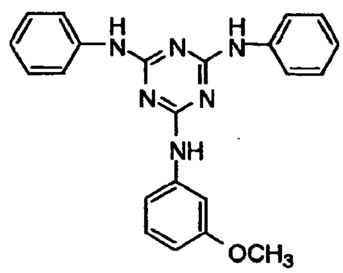

IV-(1)

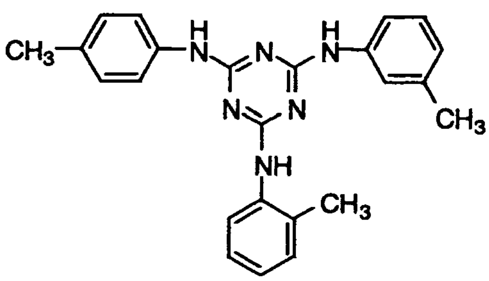

IV-(2)

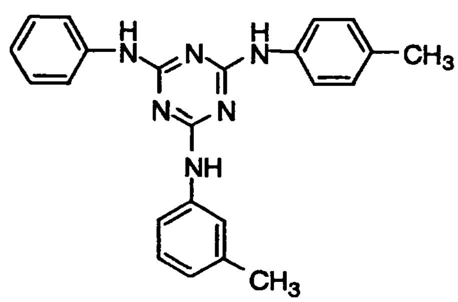

IV-(3)

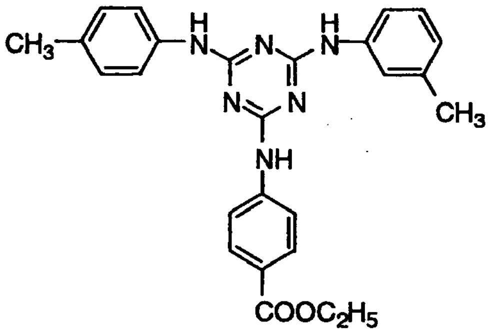

IV-(4)

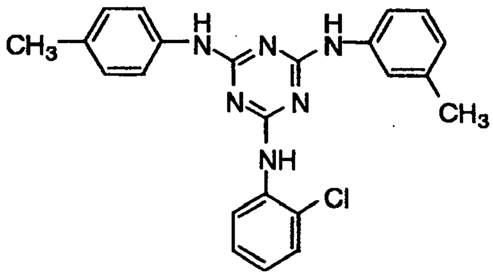

IV-(5)

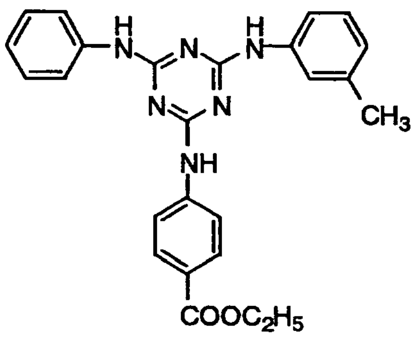

IV-(6)

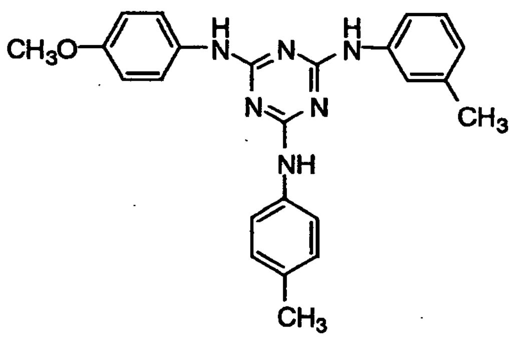

IV-(7)

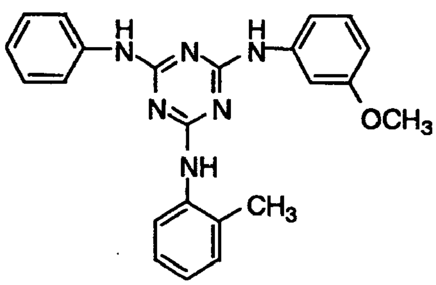

IV-(8)

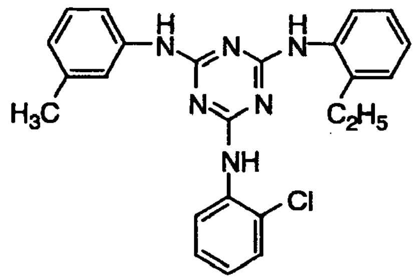

IV-(9)

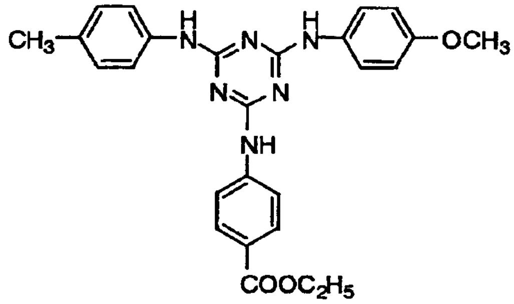

IV-(10)

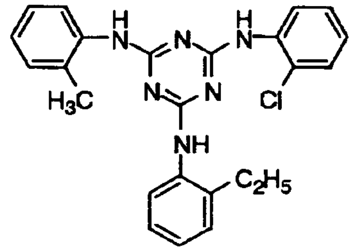

The compounds represented by the formula (III) are also preferred as the Rth enhancer. The formula (III) will be described in detail.

Formula (III)

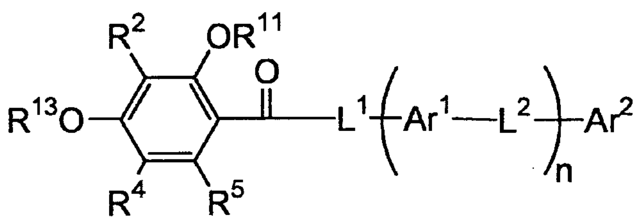

In the formula (III), $R^2$, $R^4$ and $R^5$ independently represent a hydrogen atom or a substituent; $R^{11}$ and $R^{13}$ independently represent a hydrogen atom or an alkyl group; and $L^1$ and $L^2$ independently represent a single bond or a bivalent linking group. In the formula, $Ar^1$ represents an arylene group or an aromatic heterocyclic group; $Ar^2$ represents an arylene group or an aromatic heterocyclic group; n is an integer equal to or more than 3; "n" types of $L^2$ and $Ar^1$ may be same or different from each other. $R^{11}$ and $R^{13}$ are different from each other, and the alkyl group represented by $R^{13}$ doesn't include any hetero atoms.

In the formula (III), $R^2$, $R^4$ and $R^5$ respectively represent a hydrogen atom or a substituent. The substituent may be selected from Substituent Group T described later.

In the formula (III), $R^2$ preferably represents a hydrogen atom, an alkyl group, an alkoxy group, an amino group or hydroxy; more preferably a hydrogen atom, an alkyl group or an alkoxy group; much more preferably a hydrogen atom, a $C_{1-4}$ alkyl group such as methyl or a $C_{1-12}$ (the preferred is $C_{1-8}$, the more preferred is $C_{1-6}$ and the specially preferred is $C_{1-4}$) alkoxy group; further much more preferably a hydrogen atom, a $C_{1-4}$ alkyl group or a $C_{1-4}$ alkoxy group; especially preferably a hydrogen atom, methyl or methoxy; and most preferably a hydrogen atom.

In the formula (III), $R^4$ preferably represents a hydrogen atom or an electron donating substituent; more preferably a hydrogen atom, an alkyl group, an alkoxy group, an amino group or hydroxy; much more preferably a hydrogen atom, a $C_{1-4}$ alkyl group or a $C_{1-12}$ (the preferred is $C_{1-8}$, the more preferred is $C_{1-6}$ and the especially preferred is $C_{1-4}$) alkoxy group; and especially preferably a hydrogen atom, a $C_{1-4}$ alkyl group or a $C_{1-4}$ alkoxy group; and most preferably a hydrogen atom or methoxy.

In the formula (III), $R^5$ preferably represents a hydrogen atom, a halogen atom, an alkyl group, an alkoxy group, an amino group or hydroxy; more preferably a hydrogen atom, an alkyl group or an alkoxy group; much more preferably a hydrogen atom, a $C_{1-4}$ alkyl group such as methyl or a $C_{1-12}$ (the preferred is $C_{1-8}$, the more preferred is $C_{1-6}$ and the especially preferred is $C_{1-4}$) alkoxy group; especially preferably a hydrogen atom, methyl or methoxy; and most preferably a hydrogen atom.

In the formula (III), $R^{11}$ and $R^{13}$ respectively represent a hydrogen atom or an alkyl group, provided that $R^{11}$ and $R^{13}$ are different from each other and the alkyl group represented by $R^{13}$ doesn't include any hetero atoms. The term "hetero atom" is used for any atoms other than hydrogen and carbon atoms and examples of the hetero atom include oxygen, nitrogen, sulfur, phosphorus, halogen (F, Cl, Br, I) and boron atoms.

The alkyl group represented $R^{11}$ or $R^{13}$ may have a linear or branched chain structure or a cyclic structure, and be selected from not only non-substituted alkyl groups but also substituted alkyl groups. The alkyl group is preferably selected from substituted or non-substituted $C_{1-30}$ alkyl groups, substituted or non-substituted $C_{3-30}$ cycloalkyl groups, substituted or non-substituted $C_{5-30}$ bicycloalkyl groups, namely monovalent groups made of $C_{5-30}$ bicycloalkanes by removing a hydrogen atom therefrom, and tricycloalkyl groups.

Preferable examples of the alkyl group represented by $R^{11}$ or $R^{13}$ include methyl, ethyl, n-propyl, isopropyl, n-butyl, sec-butyl, n-pentyl, iso-pentyl, n-hexyl, n-heptyl, n-octyl, tert-octyl, 2-ethylhexyl, n-nonyl, 1,1,3-trimethyl hexyl, n-decyl, 2-hexyldecyl, cyclohexyl, cycloheptyl, 2-hexenyl, oleyl, linoleyl, and linolenil. Examples of the cycloalkyl group include cyclohexyl, cyclopentyl, 4-n-dodecylcyclohexy; and examples of the bicycloalkyl group include bicyclo [1,2,2] heptane-2-yl and bicyclo [2,2,2] octane -3-yl.

$R^{11}$ preferably represents a hydrogen atom, methyl, ethyl, n-propyl or iso-propyl; and more preferably a hydrogen atom or methyl; and most preferably methyl.

$R^{13}$ preferably represents a $C_2$ or longer alkyl group, and more preferably a $C_3$ or longer alkyl group. Among theses, branched or cyclic alkyl groups are preferred.

Specific examples (O-1 to O-20) of the alkyl group represented by $R^{13}$ include, but are not limited to, those shown below. It is noted that "#" means the position of the oxygen atom side.

O-1 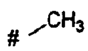

O-11 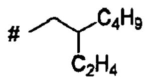

O-19 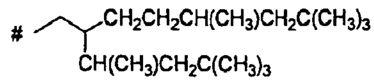

O-2 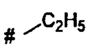

O-12 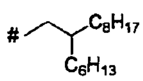

O-3 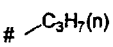

O-20 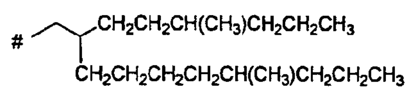

O-4 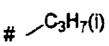

O-13 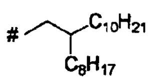

O-5 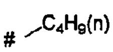

O-6 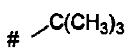

O-14 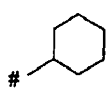

O-7 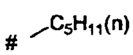

O-15 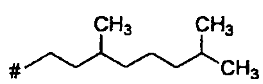

O-8 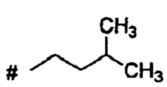

O-16 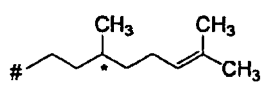

O-9 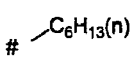

O-17 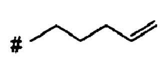

O-10 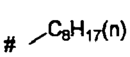

O-18 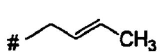 (cic/trans mixture)

In the formula (III), $Ar^1$ represents an arylene group or an aromatic heterocyclic group and $Ar^1$ in each repeating unit may be same or different.

In the formula (III), $Ar^2$ represents an aryl group or an aromatic heterocyclic group.

The arylene group presented by $Ar^1$ in the formula (III) may be selected from $C_{6-30}$ arylene groups, and have a single ring structure or a condensed ring structure with another ring. And the arylene group may have at least one substituent, and the substituent may be selected from Substituent Group T described later. The arylene group represented by $Ar^1$ is preferably selected from $C_{6-20}$, more preferably $C_{6-12}$ arylene groups, such as phenylene, p-methylphenylen and naphtylene.

The arylene group presented by $Ar^2$ in the formula (III) may be selected from $C_{6-30}$ arylene groups, and have a single ring structure or a condensed ring structure with another ring. And the arylene group may have at least one substituent, and the substituent may be selected from Substituent Group T described later. The arylene group represented by $Ar^2$ is preferably selected from $C_{6-20}$, more preferably $C_{6-12}$ arylene groups, such as phenylene, p-methylphenylen and naphtylene.

The aromatic heterocyclic group represented by $Ar^1$ or $Ar^2$ in the formula (III) may be selected from the groups of aromatic rings in which at least one hetero atom selected from oxygen, nitrogen and sulfur atoms is embedded, and is preferably selected from the groups of 5- or 6-membered aromatic rings in which at least one of a nitrogen and sulfur atoms is embedded. The aromatic heterocyclic group may have at least one substituent. The substituent may be selected from Substituent Group T.

Examples of the aromatic heterocyclic group represented by $Ar^1$ or $Ar^2$ in the formula (III) include furan, pyrrole, thiophene, imidazole, pyrazole, pyridine, pyrazine, pyridazine, triazole, triazine, indole, indazole, purine, thiazole, thiadiazole, oxazoline, oxazole, oxadiazole, quinoline, isoquinoline, phthalazine, naphthylidine, quinoxaline, quinazoline, cinnoline, pteridine, acridine, phenanthroline, phenadine, tetrazole, benzimidazole, benzoxazole, benzthiazole, benztriazole, tetraza indeline, pyrrolotriazole and pyrazotriazole. Preferred examples of the aromatic heterocyclic group include benzimidazole, benzoxazole, benzthiazole and benztriazole.

In the formula (III), $L^1$ and $L^2$ independently represent a single bond or a bivalent linking group. $L^1$ and $L^2$ may be same or different from each other. And $L^2$ in each repeating unit may be same or different from each other.

The bivalent linking group is preferably selected from the group consisting of -O-, -NR- (R represents a hydrogen atom or a substituted or non-substituted alkyl or aryl group), -CO-, $-SO_2-$, -S-, an alkylene group, a substituted alkylene group, an alkenylene group, a substituted alkenylene group, an alkynylene group, a substituted alkynylene group and any combinations of tow or more selected therefrom; and more preferably from the group consisting of -O-, -NR-, -CO-, $-SO_2NR-$, $-NRSO_2-$, -CONR-, -NRCO-, -COO-, -OCO- and an alkynylene group. Preferably, R represents a hydrogen atom.

In the compound represented by the formula (III), $Ar^1$ binds to $L^1$ and $L^2$. For the compound having a phenylene as $Ar^1$, it is preferable that $L^1$-$Ar^1$-$L^2$ and $L^2$-$Ar^1$-$L^2$ are in a para-position (1,4-position) relation.

In the formula (III), n is an integer equal to or more than 3, preferably from 3 to 7, more preferably from 3 to 6 and much more preferably from 3 to 5.

Preferable examples of the formula (III) include the compounds represented by the formula (IV) and formula (V) shown below.

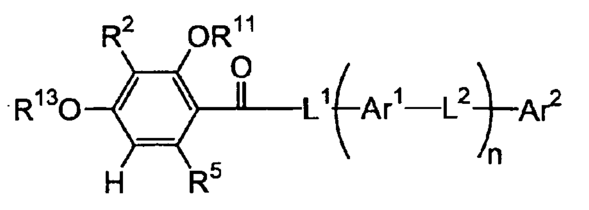

(IV)

In the formula (IV), $R^2$ and $R^5$ independently represent a hydrogen atom or a substituent; $R^{11}$ and $R^{13}$ independently represent a hydrogen atom or an alkyl group; $L^1$ and $L^2$ independently represent a single bond or a bivalent linking group; $Ar^1$ represents an arylene group or an aromatic heterocyclic group; $Ar^2$ represents an arylene group or an aromatic heterocyclic group; n is an integer equal to or more than 3; the "n" types of $L^2$ or $Ar^1$ may be same or different from each other; provided that $R^{11}$ and $R^{13}$ are different from each other and the alkyl group represented by $R^{13}$ doesn't include any hetero atoms.

In the formula (IV), the meanings of $R^2$, $R^5$, $R^{11}$ and $R^{13}$ are same as those in the formula (III); and preferred examples of $R^2$, $R^5$, $R^{11}$ and $R^{13}$ are same as those in the formula (III). In the formula (IV), the meanings of $L^1$, $L^2$, $Ar^1$ and $Ar^2$ are same as those in the formula (III) ; and preferred examples of $L^1$, $L^2$, $Ar^1$ and $Ar^2$ are same as those in the formula (III).

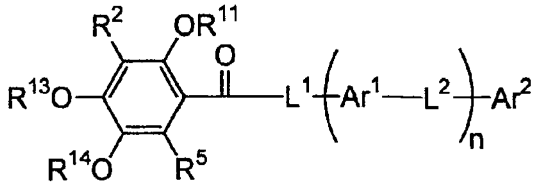

(V)

In the formula (V), $R^2$ and $R^5$ independently represent a hydrogen atom or a substituent; $R^{11}$ and $R^{13}$ independently represent a hydrogen atom or an alkyl group; $L^1$ and $L^2$ independently represent a single bond or a bivalent linking group; $Ar^1$ represents an arylene group or an aromatic heterocyclic group; $Ar^2$ represents an arylene group or an aromatic heterocyclic group; n is an integer equal to or more than 3; the "n" types of $L^2$ or $Ar^1$ may be same or different from each other; provided that $R^{11}$ and $R^{13}$ are different from each other and the alkyl group represented by $R^{13}$ doesn't include any hetero atoms.

In the formula (V), the meanings of $R^2$, $R^5$, $R^{11}$ and $R^{13}$ are same as those in the formula (III); and preferred examples of $R^2$, $R^5$, $R^{11}$ and $R^{13}$ are same as those in the formula (III). In the formula (V), the meanings of $L^1$, $L^2$, $Ar^1$ and $Ar^2$ are same as those in the formula (III) ; and preferred examples of $L^1$, $L^2$, $Ar^1$ and $Ar^2$ are same as those in the formula (III).

In the formula (V), $R^{14}$ represents a hydrogen atom or an alkyl group; and examples of the alkyl group are same as those preferably exemplified as an alkyl group represented by $R^{11}$ or $R^{13}$. In the formula, $R^{14}$ preferably represents a hydrogen atom or a $C_{1-4}$ alkyl group, more preferably a hydrogen atom or a $C_{1-3}$ alkyl group, and much more preferably methyl. In the formula, $R^{11}$ and $R^{14}$ may be same or different from each other, and it is most preferred that both of $R^{11}$ and $R^{14}$ are methyl.

Preferable examples of the compound represented by the formula (V) include the compounds represented by the formula (V-A) and (V-B).

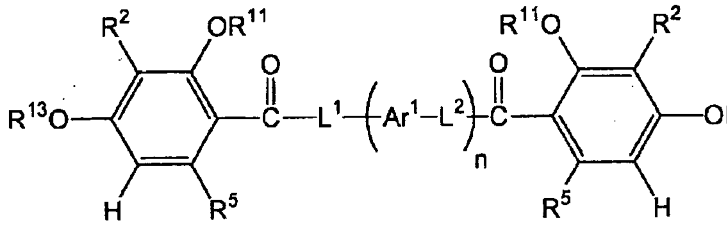

(V − A)

In the formula (V-A), $R^2$ and $R^5$ independently represent a hydrogen atom or a substituent; $R^{11}$ and $R^{13}$ independently represent a hydrogen atom or an alkyl group; $L^1$ and $L^2$ independently represent a single bond or a bivalent linking group; $Ar^1$ represents an arylene group or an aromatic heterocyclic group; n is an integer equal to or more than 3; the "n" types of $L^2$ or $Ar^1$ may be same or different from each other; provided that $R^{11}$ and $R^{13}$ are different from each other and the alkyl group represented by $R^{13}$ doesn't include any hetero atoms.

In the formula (V-A), the meanings and preferable examples of $R^2$, $R^5$, $R^{11}$, $R^{13}$, $L^1$, $L^2$, $Ar^1$ and n may be same as those in the formula (III) .

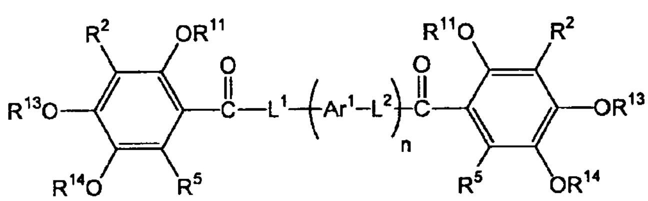

(V − B)

In the formula (V-B), $R^2$ and $R^5$ independently represent a hydrogen atom or a substituent; $R^{11}$, $R^{13}$ and $R^{14}$ independently represent a hydrogen atom or an alkyl group; $L^1$ and $L^2$ independently represent a single bond or a bivalent linking group; $Ar^1$ represents an arylene group or an aromatic heterocyclic group; n is an integer equal to or more than 3; the "n" types of $L^2$ or $Ar^1$ may be same or different from each other; provided that $R^{11}$ and $R^{13}$ are different from each other and the alkyl group represented by $R^{13}$ doesn't include any hetero atoms.

In the formula (V-B), the meanings and preferable examples of $R^2$, $R^5$, $R^{11}$, $R^{13}$, $R^{19}$, $L^1$, $L^2$, $Ar^1$ and n may

be same as those in the formula (III).

"Substituent Group T" will be described below.

Substituent Group T:

Halogen atoms such as fluorine, chlorine, bromine and iodine atoms; alkyls (preferably $C_{1-30}$alkyls) such as methyl, ethyl, n-propyl, iso-propyl, tert-butyl, n-octyl, and 2-ethylhexyl; cylcoalkyls (preferably $C_{3-30}$ substituted or non-substituted cycloalkyls) such as cyclohexyl, cyclopentyl and 4-n-dodecylcyclohexyl; bicycloalkyls (preferably $C_{5-30}$ substitute or non-substituted bicycloalkyls, namely monovalent residues formed from $C_{5-30}$ bicycloalkanes from which a hydrogen atom is removed) such as bicyclo [1,2,2]heptane-2-yl and bicyclo [2,2,2]octane-3-yl; alkenyls (preferably $C_{2-30}$ alkenyls) such as vinyl and allyl; cycloalkenyls (preferably $C_{3-30}$ substituted or non-substituted cycloalkenyls, namely monovalent residues formed from $C_{3-30}$ cycloalkenes from which a hydrogen atom is removed) such as 2-cyclopentene-1-yl and 2-cyclohexene-1-yl; bicycloalkenyls (preferably $C_{5-30}$ substituted or non-substituted bicycloalkenyls, namely monovalent residues formed from $C_{5-30}$ bicycloalkenes from which a hydrogen atom is removed) such as bicyclo[2,2,1]hepto-2-en-1-yl and bicyclo[2,2,2]octo-2-en-4-yl; alkynyls (preferably $C_{2-30}$ substitute or non-substituted alkynyls) such as etynyl and propargyl; aryls (preferably $C_{6-30}$ substitute or non-substituted aryls) such as phenyl, p-tolyl and naphthyl; heterocyclic groups (preferably (more preferably $C_{3-30}$) substituted or non-substituted, 5-membered or 6-membered, aromatic or non-aromatic heterocyclic monovalent residues) such as 2-furyl, 2-thienyl, 2-pyrimidinyl and 2-benzothiazolyl; cyano, hydroxyl, nitro, carboxyl, alkoxys (preferably $C_{1-30}$ substituted or non-substituted alkoxys) such as methoxy, ethoxy, iso-propoxy, t-butoxy, n-octyloxy and 2-methoxyethoxy; aryloxys (preferably $C_{6-30}$ substituted or non-substituted aryloxys) such as phenoxy, 2-methylphenoxy, 4-t-butylphenoxy, 3-nitrophenoxy and 2-tetradecanoyl aminophenoxy; silyloxys (preferably $C_{3-20}$ silyloxys) such as trimethylsilyloxy and t-butyldimethylsilyloxy; hetero-cyclic-oxys (preferably $C_{2-30}$ substituted or non-substituted hetero-cyclic-oxys) such as 1-phenyltetrazole-5-oxy and 2-tetrahydropyrenyloxy; acyloxys (preferably $C_{2-30}$ substitute or non-substituted alkylcarbonyloxys and $C_{6-30}$ substituted or non-substituted arylcarbonyloxys) such as formyloxy, acetyloxy, pivaloyloxy, stearoyoxy, benzoyloxy and p-methoxyphenylcarbonyloxy; carbamoyloxys (preferably $C_{1-30}$ substituted or non-substituted carbamoyloxys) such as N,N-dimethyl carbamoyloxy, N,N-diethyl carbamoyloxy, morpholinocarbonyloxy, N,N-di-n-octylaminocarbonyloxy and N-n-octylcarbamyloxy; alkoxy carbonyloxys (preferably $C_{2-30}$ substituted or non-substituted alkoxy carbonyloxys) such as methoxy carbonyloxy, ethoxy carbonyloxy, t-butoxy carbonyloxy and n-octyloxy carbonyloxy; aryloxy carbonyloxys (preferably $C_{7-30}$ substituted or non-substituted aryloxy carbonyloxys) such as phenoxy carbonyloxy, p-methoxyphenoxy carbonyloxy and p-n-hexadecyloxyphenoxy carbonyloxy; aminos (preferably $C_{0-30}$ substituted or non-substituted alkylaminos and $C_{6-30}$ substituted or non-substituted arylaminos) such as amino, methylamino, dimethylamino, anilino, N-methyl-anilino and diphenylamino; acylaminos (preferably $C_{1-30}$ substituted or non-substituted alkylcarbonylaminos and $C_{6-30}$ substituted or non-substituted arylcarbonylaminos) such as formylamino, acetylamino, pivaloylamino, lauroylamino and benzoylamino; aminocarbonylaminos (preferably $C_{1-30}$ substituted or non-substituted aminocarbonylaminos) such as carbamoylamino, N, N-dimethylaminocarbonylamino, N,N-diethylamino carbonylamino and morpholino carbonylamino; alkoxycarbonylaminos (preferably $C_{2-30}$ substituted or non-substituted alkoxycarbonylaminos) such as methoxycarbonylamino, ethoxycarbonylamino, t-butoxycarbonylamino, n-octadecyloxycarbonylamino and N-methyl-methoxy carbonylamino; aryloxycarbonylaminos (preferably $C_{7-30}$ substituted or non-substituted aryloxycarbonylaminos) such as phenoxycarbonylamino, p-chloro phenoxycarbonylamino and m-n-octyloxy phenoxy carbonylamino; sulfamoylaminos (preferably $C_{0-30}$ substituted or non-substituted sulfamoylaminos) such as sulfamoylamino, N,N-dimethylamino sulfonylamino and N-n-octylamino sulfonylamino; alkyl- and aryl-sulfonylaminos (preferably $C_{1-30}$ substituted or non-substituted alkyl-sulfonylaminos and $C_{6-30}$ substituted or non-substituted aryl-sulfonylaminos) such as methyl-sulfonylamino, butyl-sulfonylamino, phenylsulfonylamino, 2,3,5-trichlorophenyl-sulfonylamino and p-methylphenyl-sulfonylamino; mercapto; alkylthios (preferably substituted or non-substituted $C_{1-30}$ alkylthios such as methylthio, ethylthio and n-hexadecylthio; arylthios (preferably $C_{6-30}$ substituted or non-substituted arylthios) such as phenylthio, p-chlorophenylthio and m-methoxyphenylthio; heterocyclic-thios (preferably $C_{2-30}$ substituted or non-substituted heterocyclic-thios such as 2-benzothiazolyl thio and 1-phenyltetrazol-5-yl-thio; sulfamoyls (preferably $C_{0-30}$ substituted or non-substituted sulfamoyls) such as N-ethylsulfamoyl, N-(3-dodecyloxypropyl)sulfamoyl, N,N-dimethylsulfamoyl, N-acetylsulfamoyl, N-benzoylsulfamoyl, N-(N'-phenylcarbamoyl)sulfamoyl; sulfo; alkyl- and aryl-sulfinyls (preferably $C_{1-30}$ substituted or non-substituted alkyl- or $C_{6-30}$ substituted or non-substituted aryl-sulfinyls) such as methylsulfinyl, ethylsulfinyl, phenylsulfinyl and p-methylphenylsulfinyl; alkyl- and aryl-sulfonyls (preferably $C_{1-30}$ substituted or non-substituted alkyl-sulfonyls and $C_{6-30}$ substituted or non-substituted arylsulfonyls) such as methylsulfonyl, ethylsulfonyl, phenylsulfonyl and p-methylphenylsulfonyl; acyls (preferably $C_{2-30}$ substituted non-substituted alkylcarbonyls, and $C_{7-30}$ substituted or non-substituted arylcarbonyls) such as formyl, acetyl and pivaloyl benzyl; aryloxycarbonyls (preferably $C_{7-30}$ substituted or non-substituted aryloxycarbonyls) such as phenoxycarbonyl, o-chlorophenbxycarbonyl, m-nitrophenoxycarbonyl and p-t-butylphenoxycarbonyl; alkoxycarbonyls (preferably $C_{2-30}$) substituted or non-substituted alkoxycarbonyls) methoxycarbonyl, ethoxycarbonyl, t-butoxycarbonyl and n-octadecyloxycarbonyl; carbamoyls (preferably $C_{1-30}$ substituted or non-substituted carbamoyls) such

as carbamoyl, N-methylcarbamoyl, N,N-dimethylcarbamoyl, N,N-di-n-octylcarbamoyl and N-(methylsulfonyl)carbamoyl; aryl- and heterocyclic-azos (preferably $C_{6-30}$ substituted or non-substituted arylazos and $C_{3-30}$ substituted or non-substituted heterocyclicazos) such as phenylazo and p-chlorophenylazo, 5-ethylthio-1,3,4 -thiadiazol-2-yl-azo, imides such as N-succinimide and N-phthalimide; phosphinos (preferably $C_{2-30}$ substituted or non-substituted phosphinos) such as dimethyl phosphino, diphenyl phosphino and methylphenoxy phosphino; phosphinyls (preferably $C_{2-30}$ substituted or non-substituted phosphinyls) such as phosphinyl, dioctyloxy phosphinyl and diethoxy phosphinyl; phosphinyloxys (preferably $C_{2-30}$ substituted or non-substituted phosphinyloxys) such as diphenoxyphosphinyloxy and dioctyloxyphosphinyloxy; phosphinylaminos (preferably $C_{2-30}$ substituted or non-substituted phosphinylaminos) such as dimethoxy phosphinylamino and dimethylamino phosphinylamino; and silyls (preferably $C_{3-30}$ substituted or non-substituted silyls) such as trimethylsilyl, t-butylmethylsilyl and phenyldimethylsilyl.

The substituents, which have at least one hydrogen atom, may be substituted by at least one substituent selected from these. Examples such substituent include alkylcarbonylaminosulfo, arylcarbonylaminosulfo, alkylsulfonylaminocarbonyl and arylsulfonylaminocarbonyl. More specifically, methylsulfonylaminocarbonyl, p-methylphenylsulfonylaminocarbonyl, acetylaminosulfonyl and benzoylaminosulfonyl are exemplified.

Same or different two or more substituents may be selected. If possible, the substituents may bond to each other to form a ring.

Preferable examples of the compound represented by the formula (V-A) include the compounds in which $R^{11}$ is methyl, both of $R^2$ and $R^5$ are hydrogen atoms, $R^{13}$ is a $C_3$ or longer alkyl group, $L^1$ is a single bond, -O-, -CO-, -NR-, -$SO_2$NR-, -NR$SO_2$-, -CONR-, -NRCO- (R is a hydrogen atom or a substituted or non-substituted alkyl or aryl group, and preferably a hydrogen atom), -COO-, -OCO- or an alkylene; $L^2$ is -O- or - NR- (R is a hydrogen atom or a substituted or non-substituted alkyl or aryl group, and preferably a hydrogen atom); $Ar^1$ is an arylene group, and n is an integer from 3 to 6.

Examples of the compound represented by the formulae (V-A) and (V-B) include, but are not limited to, those shown below.

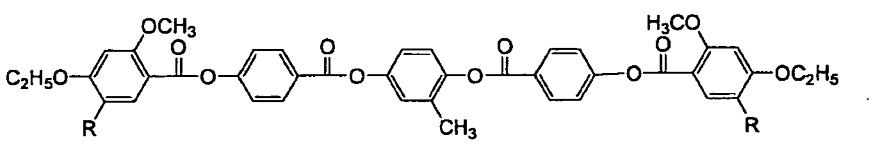

A-101; R=H
B-101; R=$OCH_3$

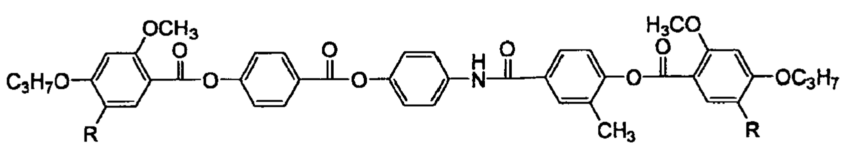

A-102; R=H
B-102; R=$OCH_3$

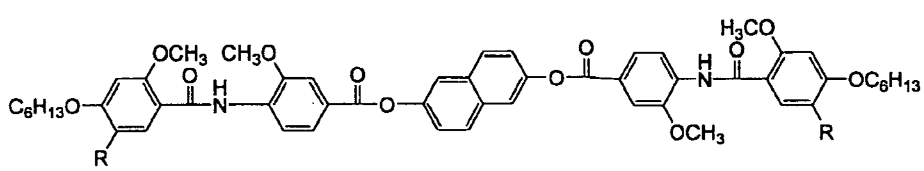

A-103; R=H
B-103; R=$OCH_3$

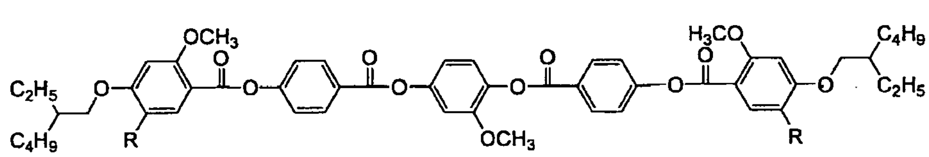

A-104; R=H
B-104; R=$OCH_3$

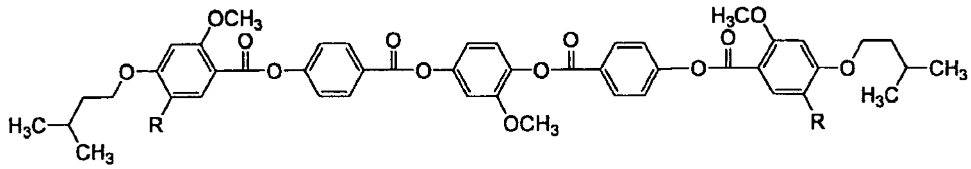

A-105; R=H
B-105; R=OCH3

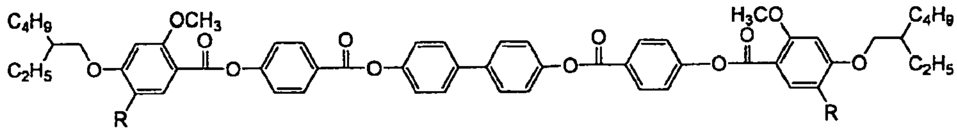

A-106; R=H
B-106; R=OCH3

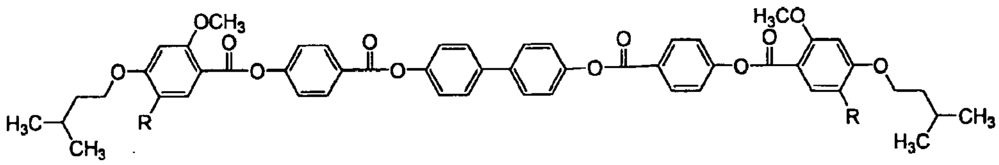

A-107; R=H
B-107; R=OCH3

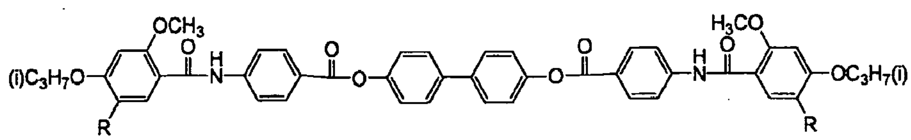

A-108; R=H
B-108; R=OCH3

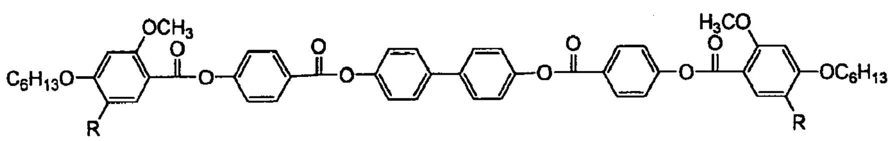

A-109; R=H
B-109; R=OCH3

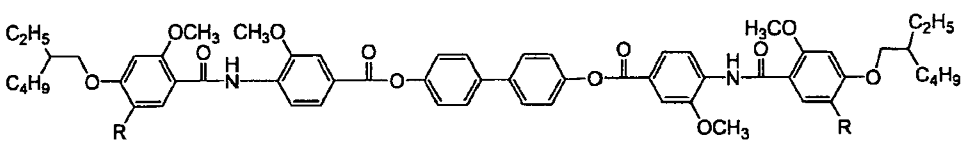

A-110; R=H
B-110; R=OCH3

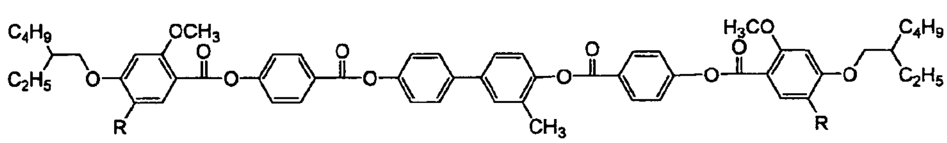

A-111; R=H
B-111; R=OCH3

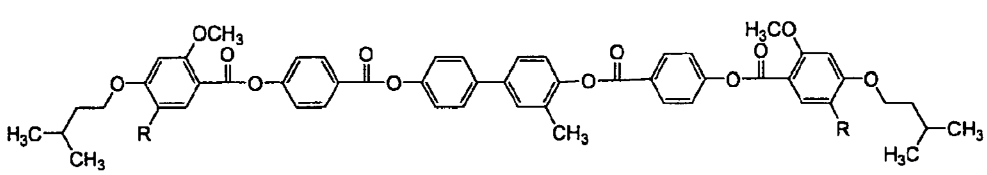

A-112; R=H
B-112; R=OCH3

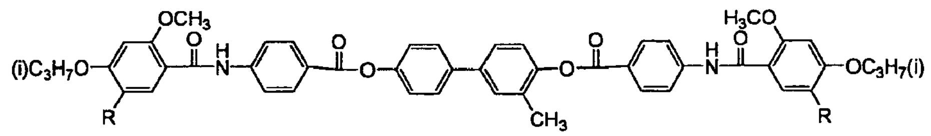

A-113; R=H
B-113; R=$OCH_3$

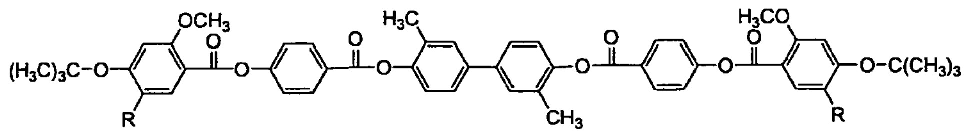

A-114; R=H
B-114; R=$OCH_3$

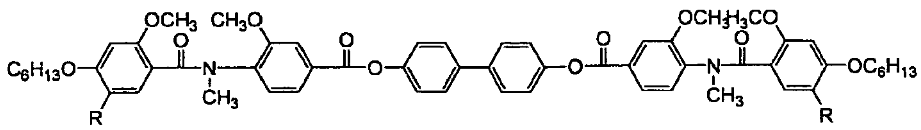

A-115; R=H
B-115; R=$OCH_3$

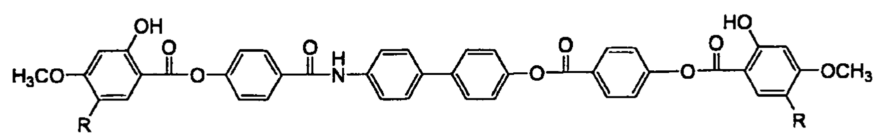

A-116; R=H
B-116; R=$OCH_3$

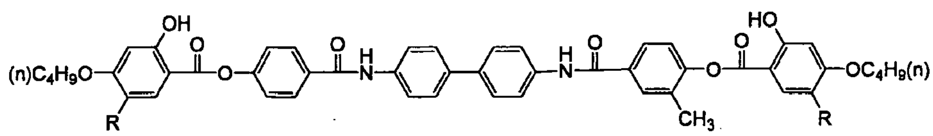

A-117; R=H
B-117; R=$OCH_3$

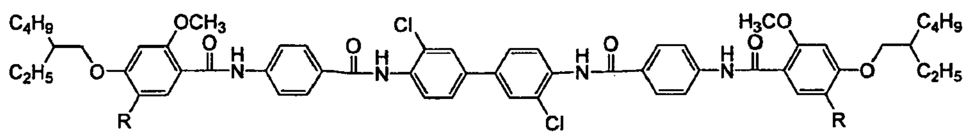

A-118; R=H
B-118; R=$OCH_3$

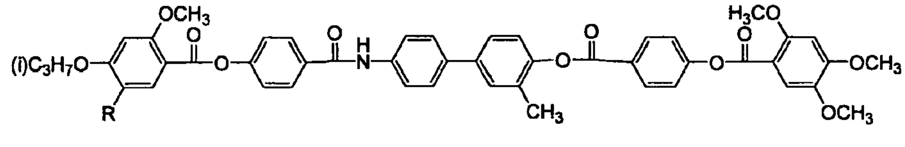

A-119; R=H
B-119; R=$OCH_3$

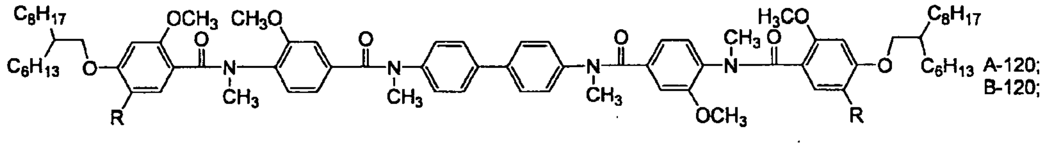

A-120; R=H
B-120; R=$OCH_3$

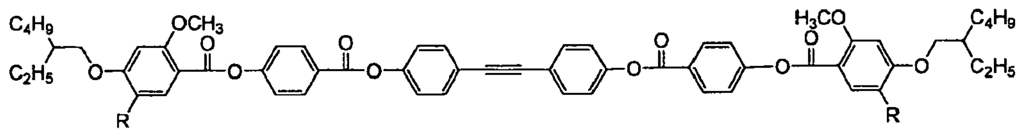

A-121; R=H
B-121; R=OCH3

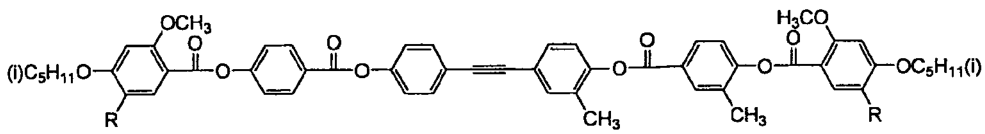

A-122; R=H
B-122; R=OCH3

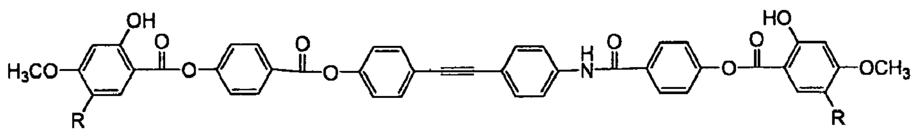

A-123; R=H
B-123; R=OCH3

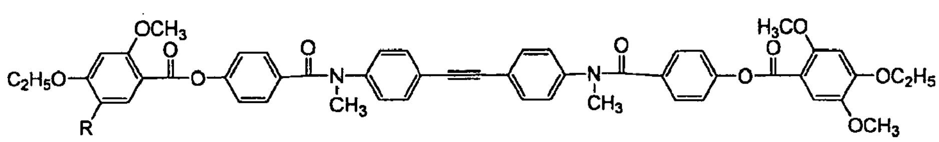

A-124; R=H
B-124; R=OCH3

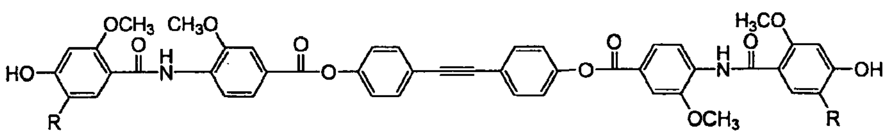

A-125; R=H
B-125; R=OCH3

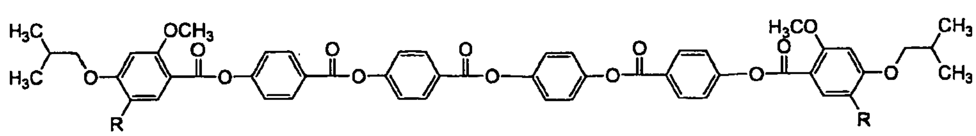

A-126; R=H
B-126; R=OCH3

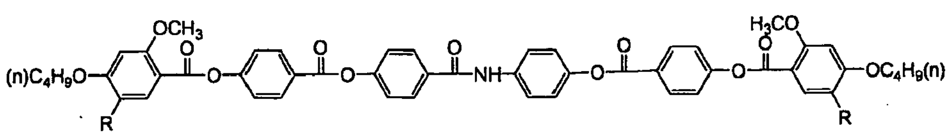

A-127; R=H
B-127; R=OCH3

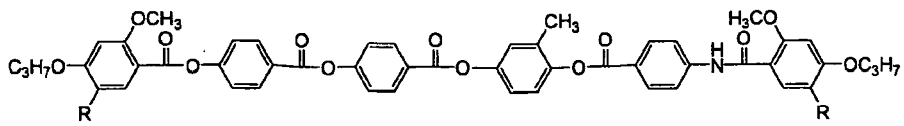

A-128; R=H
B-128; R=OCH3

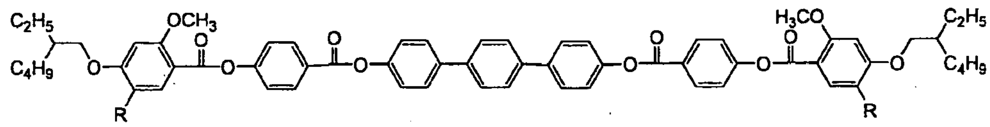

A-129; R=H
B-129; R=OCH3

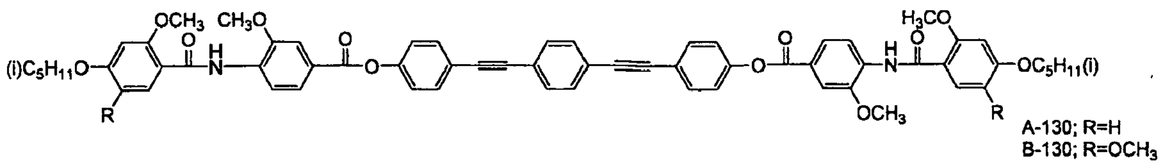

A-130; R=H
B-130; R=OCH3

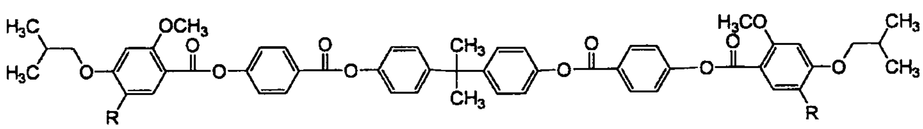

A-131; R=H
B-131; R=OCH3

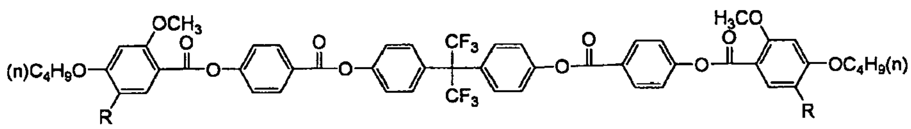

A-132; R=H
B-132; R=OCH3

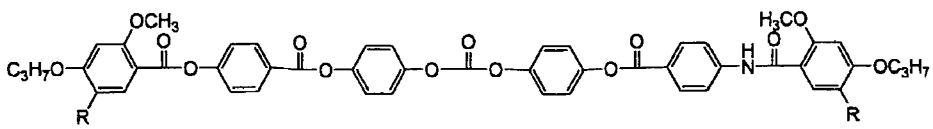

A-133; R=H
B-133; R=OCH3

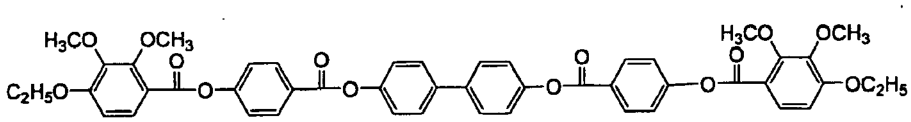

C-101

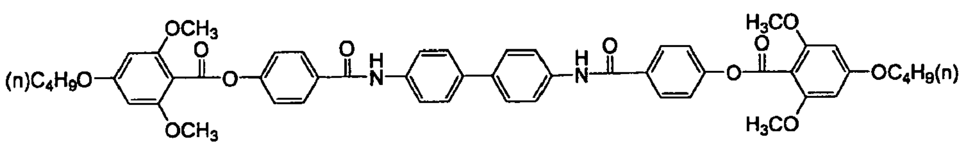

C-102

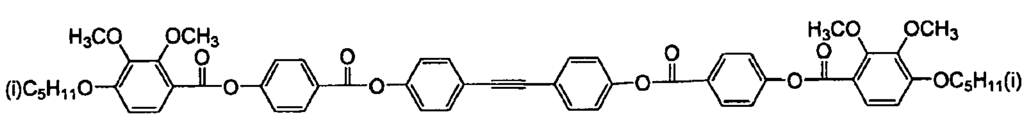

C-103

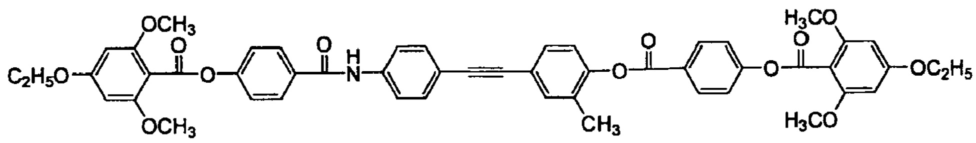

C-104

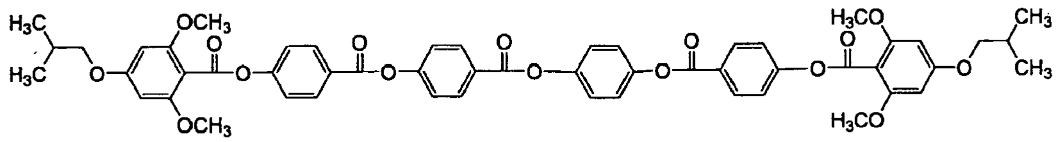

C-105

The compound represented by the formula (III) may be produced by a general esterification or a general amidation of a substituted benzoic acid, which may be synthesized previously, and a phenol derivative or a aniline derivative. The esterification or amidation may be carried out according to any method which can make an ester or amide bonding. For example, the compound may be produced as follows:

a substituted benzoic acid is converted into an acid halide, and, then, a condensation reaction of the acid halide and a phenol derivative or an aniline derivative is carried out; or
a dehydration condensation of a substituted benzoic acid and a phenol derivative or an aniline derivative is carried out in the presence of a condensation agent or catalyst.

The former method is preferred in terms of the production process.
Reaction solvent, which can be employed in the process of producing the compound represented by the formula (III), is preferably selected from the group consisting of hydrocarbon base solvents such as toluene and xylene; ether base solvents such as dimethylether, tetrahydrofuran and dioxane; ketone base solvents; ester base solvents; acetonitrile, dimethyl formamide and dimethylacetamide. One solvent or tow or more solvents may be employed. Among these, toluene, acetonitrile, dimethylformamide and dimethylacetamide are preferred.
The reaction temperature is preferably set within the range from 0 to 150 ˚C, more preferably from 0 to 100 ˚C, much more preferably from 0 to 90 ˚C, and especially preferably from 20 to 90 ˚C.
The reaction may be carried out with base or without base, the latter is preferred. Examples of the base include organic bases and inorganic bases, and organic bases such as pyridine and tertiary alkyl amine (e.g. triethyl amine and ethyl diisopropyl amine) are preferred.
The compound represented by the formula (V-A) or (V-B) can be produced according to any usual method. The compounds in which "n" is 4 may be produced as follows:

a reaction of a starting material having a following structure "A" with a derivative having a reactive site such as hydroxyl and amino is carried out to generate an intermediate B-2 shown below; a reaction of the intermediate B-2 with a compound "C" shown below to connect two molecules of the intermediate B-2 with a molecule of the compound "C" shown below; and then a compound represented by the formula (V-A) or (V-B) can be obtained.

The method to be employed for producing the compound is not limited to the above mentioned method.

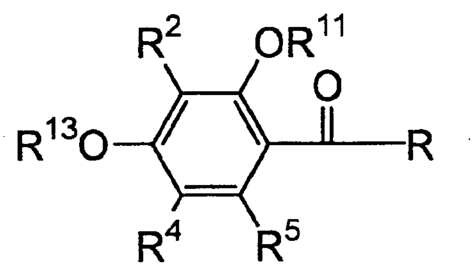

A

In the structure "A", R represents a reactive group such as hydroxyl and a halogen atom; $R^{11}$, $R^2$, $R^{13}$ and $R^5$ are same as described above; and $R^4$ represents a hydrogen atom or the above mentioned $OR^{14}$.

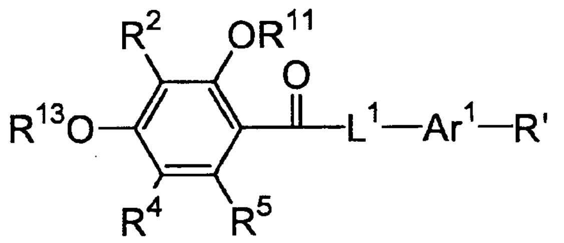

B

In the formula, R' represents a reactive group such as carboxyl; $R^{11}$, $R^2$, $R^{13}$, $R^4$, $R^5$, $Ar^1$ and $L^1$ are same as described above.

$$R—Ar^2-L^2—Ar^2—R' \qquad C$$

In the formula, R and R' represent a reactive group such as hydroxyl and amino; and $Ar^2$ and $L^2$ are defined as $Ar^1$ and $L^1$ are defined above.

The amount of the Rth enhancer is preferably from 0.1 to 30 mass %, more preferably from 1 to 25 mass % and much more preferably from 3 to 15 mass % with respect to the total mass of cellulose acylate.

When the cellulose acylate film is produced according to a solvent cast method, the Rth enhancer may be added to the dope. The addition of the Rth enhancer to the dope may be conducted any stage, and for example, a solution of the Rth enhancer may be prepared by dissolving it in an organic solvent such as alcohol, methylene chloride or dioxolane and then added to the dope; or the Rth enhancer may be added to the dope directly.

Examples of the Rth enhancer which can be used for producing the second optically anisotropic layer include the compounds represented by the formula (X) . The compound represented by the formula (X) is capable of enhancing Rth of which wavelength dependence is regular.

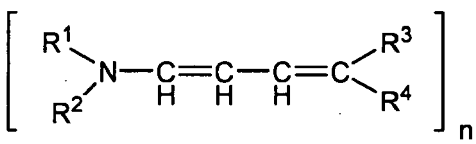

(X)

In the formula, n is an integer of 1 or 2. $R^1$ and $R^2$ independently represent a hydrogen atom, a $C_{1-20}$ alkyl group, or a $C_{6-20)}$ aryl group. $R^1$ and $R^2$ may be same or different from each other, provided at least one of them is not a hydrogen atom. And $R^1$ and $R^2$ may bind to each other, and, in such a case, they represent an atom group which is necessary to form a cyclic amino group. $R^3$ represents a carboxyl, $-COOR^5$, $-COR^5$, or $-SO_2R^5$; $R^4$ represents a carboxyl, $-COOR^6$, or $-COR^6$; and $R^5$ and $R^6$ independently represent a $C_{1-20}$ alkyl group or a $C_{6-20}$ aryl group, provided that they may bind to each other, and, in such a case, they represent an atom group which is necessary to form 1,3-dioxocyclohexane, barbituric acid, 1,2-diaza-3,3-dioxane cyclopentane or 2,4-diazo-1-alkoxy-3,3-dioxocyclohexane. When n is 2, at least one of $R^1$, $R^2$ and represents an alkylene group or an arylene group, and the compound may be a dimmer.

The $C_{1-20}$ alkyl group represented by $R^1$ or $R^2$ may have at least one substituent and at least one unsaturated bond therein. Examples of the alkyl group include methyl, ethyl, butyl, n-hexyl, cyclohexyl, n-decyl, n-dodecyl, n-octadecyl, eicosyl, methoxyethyl, ethoxypropyl, 2-ethylhexyl, hydroxyethyl, chloropropyl, N,N-diethylpropyl, cyanoethyl, phenethyl, pentyl, p-t-butylphenethyl, p-t-octylphenethyl, octylphenoxy ethyl, 3-(2,4-di-tert-amyl phenoxy)propyl, ethoxycarbonylmethyl, 2-(2-hydroxyethoxy)ethyl, and 2-furylethyl.

The $C_{6-20}$ aryl group represented by $R^1$ or $R^2$ may have at least one substituent. Examples of the aryl group include tolyl, phenyl, anisyl, mesityl, chlorophenyl, 2,4-di-tert-amyl phenyl and naphthyl. At least one of $R^1$ and $R^2$ is not a hydrogen atom. And they may bind to each other, and, in such a case, they represent an atom group which is necessary to form a cyclic amino group such as piperidino, morpholino, pyrrolidino, and piperazino).

In the formula, $R^3$ represents carboxyl, $-COOR^5$, $-COR^5$ or $-SO_2R^5$; and $R^4$ represents carboxyl, $-COOR^6$ or $-COR^6$. $R^5$ and $R^6$ independently an alkyl group or an aryl group, and the alkyl and aryl groups are defined as same as those represented by $R^1$ or $R^2$. $R^5$ and $R^6$ may bind to each other, and, in such a case, they represent an atom group which is necessary to form 1,3-dioxocyclohexane ring (e.g., dimedone, 1,3-dioxo-5,5-diethylcyclohexane), 1,3-diaza-2,4,6- trioxocyclohexane ring (e.g., barbituric acid, 1,3-dimethyl barbituric acid, 1-phenyl barbituric acid, 1-methyl-3-octyl barbituric acid, 1-ethyl-octyloxycarbonylethyl barbituric acid), 1,2-diaza-3,3-dioxane cyclopentane ring (e.g., 1,2-diaza-1,2-dimethyl-3,5-dioxocyclopentane, 1,2-diaza- 1,2-diphenyl-3,5-dioxocyclopentane), or 2,4-diazo-1-alkoxy-3,3-dioxocyclohexane ring (e.g., 2,4-diaza-1-ethoxy-4-ethyl-3,5-dioxocyclohexane, 2,4-diaza-1-ethoxy-4-(3-(2,4-di-tert-amylphenoxy)propyl)-3,5-dioxocyc lohexane). When n is 2, at least one of $R^1$, $R^2$ and represents an alkylene group or an arylene group, and the compound may be a dimmer.

Among the formula (X), the compounds represented by the formula (XI) are preferred.

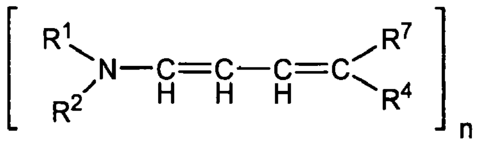

(XI)

In the formula, $R^1$, $R^2$ and $R^4$ are defined as same as those in the formula (X) respectively. $R^7$ represents $-COOR^6$ or $-SO_2R^6$ and $R^6$ is defined as same as it in the formula (X).

Examples of the compound represented by the formula (X) include, but are not limited to, those shown below.

Example X-1

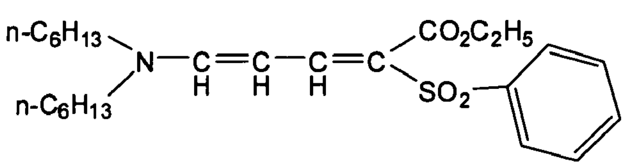

Example X-2

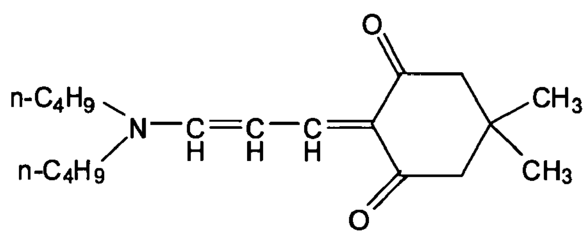

Example X-3

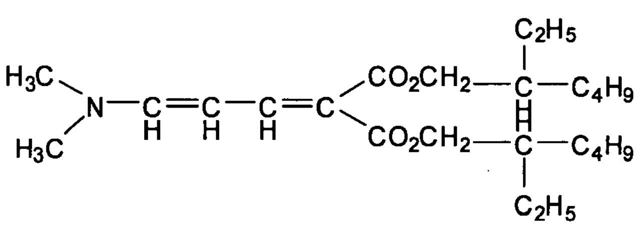

Example X-4

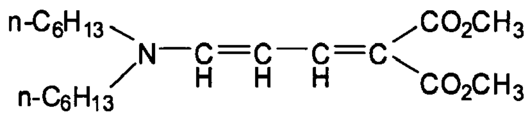

Example X-5

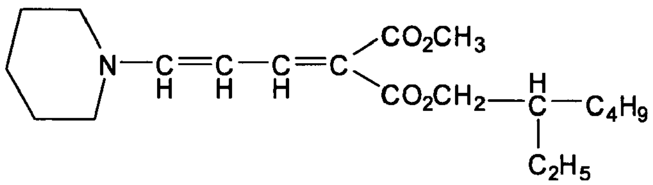

Example X-6

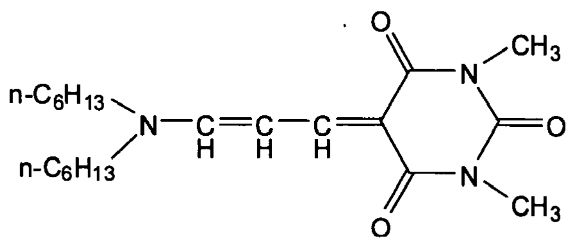

Example X-7

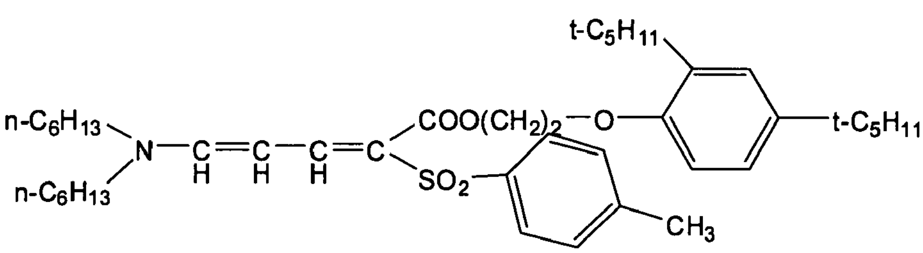

Example X-8

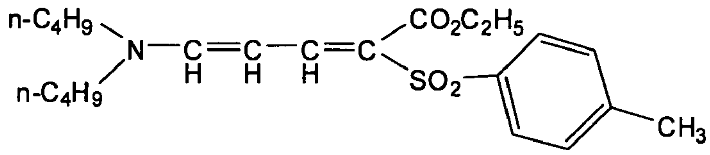

Example X-9

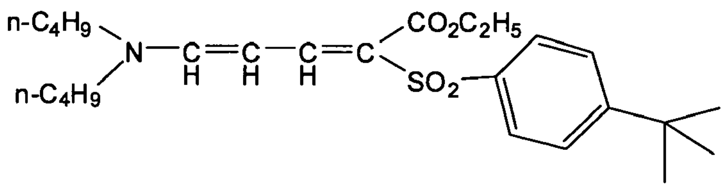

Example X-10

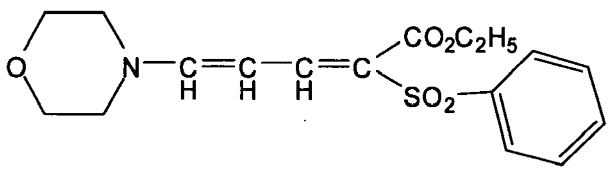

Example X-11

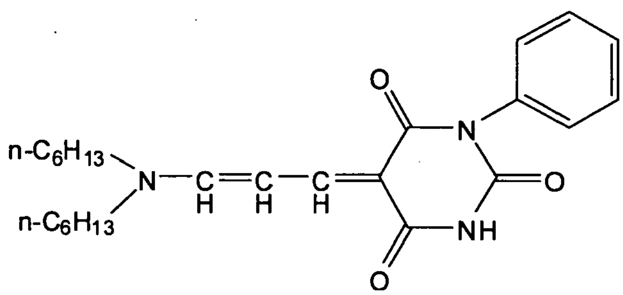

Example X-12

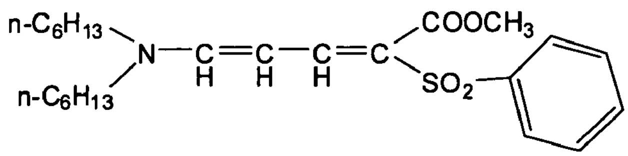

Example X-13

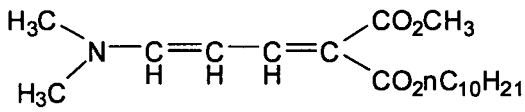

Example X-14

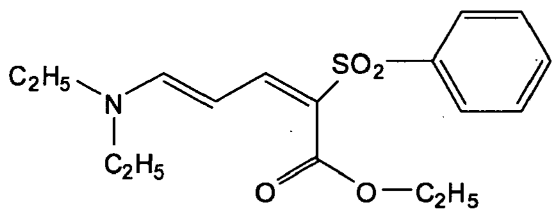

Example X-15

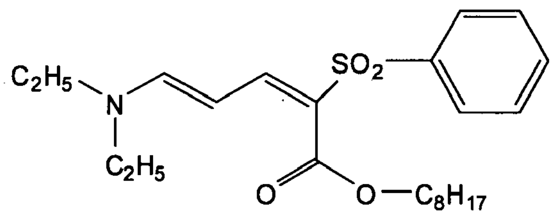

Example X-16

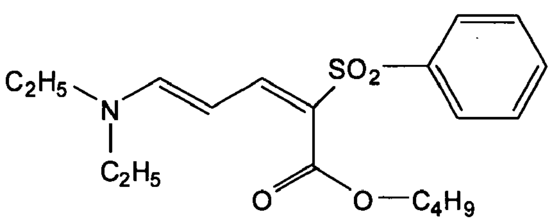

Example X-17

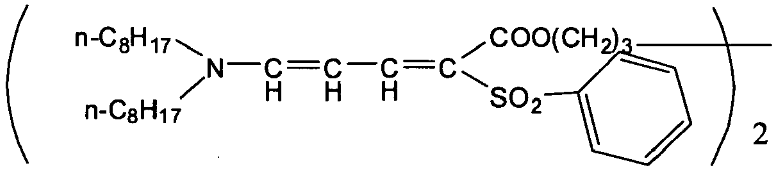

According to the invention, one species or any combinations of plural species of the compound represented by any one of formulae (I), (III) to (V) and (X) may be employed as the Rth enhancer. According to the invention, any combinations of two or more selected from the formulae (I), (III) to (V) and (X) may be also employed as the Rth enhancer.

The cellulose acylate film to be used as the second.optically anisotropic layer may comprise a UV absorbent. Some UV absorbents can function as an Rth enhancer. Examples of the UV absorbent include oxybenzophenone compounds, benzotriazole compounds, salicylate compounds, benzophenone compounds, cyanoacrylate compounds, and nickel complex compounds; and preferred are benzotriazole compounds causing little coloration. In addition, UV absorbents described in Japanese Laid-Open Patent Publication Nos. 10-182621 and 8-337574, and UV absorbent polymers described in Japanese Laid-Open Patent Publication No. 6-148430 are also preferably used herein. For the UV absorbent for the cellulose acylate film, preferred are those having an excellent ability to absorb UV rays having a wavelength of at most 370 nm, in terms of preventing degradation of polarizing elements and liquid crystals, and those not almost absorbing visible light having a wavelength of at least 400 nm in terms of the image display capability.

Examples of the benzotriazole-type UV absorbent usable in the invention are 2-(2'-hydroxy-5'- methylphenyl) benzotriazole, 2-(2'-hydroxy- 3',5'-di-tert-butylphenyl)benzotriazole, 2-(2'-hydroxy-3'-tert-butyl-5'-methylphenyl)benzotriazole, 2-(2'-hydroxy-3',5'-di-tert-butylphenyl)-5-chlorobenzotriazole, 2-(2'-hydroxy-3'-(3",4",5",6"-tetrahydrophthalimidomethyl)-5'-methylphenyl) benzotriazole, 2,2-methylenebis(4-(1,1,3,3-tetramethylbutyl)-6-(2H-benzotriazol-2-yl)phenol, 2-(2'-hydroxy-3'-tert-butyl-5'-methylphenyl)-5-chlorobenzotriazole, 2- (2H-benzotriazol-2-yl) -6- (linear or branched dodecyl) -4-methylphenol, a mixture of octyl-3-[3-tert-butyl-4-hydroxy-5-(chloro-2H-benzotriazol-2-yl)phenyl ]propionate and 2-ethylhexyl-3-[3-tert-butyl-4-hydroxy-5-(5-chloro-2H-benzotriazol-2-yl)phenyl]propionate, to which, however, the invention should not be limited. In addition, commercial products of TINUVIN 109, TINUVIN 171, TINUVIN 326 (all by Ciba Speciality Chemicals) are also preferably usable herein.

[Agent for controlling wavelength dispersion of retardation]

For producing a cellulose acylate film satisfying properties required for the second optically anisotropic layer, at least one UV absorbent may be employed. The UV absorbent can also function as an agent for controlling wavelength dispersion of retardation. Examples of the UV absorbent include oxybenzophenone compounds, benzotriazole compounds, salicylate compounds, benzophenone compounds, cyanoacrylate compounds, and nickel complex compounds; and preferred are benzotriazole compounds causing little coloration. In addition, UV absorbents described in Japanese Laid-Open Patent Publication Nos. 10-182621 and 8-337574, and UV absorbent polymers described in Japanese Laid-Open Patent Publication No. 6-148430 are also preferably used herein. For the UV absorbent for the cellulose acylate film, preferred are those having an excellent ability to absorb UV rays having a wavelength of at most 370 nm, in terms of preventing degradation of polarizing elements and liquid crystals, and those not almost absorbing visible light having a wavelength of at least 400 nm in terms of the image display capability.

[Plasticizer]

A plasticizer such as triphenyl phosphate or biphenyl phosphate may be added to the polymer film (preferably cellulose acylate film) to be used as the first or second optically anisotropic layer.

[Liquid Crystal Composition]

The second optically anisotropic layer may be formed of a liquid crystal composition or any combination of such a layer and a polymer film. The liquid crystal composition comprises at least one liquid crystal compound. Preferably, the liquid crystal compound is selected from discotic liquid crystals having a discotic molecular structure. Preferred examples of the discotic liquid crystal compound include those described in Japanese Laid-open Patent Publication No.

2001-27706.

Preferably, the liquid crystal composition is curable, and comprises a polymerizable ingredient to form a layer by polymerization. The liquid crystal compound it self may be polymerizable or another polymerizable monomer may be added to the composition, and the former is preferred. The curable liquid crystal composition may comprise, if necessary, various additives such as a polymerization initiator, an alignment controlling agent and a surfactant.

The second optically anisotropic layer may be prepared as follows. A curable liquid crystal composition is prepared as a coating liquid, is applied to a surface of a support or an alignment layer. After molecules of the liquid crystal compound, preferably discotic liquid crystal compound, are aligned in a preferred alignment state, irradiated with light and/or heat to start the polymerization, and fixed in the state. And, the layer is prepared. For preparing the layer exhibiting the predetermined properties, which are required for the second optically anisotropic layer, preferably discotic molecules are aligned in a homeotropic alignment state, in which the angle between the optical axis of the discotic plane and the layer plane is orthogonal, and then fixed in the state.

Generally, a layer formed of a curable liquid crystal composition is disposed on a support such as a polymer film. In such embodiments, birefringence of the support such as a polymer film may be utilized actively, and the combination of the layer and support as a whole may exhibit the properties which are required for the second optically anisotropic layer. On the other hand, a polymer film of which Re is nearly equal to 0, such as those described in Japanese Laid-open Patent publication No. 2005-138375, may be used as a support, and the layer formed of the curable liquid crystal composition may have properties which are required for the second optically anisotropic layer alone.

[Optical compensation film]

The first and second optically anisotropic layers may be built in a liquid-crystal display device as an optical compensatory film. As mentioned in the above, the optical film of to be used as the first optically anisotropic layer is preferably a cellulose acylate film, more preferably a cellulose acylate film comprising at least one Re enhancer. As also mentioned in the above, the optical film to be used as the second optically anisotropic layer is preferably a cellulose acylate film, more preferably a cellulose acylate film comprising at least one Rth enhancer. The thickness of the optical film to be used as the first or second optically anisotropic layer is preferably from 30 to 200 $\mu$m.

In general, in a large-panel display device, the contrast reduction and the color shift in the oblique direction are remarkable, and therefore the optical film to be used as the first and/or optically anisotropic layer is especially suitable for use in large-panel liquid-crystal display devices. In case where the optical film is used in large-panel liquid-crystal display devices, for example, it is shaped to have a film width of at least 1470 mm. As the case may be, the optical film may be produced as a long film in continuous production and wound up into a roll, and it may be cut into sheets having a size capable of being directly built in a liquid-crystal display device as it is; and the optical film to be used as the first optically anisotropic layer may have a form of such cut sheets. The film roll is stored and transported as it is, and when it is actually built in a liquid-crystal display device or when it is stuck to a polarizing element, then it is cut into a desired size. If desired, the long film may be stuck to a polarizing element of a polyvinyl alcohol produced as a long film like it, and then, when it is actually built in a liquid-crystal display device, it may be cut into a desired size. In one embodiemnt of a roll of the optical film to be used as the first and/or second optically anisotropic layer, the film having a length of at least 2500 m is wound up into a roll film.

[Polarizing plate]

According to the invention, the first and/or second optically-compensatory layer may be a protective film for the polarizing element. For example, a polarizer comprising a polarizing element and the above mentioned optical compensation film on one surface thereof may be combined with a liquid-crystal cell in such a manner that the optical compensation film is on the side of the liquid-crystal cell. The polarizer may be produced as a long film in a mode of continuous production, and may be wound up as a roll (for example, as a roll having a length of at least 2500 mm, or a roll having a length of at least 3900 m), and it may be cut into sheets having a size capable of being built in a liquid-crystal display device as it is. The polarizer of the invention may have a form of such cut sheets. For application to large-panel liquid-crystal display devices, the polarizer may have a width of at least 1470 mm, as so mentioned hereinabove.

FIG. 8A and FIG. 8B show schematic cross-sectional views of embodiments of the polarizer of the invention. The polarizer of FIG. 8A comprises a polarizing element 11 of a polyvinyl alcohol film dyed with iodine or dichroic dye; an optical film 14 of the invention disposed on one surface thereof as a protective film; and a protective film 16 disposed on the other surface thereof. In the optical film 14, the first optically-anisotropic layer satisfies the necessary optical characteristics. When the polarizer is built in a liquid-crystal display device, it is desirable that the optical film 14 is disposed on the side of the liquid-crystal cell therein.

The protective film 16 is disposed on the outer side, for which, therefore, a material of low moisture permeation is preferred from the viewpoint of the durability of the polarizer. Concretely, preferred is a film having a degree of moisture

permeation of at most 300 g/($m^2$·day), more preferably at most 100 g/($m^2$·day). Not specifically defined, the lowermost limit of the degree of moisture permeation of the film may be generally 10 g/($m^2$·day) or so. As the protective film having the characteristics, preferred is a norbornene polymer film, and a commercial product, ZEONOR film may be used. The moisture permeation of the film is measured at 40˚C and 60 % RH. Its details are described in JIS-0208.

Because of the reason that a film having a low degree of moisture permeation is poorly adhesive to a polarizing element, a protective film 16' for the polarizing element 11 may be additionally provided between the polarizing element 11 and the film 16 of low moisture permeation, as in FIG. 8B. For the protective film 16' , preferred is a cellulose acylate film.

Between the polarizing element 11 and the optically-compensatory film 14, an additional protective film may also be disposed, having a function of protecting the polarizing element; however, it is desirable that a film having a retardation of nearly 0, for example, the cellulose acylate film described in JPA No. 2005-138375 is used for the protective film of the type in order that the additional protective film would not lower the optical compensatory potency of the structure.

[Liquid-Crystal Display Device]

The invention is preferably employed in vertically-aligned mode (VA-mode) liquid-crystal display devices. One embodiment of the liquid-crystal display device of the invention is a VA-mode liquid-crystal display device, which comprises a VA-mode liquid-crystal cell and a pair of polarizers to sandwich it therebetween, and in which one polarizer is the polarizer of the invention. The other polarizer (hereinafter this is referred to as "second polarizer") to be combined with this polarizer (hereinafter this is referred to as "first polarizer") is, for example, a polarizer that comprises a polarizing element and a protective film disposed on one surface thereof and satisfying the optical characteristics necessary for the above-mentioned second optically-anisotropic layer. The protective film is preferably a layer that satisfies the optical characteristics necessary for the second optically-anisotropic layer and having a function of protecting the polarizing element. From these viewpoints, the above-mentioned first optically-anisotropic layer is preferably formed of a cellulose acylate film, more preferably a cellulose acylate film containing an Rth enhancer; and the above-mentioned second optically-anisotropic layer is preferably formed of a cellulose acylate film, more preferably a cellulose acylate film containing an Rth enhancer. The second optically-anisotropic layer may be formed of a curable liquid-crystal composition; and in this case, a polymer film such as a cellulose acylate film is disposed as a protective film, and on the polymer film serving as a support, the second optically-anisotropic layer of a curable liquid-crystal composition may be formed.

EXAMPLES

Paragraphs below will further specifically explain the present invention referring to Examples and Comparative Examples, without limiting the present invention. The lubricant compositions in Examples and Comparative Examples were evaluated according to the methods described below.

Example 1:

[Fabrication of Optically-Compensatory Films of the Invention (films for first optically-compensatory layer) 101 to 105, and 107 to 111]

The ingredients were mixed in the ratio indicated in Table 1, thereby preparing cellulose acylate solutions. Using a band caster, the cellulose acylate solution was cast, the resulting web was peeled from the band, and then stretched under the condition shown in Table 1. After stretched, the film was dried, thereby producing cellulose acylate films 101 to 105 and 107 to 111 having the thickness shown in Table 1.

[Fabrication of Comparative Optically-Compensatory Film (film for first optically-compensatory layer for comparison) 106]

A commercially-available norbornene polymer film, "ZEONOR" (by Nippon Zeon) was stretched under the condition shown in Table 1, thereby producing a norbornene film 106.

Thus fabricated, the films were analyzed for the three-dimensional birefringence thereof at a wavelength of 450 nm, 550 nm and 630 nm, using an automatic birefringence meter KOBRA-21ADH (by Oji Scientific Instruments) according to the method mentioned in the above, thereby obtaining the in-plane retardation Re and the thickness-direction retardation Rth derived from the data of Re at different tilt angles. Table 2 shows Re and Rth at different wavelengths, Nz at a wavelength of 550 nm, and the lowermost limit and the uppermost limit of the above-mentioned formula (3). As in Table 2 below, it is understandable that the films 101 to 105 and 107 to 111 are all optically-compensatory films having optical biaxial characteristics and reversed wavelength dispersion characteristics of Re and Rth necessary for the first optically-anisotropic layer; but the film 106 has regular wavelength dispersion characteristics of Re and Rth and is not an optically-compensatory film satisfying the characteristics necessary for the first optically-anisotropic layer.

Table 1

| Film Sample No. | 101 | 102 | 103 | 104 | 105 | 106 |
|---|---|---|---|---|---|---|
| Polymer material | cellulose acylate (Ac substitution degree 2.86) | cellulose acylate(Ac substitution degree 2.86) | cellulose acylate(Ac substitution degree 2.86) | cellulose acylate (Ac substitution degree 2.94) | cellulose acylate(Ac substitution degree 2.82) | norbornene based polymer (ZEONOR) |
| triphenyl phosphate (mass %) | 7% | 7% | 7% | 7% | 7% | - |
| biphenyl phosphate(mass %) | 5% | 5% | 5% | 5% | 5% | - |
| Retardation enhancer 1 (mass %) | 9% | 7% | 7% | 7% | 7% | - |
| Retardation enhancer 2 (mass %) | - | 2% | 2% | 2% | 1% | - |
| Retardation enhancer 3 (mass %) | - | - | - | - | - | - |
| Stretching process | 160℃ TD 20% stretching | 160℃ TD 20% stretching | 160℃ TD 20% stretching | 160℃ TD 25% stretching | 160℃ TD 20% stretching | 140℃ TD 30% stretching |
| thickness(μm) | 80 | 80 | 100 | 80 | 80 | 75 |

| Film Sample No. | 107 | 108 | 109 | 110 | 111 |
|---|---|---|---|---|---|
| Polymer material | cellulose acylate (Ac substitution degree 2.86) | cellulose acylate (Ac substitution degree 2.87) | cellulose acylate (Ac substitution degree 2.81) | cellulose acylate (Ac substitution degree 2.94) | cellulose acylate (Ac substitution degree 2.86) |
| triphenyl phosphate (mass %) | 7% | 7% | 7% | 4.3% | 4.3% |
| biphenyl phosphate(mass %) | 5% | 5% | 5% | 3% | 3% |
| Retardation enhancer 1 (mass %) | 9% | 6% | - | 6% | 6% |
| Retardation enhancer 2 (mass %) | 5% | 2% | 8% | - | - |
| Retardation enhancer 3 (mass %) | - | - | - | 5% | 5% |
| Stretching process | 160℃ TD 20% stretching | 150℃ TD 30% stretching | 140℃ TD 25% stretching | 160℃ TD 25% stretching | 160℃ TD 25% stretching |
| thickness(μm) | 100 | 68 | 81 | 60 | 55 |

Retardation Enhancer 1:

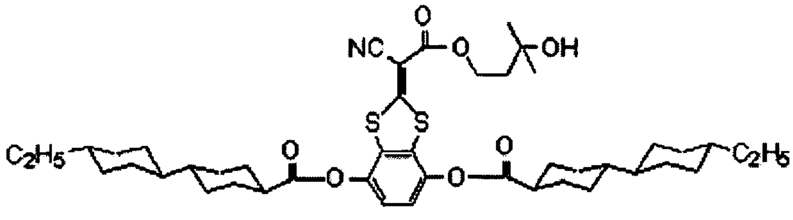

Retardation Enhancer 2:

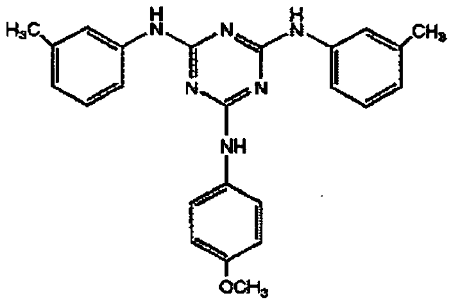

Retardation Enhancer 3:

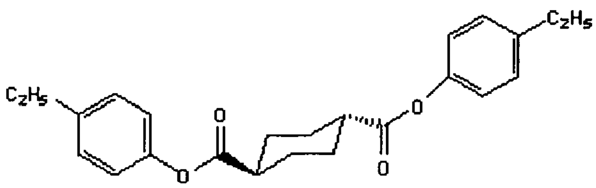

Table 2

| Film Sample No. | | 101 | 102 | 103 | 104 | 105 | 106 |
|---|---|---|---|---|---|---|---|
| Re(nm) | Wavelength 450nm | 82 | 90 | 102 | 98 | 63 | 105 |
| | Wavelength 550nm | 101 | 105 | 120 | 120 | 80 | 101 |
| | Wavelength 630nm | 115 | 109 | 125 | 126 | 90 | 100 |
| Rth(nm) | Wavelength 450nm | 103 | 99 | 113 | 85 | 140 | 127 |
| | Wavelength 550nm | 126 | 119 | 138 | 100 | 160 | 125 |
| | Wavelength 630nm | 144 | 126 | 146 | 106 | 171 | 123 |
| Nz value | | 1.75 | 1.63 | 1.65 | 1.33 | 2.5 | 1.74 |
| Relation (1) | -2.5×Re(550)+300 | 47.5 | 37.5 | 0 | 0 | 100 | 47.5 |
| | -2.5×Re(550)+500 | 247.5 | 237.5 | 200.0 | 200 | 300 | 247.5 |
| Relation (2) | -2.5×Re(450)+250 | 45.0 | 25.0 | -5.0 | 5.0 | 92.5 | -12.5 |
| | -2.5×Re(450)+450 | 245.0 | 225.0 | 195.0 | 205.0 | 292.5 | 187.5 |
| Relation (3) | -2.5×Re(630)+350 | 62.5 | 77.5 | 37.5 | 35.0 | 125.0 | 100.0 |
| | -2.5×Re(630)+550 | 262.5 | 277.5 | 237.5 | 235.0 | 325.0 | 300.0 |
| Remarks | | Invention | Invention | Invention | Invention | Invention | Comparative Example |

| Film Sample No. | | 107 | 108 | 109 | 110 | 111 |
|---|---|---|---|---|---|---|
| Re(nm) | Wavelength 450nm | 132 | 110 | 62 | 87 | 76 |
| | Wavelength 550nm | 150 | 135 | 59 | 101 | 92 |
| | Wavelength 630nm | 161 | 141 | 58 | 105 | 95 |
| Rth(nm) | Wavelength 450nm | 134 | 92 | 202 | 104 | 108 |
| | Wavelength 550nm | 150 | 110 | 194 | 123 | 130 |
| | Wavelength 630nm | 160 | 118 | 193 | 130 | 133 |
| Nz value | | 1.5 | 1.31 | 3.79 | 1.72 | 1.91 |
| Relation (1) | -2.5×Re(550)+300 | -75 | -37.5 | 152.5 | 47.5 | 70.0 |
| | -2.5×Re(550)+500 | 125 | 162.5 | 352.5 | 247.5 | 270.0 |
| Relation (2) | -2.5×Re(450)+250 | -80.0 | -25.0 | 95.0 | 32.5 | 60.0 |
| | -2.5×Re(450)+450 | 120.0 | 175.0 | 295.0 | 232.5 | 260.0 |
| Relation (3) | -2.5×Re(630)+350 | -52.5 | -2.5 | 205.0 | 87.5 | 112.5 |
| | -2.5×Re(630)+550 | 147.5 | 197.5 | 405.0 | 287.5 | 312.5 |
| Remarks | | Invention | Invention | Invention | Invention | Invention |

[Determination of Physical Properties of Films]

(Haze)

A sample of the film having a size of 40 m × 80 mm was tested at 25°C and 60 % RH, using a haze meter (HGM-2DP, by Suga Test Instruments) according to JIS K-7136.

(Transmittance)

A sample of the film having a size of 13 m × 40 mm was tested at 25°C and 60 % RH, using a spectrophotometer (U-3210, by Hitachi), to measure its transmittance at a wavelength of 380 nm and 430 nm.

(Modulus of Elasticity, Elongation at Break)

The modulus of elasticity, the elongation at break and the strength at break of the film were measured as follows: A film sample of 10 mm × 150 mm was conditioned at 25°C and 60 % RH for 2 hours or more, and then, using a tensile tester (Strograph R2, by Toyo Seiki), this was pulled at a pulling rate of 10 mm/min. The chuck distance was 50 mm, and the temperature was 25°C.

(Friction Coefficient)

According to JIS-K-7125 (1987), film pieces were cut out so that their surface and back could be a contact face, then a weight of 200 g was put on it, and the weight was horizontally pulled at a moving speed of 100 mm/min under the condition of a contact area of 80 mm × 200 mm. The maximum load before the weight moved (Fs) and the mean load while the weight was moving (Fd) were measured, and the static friction coefficient and the kinematic friction coefficient (μm) were obtained according to the following formulae:

$$\text{Static Friction Coefficient} = \text{Fs (gf)/weight of the weight (gf)},$$

$$\text{Kinematic Friction Coefficient} = \text{Fd (gf)/weight of the weight (gf)}.$$

(Curl)

The film was cut by 50 mm in the transverse direction and by 2 mm in the machine direction, and the resulting piece was conditioned at a predetermined humidity for 24 hours. Using a curvature scale, the curl degree of the film was measured. The curl value is represented by 1/R.

(Determination of Additive Concentration Distribution in the Thickness Direction of Film)

A cross section of the unstretched film, parallel to the xz plane of the film, was divided into 5 portions from the side of the support used in film formation to the air interface side; and each portion was analyzed using a time-of-flight secondary ion mass spectrometer (TOF-SIMS). The intensity ratio of the cellulose acylate decomposition product-derived positive ion peak, m/Z=109 ($C_6H_5O_2^+$), to the additive ion peak (molecule $+H^+$) was obtained. The test portions were B1, B2, CT, A2 and A1 from the side nearer to the side of the support used in film formation. These portions are at regular intervals in the thickness direction of the film. The intensity ratio to the intensity in CT is shown in the Table below.

(Glass Transition Temperature)

A film sample of 5 mm × 30 mm was conditioned at 25˚C and 60 % RH for 2 hours or more, and then this was tested with a kinematic viscoelasticity meter (Vibron DVA-225 (by IT Keisoku Seigyo KK). The chuck distance was 20 mm, the heating speed was 2˚C/min, the test temperature range was from 30˚C to 200˚C, and the frequency was 1 Hz. A storage elastic modulus is taken on the vertical axis as a logarithmic axis, and a temperature (˚C) is taken on the horizontal axis as a linear axis; and on the graph, the rapid decrease in the storage elastic modulus shown when the storage elastic modulus transfers from the solid region to the glass transition region is drawn as a line 1, and it is drawn as a line 2 in the glass transition region.

The point of intersection of the line 1 and the line 2 indicates a temperature at which the storage elastic modulus of the film rapidly decreases during heating and the film begins to soften, or that is, a temperature at which the film begins to transfer to the glass transition region; and this is the glass transition temperature Tg (kinematic viscoelasticity) of the film.

(Thermal Expansion Coefficient)

The thermal expansion coefficient of the film was determined as follows: Using TA Instruments' TMA2940, the film was heated from 30˚C up to 80˚C at a heating rate of 3˚C/min under a load of 0.04 N, and the dimensional change of the film per ˚C was measured.

(Dimensional Change)

Two transparent film samples of 30 mm × 120 mm were prepared, and conditioned at 25˚C and 60 % RH for 24 hours, and using a pin gauge (EF-PH by Mitsutoyo), 6 mmϕ holes were formed at both edges of the samples at intervals of 100 mm. The original punch distance was measured, L0. One sample was treated in a temperature & humidity chamber, ESPEC's PR-45, at 60˚C and 90 % RH for 24 hours, and the punch distance was measured, L1. The other sample was treated in a constant temperature oven, Yamato's DN64, at 80˚C and 10 % RH for 24 hours, and the punch distance was measured, L2. The dimensional change in the invention is expressed as a value read to the minimum

scale, 1/1000 mm in every distance measurement. According to the following formulae, the dimensional change under each condition was obtained.

$$\text{Dimensional change at 60°C and 90 \% RH} = \{(L0 - L1)/L0\} \times 100,$$

$$\text{Dimensional change at 80°C and 10 \% RH} = \{(L0 - L2)/L0\} \times 100.$$

(Film Thickness Fluctuation)

The maximum thickness difference of the film (P-V value) and the RMS value of the film were measured, using Fuj inon' s stripe analyzer, FX-03. The area for analysis was within a range of $\phi$ = 60 mm.

(Alignment Angle Fluctuation)

The alignment angle distribution of the film was determined with OPTIPRO (XY scanning stage, halogen lamp light + 550 nm interference filter). The test area was 60 mm × 60 mm, and the sample was analyzed at intervals of 4 mm, using a 3 mm$\phi$ beam.

(Photoelasticity Coefficient)

A tensile stress was applied to a film sample of 12 mm × 120 m in the major axis direction thereof, and the retardation of the film under the condition was measured with an ellipsometer (M150, by Nippon Bunko). From the retardation change relative to the stress, the photoelasticity coefficient of the sample was computed.

Photoelasticity Coefficient = retardation change/stress change.

The data of the physical properties of the produced films 104, 108 and 109 are shown in Table 3.

Table 3

| items | | Film 104 | Film 108 | Film 109 |
|---|---|---|---|---|
| Haze (%) | | 0.32 | 0.45 | 0.96 |
| Transmittance(%) | 380nm | less than 0.1 | 0.1 | 91 |
| | 430nm | 91 | 91 | 91 |
| Modulus of Elasticity (Mpa) | MD | 3490 | 3450 | 4080 |
| | TD | 5200 | 5400 | 4800 |
| Elongation at Break (%) | MD | 28 | 30 | 17 |
| | TD | 8 | 7 | 12 |
| Kinematic Friction Coefficient | | 0.92 | 0.78 | 0.63 |
| Static Friction Coefficient | | 0.78 | 0.68 | 0.58 |
| Curl(TD) | 25°C10%RH | -0.65 | -1.1 | 1.85 |
| | 25°C80%RH | 0 | -0.1 | -1.00 |
| Distribution* in the thickness direction of Retardation enhancer 1 | B1 | 75 | 85 | - |
| | B2 | 85 | 90 | - |
| | A2 | 125 | 110 | - |
| | A1 | 150 | 119 | - |

(continued)

| items | | | Film 104 | Film 108 | Film 109 |
|---|---|---|---|---|---|
| Distribution* in the thickness direction of Retardation enhancer 2 | B1 | | 105 | 101 | 97 |
| | B2 | | 102 | 100 | 99 |
| | A2 | | 100 | 100 | 100 |
| | A1 | | 102 | 103 | 103 |
| Glass Transition Temperature (˚C) | MD | | 154 | 150 | 135 |
| | TD | | 157 | 150 | 138 |
| Thermal Expansion Coefficient (ppm/˚C) | MD | | 55 | 60 | 65 |
| | TD | | 25 | 20 | 45 |
| Dimensional Change (%) | 80˚C10%RH24hs | MD | -0.01 | -0.02 | -0.02 |
| | | TD | -0.01 | -0.01 | -0.01 |
| | 60˚C90%RH24hs | MD | 0.05 | 0 | -0.02 |
| | | TD | -0.04 | -0.04 | 0.03 |
| Film Thickness Fluctuation | P-V value | | 0.4 | 0.3 | 1 |
| | RMS value | | 0.05 | 0.05 | 0.12 |
| Angle of slow axis(˚) | | | 0.3 | 0.2 | 0.6 |
| Photoelasticity Coefficient ($10^{-13}cm^2/N$) | MD | | 16 | 17 | 18 |
| | TD | | 11 | 10 | 17 |
| * ratio to CT(%) | | | | | |

[Fabrication of Polarizers 101 to 105, and 107 to 111 of the Invention]

The optically-compensatory films (films for first optically-anisotropic layer) produced in the above were processed for alkali saponification on their surfaces. Concretely, the film was dipped in an aqueous 1.5 N sodium hydroxide solution at 55˚C for 2 minutes, then washed in a water bath at room temperature, and then neutralized with 0.1 N sulfuric acid at 30˚C. Again this was washed in a water bath at room temperature, and then dried with hot air at 100˚C. Next, a polyvinyl alcohol film roll having a thickness of 80 μm was continuously stretched in an aqueous iodine solution by 5 times, and dried to prepare a polarizing film having a thickness of 20 μm. The above alkali-saponified polymer film and FUJITAC TD80UL (by FUJIFILM) alkali-saponified in the same manner were prepared; and using an aqueous 3 % polyvinyl alcohol (Kuraray's PVA-117H) solution, these were stuck together with the polarizing film in such a manner that their saponified surfaces could be on the side of the polarizing film, thereby obtaining polarizers 101 to 105 and 107 to 111, in which the optically-compensatory film (first optically-anisotropic layer) and TD80UL could be protective films for the polarizing film. In this, the films were so stuck together that the direction MD of the optically-compensatory film and the slow axis of TD80UL could be parallel to the absorption axis of the polarizing film.

[Fabrication of Comparative Polarizer 106]

The surface of the optically-compensatory film 106 was hydrophilicated, using a corona discharger (by Kasuga Electric) under a condition of 12 W·min/$m^2$. 10 parts of a polyurethane urea (Mitsui Takeda Chemical's Takelac XW-74-C154) and 1 part of an isocyanate-type crosslinking agent (Mitsui Takeda Chemical's Takenate WD-725) were dissolved in water, thereby preparing solution having a controlled solid content of 20 %. This was used as an adhesive.

The above adhesive solution was applied to the surface-treated optically-compensatory film 106, and then this was stuck to a saponified FUJITAC TD80UL (by FUJIFILM) with a polarizing element sandwiched therebetween, and cured in an oven at 40˚C for 72 hours, thereby producing a polarizer 106.

[Fabrication of Films 201 to 205, and 210 to 213 for second optically-compensatory film]

The ingredients were mixed in the ratio indicated in Table 4 below, thereby preparing cellulose acylate solutions.

Using a band caster, the cellulose acylate solution was cast, the resulting web was peeled from the band, and then stretched under. In Table 1, TD means a direction perpendicular to the machine direction. After stretched, the film was dried, thereby producing cellulose acylate films 201 to 205 and 210.

[Films 206 to 208 for second optically-anisotropic layer]

Commercial products, TD80UL (by FUJIFILM), TF80UL (by FUJIFILM) and TVD80SLD (by FUJIFILM) were used as polymer films 206 to 208 for second optically-anisotropic layer.

The produced films were analyzed for the three-dimensional birefringence thereof at a wavelength of 450 nm, 550 nm and 630 nm, using an automatic birefringence meter KOBRA-21ADH (by Oji Scientific Instruments) according to the method mentioned in the above, thereby obtaining the in-plane retardation Re and the thickness-direction retardation Rth derived from the data of Re at different tilt angles. Table 5 below shows Re and Rth at different wavelengths.

Table 4

| Film Sample No. | 201 | 202 | 203 | 204 |
|---|---|---|---|---|
| Polymer material | cellulose acylate (Ac substitution degree 2.92) | cellulose acylate (Ac substitution degree 2.82) | cellulose acylate (Ac substitution degree 2.86) | cellulose acylate (Ac substitution degree 2.86) |
| triphenyl phosphate (mass %) | 7% | 7% | 7% | 7% |
| biphenyl phosphate (mass %) | 5% | 5% | 5% | 5% |
| Rth reducer (mass %) | - | - | - | - |
| Retardation enhancer a (mass %) | 6% | - | - | 6% |
| Retardation enhancer b (mass %) | - | 2% | - | - |
| Retardation enhancer c (mass %) | - | - | - | - |
| Retardation enhancer 2 (mass %) | - | - | 2% | - |
| film thickness (μm) | 80 | 80 | 80 | 80 |

contd.

| Film Sample No. | 205 | 206 | 207 | 208 |
|---|---|---|---|---|
| Polymer material | cellulose acylate (Ac substitution degree 2.92) | commercially-available cellulose acylate film TD80UL (produced by FUJIFILM) | commercially-available cellulose acylate film TF80UL (produced by FUJIFIL) | commercially-available cellulose acylate film TVD80SL (produced by FUJIFIL) |
| triphenyl phosphate (mass %) | - | | | |
| biphenyl phosphate (mass %) | - | | | |
| Rth reducer (mass %) | 5% | | | |
| Retardation enhancer a (mass %) | 6% | | | |
| Retardation enhancer b (mass %) | - | | | |
| Retardation enhancer c (mass %) | - | | | |
| Retardation enhancer 2 (mass %) | - | | | |
| film thickness (μm) | 80 | 79 | 80 | 80 |

contd.

| Film Sample No. | 210 | 211 | 212 | 213 |
|---|---|---|---|---|
| Polymer material | cellulose acylate (Ac substitution degree 2.95) | cellulose acylate (Ac substitution degree 2.86) | cellulose acylate (Ac substitution degree 2.94) | cellulose acylate (Ac substitution degree 2.94) |
| triphenyl phosphate (mass %) | - | 7% | 4.5% | 4.5% |
| biphenyl phosphate (mass %) | - | 5% | 3% | 3% |
| Rth reducer (mass %) | 11% | - | - | - |
| Retardation enhancer a (mass %) | - | - | - | - |
| Retardation enhancer b (mass %) | - | - | - | - |
| Retardation enhancer c (mass %) | - | - | 2% | 3% |
| Retardation enhancer 2 (mass %) | 8% | 7% | 2.7% | 4% |
| film thickness (μm) | 75 | 42 | 55 | 55 |

Rth Reducer

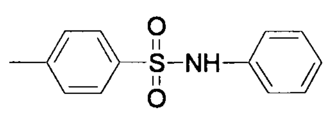

Retardation Enhancer a

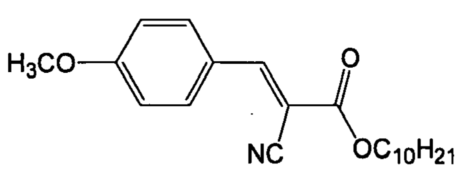

Retardation Enhancer b

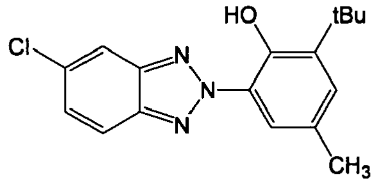

Retardation Enhancer c

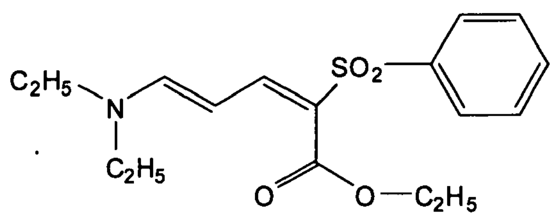

[Fabrication of Film 214 for second optically-anisotropic layer]

<Fabrication of Cellulose Acylate Film (support 1)>

(Preparation of Cellulose Acylate Solution A)

The following composition was put into a mixing tank, and stirred to dissolve the ingredients, thereby preparing a cellulose acylate solution A.

Composition of Cellulose Acylate Solution A:

| | |
|---|---|
| Cellulose Acetate having a degree of acetyl substitution 2.94 | 100.0 mas.pts. |
| Methylene Chloride (first solvent) | 402.0 mas.pts. |
| Methanol (second solvent) | 60.0 mas.pts. |

(Preparation of Mat Agent Solution)

20 parts by mass of silica particles having a mean particle size of 16 nm (AEROSIL R972, by Nippon Aerosil) and 80 parts by mass of methanol were well stirred and mixed for 30 minutes to prepare a silica particle dispersion. The dispersion was put into a disperser along with the following composition, and further stirred for 30 minutes or more to dissolve the ingredients, thereby preparing a mat agent solution.

Composition of Mat Agent Solution:

| | |
|---|---|
| Dispersion of Silica Particles having a mean particle size of 16 nm | 10.0 mas.pts. |
| Methylene Chloride (first solvent) | 76.3 mas.pts. |
| Methanol (second solvent) | 3.4 mas.pts. |

(continued)

| | |
|---|---|
| Cellulose Acylate Solution A | 10.3 mas.pts. |

(Preparation of Additive Solution)

The following composition was put into a mixing tank, and stirred under heat to dissolve the ingredients, thereby preparing an additive solution.

Composition of Additive Solution:

| | |
|---|---|
| Retardation Reducer mentioned below | 49.3 mas.pts. |
| Wavelength Dispersion Characteristics-Controlling Agent mentioned below | 4.9 mas.pts. |
| Methylene Chloride (first solvent) | 58.4 mas.pts. |
| Methanol (second solvent) | 8.7 mas.pts. |
| Cellulose Acylate Solution D | 12.8 mas.pts. |

Retardation Reducer

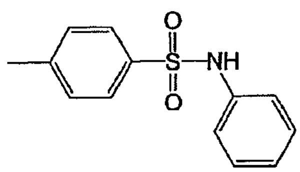

Wavelength Dispersion Characteristics-Controlling Agent

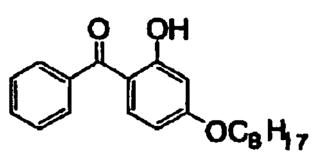

(Fabrication of Cellulose Acetate Film)

94.6 parts by mass of the above cellulose acylate solution A, 1.3 parts by mass of the mat agent solution, and 4.1 parts by mass of the additive solution were mixed, after separately filtered, and then cast using a band caster. In the above compositions, the ratio by mass of the Rth reducer and the wavelength dispersion characteristics-controlling agent to the cellulose acetate was 12 % and 1.2 %, respectively. The film having a residual solvent content of 30 % was peeled away from the band, and dried at 140˚C for 40 minutes, thereby producing a long cellulose acylate film (support 1) having a thickness of 80 μm. The in-plane retardation (Re) of the obtained film was 1 nm; and the thickness-direction retardation (Rth) thereof was 3 nm.

|Re(400)-Re(700)| was 4 nm; and |Rth(400)-Rth(700)| was 12 nm.

(Fabrication of Alignment Film)

The surface of the support 1 was saponified, and, using a wire bar coater, a coating liquid for alignment film having the composition mentioned below was applied onto the saponified surface in an amount of 20 ml/$m^2$. This was dried with hot air at 60°C for 60 seconds, and then with hot air at 100°C for 120 seconds, thereby forming a film. Next, the formed film was rubbed in the direction parallel to the slow axis direction of the film, thereby producing an alignment film.

Composition of Coating Liquid for Alignment Film:

| | |
|---|---|
| Modified Polyvinyl Alcohol mentioned below | 10 mas.pts. |
| Water | 371 mas.pts. |
| Methanol | 119 mas.pts. |
| Glutaraldehyde | 0.5 mas.pts. |
| Compound B | 0.2 mas.pts. |

(Formation of Optically-Anisotropic Layer)

Next, a coating liquid for optically-anisotropic layer having the composition mentioned below was applied onto it, using a wire bar, in such a manner that Rth in the thickness direction of the film after cured could be 100 nm.

| | |
|---|---|
| Discotic Liquid-Crystal Compound mentioned below | 1.8 g |
| Ethyleneoxide-Modified Trimethylolpropane Triacrylate (V#360, by Osaka Organic Chemistry) | 0.2 g |
| Photopolymerization Initiator (Irgacure 907, by Ciba-Geigy) | 0.06 g |
| Sensitizer (Kayacure DETX, by Nippon Kayaku) | 0.02 g |
| Fluoropolymer (Compound A mentioned below) | 0.01 g |
| Methyl Ethyl Ketone | 3.9 g |

This was attached to a metal frame and heated in a thermostat at 125°C for 3 minutes, thereby aligning the discotic liquid-crystal compound therein. Next, using a high-pressure mercury lamp of 120 W/cm, this was exposed to UV for 30 seconds to crosslink the discotic liquid-crystal compound. The temperature in UV curing was 80°C, and a retardation film was thus produced. The thickness of the optically-anisotropic layer was 1.4 μm. Next, this was left cooled to room temperature. In that manner, a film 214 for second optically-anisotropic layer was fabricated. The optical characteristics of this film and other films are shown in Table 5 below.

Discotic Liquid-Crystal Compound

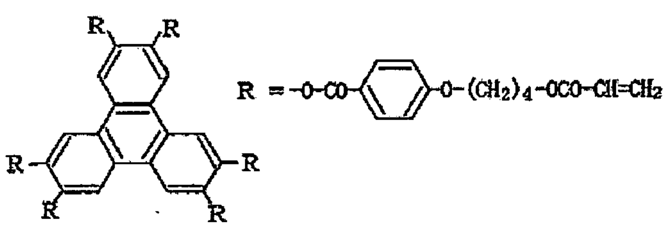

Compound A

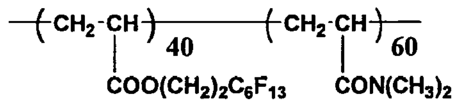

Table 5

| Film Sample No. | | 201 | 202 | 203 | 204 | 205 | 206 | 207 | 208 |
|---|---|---|---|---|---|---|---|---|---|
| Re(nm) | Wavelength 450nm | 6 | 5 | 6 | 4 | 3 | -3 | 1 | 4 |
| | Wavelength 550nm | 5 | 5 | 4 | 4 | 2 | 2 | 1 | 8 |
| | Wavelength 630nm | 4 | 4 | 4 | 2 | 2 | 4 | 2 | 10 |
| Rth(nm) | Wavelength 450nm | 125 | 103 | 100 | 130 | 90 | 34 | 42 | 77 |
| | Wavelength 550nm | 100 | 100 | 100 | 120 | 85 | 42 | 48 | 82 |
| | Wavelength 630nm | 95 | 98 | 100 | 115 | 83 | 45 | 51 | 86 |
| \|Rth(550)\|/\|Re(550)\| | | 20.0 | 20.0 | 25.0 | 30.0 | 42.5 | 26.1 | 37.2 | 10.8 |

| Film Sample No. | | 210 | 211 | 212 | 213 | 214 |
|---|---|---|---|---|---|---|
| Re(nm) | Wavelength 450nm | 3 | 4 | 6 | 5 | 3 |
| | Wavelength 550nm | 2 | 4 | 5 | 5 | 2 |
| | Wavelength 630nm | 2 | 4 | 5 | 4 | 2 |
| Rth(nm) | Wavelength 450nm | 103 | 102 | 97 | 125 | 114 |
| | Wavelength 550nm | 95 | 99 | 82 | 104 | 102 |
| | Wavelength 630nm | 93 | 98 | 80 | 100 | 96 |
| \|Rth(550)\|/\|Re(550)\| | | 47.5 | 24.8 | 16.4 | 20.8 | 51.0 |

[Fabrication of Polarizers 201 to 208, and 210 to 214]

The polymer films (films for second optically-anisotropic layer) fabricated in the manner as above were processed for alkali saponification on their surfaces. Concretely, the film was dipped in an aqueous 1.5 N sodium hydroxide solution at 55°C for 2 minutes, then washed in a water bath at room temperature, and then neutralized with 0.1 N sulfuric acid at 30°C. Again this was washed in a water bath at room temperature, and then dried with hot air at 100°C. Next, a polyvinyl alcohol film roll having a thickness of 80 μm was continuously stretched in an aqueous iodine solution by 5 times, and dried to prepare a polarizing film having a thickness of 20 μm. The above alkali-saponified polymer film and FUJITAC TD80UL (by FUJIFILM) alkali-saponified in the same manner were prepared; and using an aqueous 3 % polyvinyl alcohol (Kuraray's PVA-117H) solution, these were stuck together with the polarizing film in such a manner that their saponified surfaces could be on the side of the polarizing film, thereby producing polarizers 201 to 208 and 210 to 214, in which the polymer film (second optically-anisotropic layer) and TD80UL could be protective films for the polarizing film. In these, the films were so stuck together that the direction MD of the polymer film and TD80UL could be parallel to the absorption axis of the polarizing film.

[Construction of Liquid-Crystal Display Devices 001 to 022]

In a VA-mode liquid-crystal TV (LC37-GE2, by Sharp), the polarizer and the retardation plate on both the top and the back of the panel were peeled away, and the liquid-crystal cell was thus taken out of the device and used herein. Like the constitution of FIG. 1, any of the polarizers 101 to 111 was used as the polarizing element 11 and the first optically-anisotropic layer 14; the above VA liquid-crystal cell was used as the liquid-crystal cell 13; and any of the polarizers 201 to 208 and 210 to 214 was used as the polarizing element 12 and the second optically-anisotropic layer 15; and as combined in the manner shown in Table 6 below, these were laminated with an adhesive, thereby constructing liquid-crystal display devices. In these, the members were laminated as follows: In the devices comprising the polarizer 101 to 111, the optically-compensatory film 101 to 111 was made to be on the side of the liquid-crystal cell 13; and in the devices with the polarizer 201 to 208 and 210 to 214, the film 201 to 208 and 210 to 214 was made to be on the side of the liquid-crystal cell 13.

The members were so laminated that the slow axis of the optically-compensatory film 101 to 111 could be

perpendicular to the absorption axis of the polarizer 101.

[Evaluation of Liquid-Crystal Display Devices 001 to 022]

(Evaluation of Color Shift and Viewing Angle to Panel)

In the VA-mode liquid-crystal display devices 001 to 022 constructed in the above, a backlight was set on the side of the polarizing element 11 in FIG. 1 (or that is, on the side of the polarizer 101 to 109) ; and the devices were tested for the brightness and the color in the black state and in the white state, in a dark room using a contrast tester (EZ-Contrast XL88, by ELDIM), and the color shift and the contrast ratio in the black state were calculated.

(Black Color Shift in polar angle direction)

In the black state, the viewing angle is tilted from the normal direction of the liquid-crystal cell toward the center line direction of the transmission axis of the pair of polarizers (azimuth angle of 45 degrees), and in that condition, it is desirable that the color shift $\Delta x\theta$ and $\Delta y\theta$ always satisfy the following numerical formulae (II) and (III) within a polar angle of from 0 to 80 degrees:

$$\text{(II):} \quad 0 \leq \Delta x\theta \leq 0.1,$$

$$\text{(III):} \quad 0 \leq \Delta y\theta \leq 0.1,$$

[in the formulae, $\Delta x\theta = x\theta - x\theta0$, $\Delta y\theta = y\theta - y\theta0$; ($x\theta0$, $y\theta0$) is the chromaticity as measured in the normal direction of the liquid-crystal cell in the black state; ($x\theta$, $y\theta$) is the chromaticity as measured in the direction in which the viewing angle is tilted from the normal direction of the liquid-crystal cell toward the center line direction of the transmission axis of the pair of polarizers in the black state].

(Black Color Shift in azimuth angle direction)

When the viewing angle is turned down by 60 degrees from the normal direction of the liquid-crystal cell toward the absorption axis direction of the polarizer on the viewing side and when the device is tested for the chromaticity as rotated by 360 degrees around the normal line as the center starting from the above-mentioned direction as the base point, it is also desirable that the color shift $\Delta x\phi$ and $\Delta y\phi$ always satisfy the following formulae (IV) and (V) within the azimuth angle range of from 0 degree to 360 degrees:

$$\text{(IV):} \quad -0.02 \leq \Delta x\phi \leq 0.1,$$

$$\text{(V):} \quad -0.02 \leq \Delta y\phi \leq 0.1,$$

[in the formulae, $\Delta x\phi = x\phi - x\phi0$, $\Delta y\phi = y\phi - y\phi0$; ($x\phi0$, $y\phi0$) is the chromaticity as measured by tilting the viewing angle by 60 degrees from the normal direction of the liquid-crystal cell toward the absorption axis direction of the polarizer on the viewing side in the black state; ($x\phi$, $y\phi$) is the chromaticity as measured in the direction of an azimuth angle $\phi$ around the normal direction as the center, by tilting the viewing angle by 60 degrees from the normal direction of the liquid-crystal cell toward the absorption axis direction of the polarizer on the viewing side in the black state].

(Evaluation of Viewing Angle)

When a contrast ratio at an azimuth angle of 45 degrees and a polar angle of 60 degree ($CR@\phi = 45/\Theta = 60$) is larger, it means that the viewing angle is larger.

The results are shown in Table 6 below.

Table 6

| LCD No. | 001 | 002 | 003 | 004 | 005 | 006 |
|---|---|---|---|---|---|---|
| Polarizer disposed at displaying plane side No. | 201 | 202 | 203 | 201 | 201 | 204 |
| Polarizer disposed at backlight side No. | 101 | 101 | 101 | 102 | 103 | 104 |
| CR: φ=45/θ=60 | 61 | 57 | 55 | 56 | 53 | 54 |
| ⊿xθ | 0.01 | 0.01 | 0.02 | 0.01 | 0.02 | 0.01 |
| ⊿yθ | 0.01 | 0.02 | 0.02 | 0.02 | 0.02 | 0.02 |
| ⊿xφ | 0.01 | 0.01 | 0.02 | 0.01 | 0.02 | 0.01 |
| ⊿yφ | 0.01 | 0.02 | 0.02 | 0.02 | 0.02 | 0.02 |
| Remarks | Invention | Invention | Invention | Invention | Invention | Invention |

| LCD No. | 007 | 008 | 009 | 010 | 011 |
|---|---|---|---|---|---|
| Polarizer disposed at displaying plane side No. | 205 | 206 | 207 | 208 | 203 |
| Polarizer disposed at backlight side No. | 105 | 105 | 105 | 105 | 106 |
| CR: φ=45/θ=60 | 51 | 46 | 48 | 50 | 46 |
| ⊿xθ | 0.02 | 0.04 | 0.04 | 0.05 | 0.13 |
| ⊿yθ | 0.02 | 0.03 | 0.03 | 0.03 | 0.13 |
| ⊿xφ | 0.02 | 0.04 | 0.04 | 0.05 | 0.12 |
| ⊿yφ | 0.02 | 0.02 | 0.02 | 0.03 | 0.12 |
| Remarks | Invention | Invention | Invention | Invention | Invention |

contd.

| LCD No. | 012 | 013 | 014 | 015 | 016 | 017 |
|---|---|---|---|---|---|---|
| Polarizer disposed at displaying plane side No. | 201 | 201 | 204 | 207 | 210 | 201 |
| Polarizer disposed at backlight side No. | 106 | 107 | 108 | 109 | 101 | 110 |
| CR: φ=45/θ=60 | 44 | 35 | 51 | 33 | 59 | 56 |
| ⊿xθ | 0.16 | 0.12 | 0.02 | 0.15 | 0.01 | 0.01 |
| ⊿yθ | 0.17 | 0.15 | 0.02 | 0.10 | 0.02 | 0.02 |
| ⊿xφ | 0.14 | 0.13 | 0.02 | 0.15 | 0.01 | 0.01 |
| ⊿yφ | 0.15 | 0.14 | 0.02 | 0.10 | 0.01 | 0.02 |
| Remarks | Comparative Example | Invention | Invention | Invention | Invention | Invention |

| LCD No. | 018 | 019 | 020 | 021 | 022 |
|---|---|---|---|---|---|
| Polarizer disposed at displaying plane side No. | 211 | 213 | 212 | 213 | 214 |
| Polarizer disposed at backlight side No. | 110 | 110 | 105 | 111 | 110 |
| CR: φ=45/θ=60 | 54 | 60 | 57 | 59 | 56 |
| ⊿xθ | 0.02 | 0.01 | 0.01 | 0.01 | 0.02 |
| ⊿yθ | 0.02 | 0.02 | 0.02 | 0.02 | 0.03 |
| ⊿xφ | 0.01 | 0.01 | 0.01 | 0.01 | 0.02 |
| ⊿yφ | 0.02 | 0.01 | 0.02 | 0.02 | 0.03 |
| Remarks | Invention | Invention | Invention | Invention | Invention |

It is known that, on the chromaticity coordinates near to neutral gray (x = 0.30, y = 0.30), the color difference within a range of $\Delta x < 0.01$ and $\Delta y < 0.01$ could not be differentiated by human eyes (MacAdam's ellipsoid, Reference "Color Optics" by Ota, pp. 118, FIG. 5(4.1)".

From the results shown in the above Table, it is understood that the liquid-crystal display devices Nos. 001 to 011 and 013 to 022 comprising any of the optical films 101 to 105 and 107 to 111 of Examples of the invention have a remarkably increased contrast ratio in the oblique direction and their image color shift that occurs when watched in the oblique direction is reduced, as compared with the comparative liquid-crystal display device No. 012 (in this, the first optically-anisotropic layer film is the cellulose acylate film No. 106 having regular wavelength dispersion characteristics of Re and Re and therefore outside the scope of the invention).

In particular, it is understood that, in the liquid-crystal display devices Nos. 001 to 010, 014 and 016 to 022, the optical film of the invention used for the first optically-anisotropic layer is formed of the cellulose acylate film (Nos. 101 to 105, and 108 to 111) satisfying all the above-mentioned formulae (1) to (3), the contrast is especially high and the image color shift that occurs when watched in the oblique direction is remarkably reduced.

The liquid-crystal display devices No. 006 and 014 comprising the optical film No. 104 and 108 of Examples of the invention, respectively, was superior to the liquid-crystal display device No. 015 comprising the optical film No. 109 of the invention, as the front contrast is high and the color shift in the oblique direction is low. This may be because, as shown in Table 3, the physical properties such as the haze level of the optical film Nos. 104 and 108 of the invention

were controlled to fall within a preferred range, and therefore the films would contribute further more toward improving the display characteristics.

Example 2:

[Construction of Liquid-Crystal Display Devices 51 to 67]

In the same manner as in Example 1 but changing the polymer type, the amount of the retardation enhancer, the stretching temperature and the stretching draw ratio, various films for first optically-anisotropic layer and films for second optically-anisotropic layer were fabricated; and the films were stuck to a polarizing film to produce polarizers; and using them, VA-mode liquid-crystal display devices 51 to 67 were constructed in the same manner as above, as in Table 7 below.

[Organoleptic Evaluation of Liquid-Crystal Display Devices 51 to 67]

Thus constructed, the liquid-crystal display devices 51 to 67 were organoleptically tested and evaluated according to the following criteria.

The devices were organoleptically tested for light leakage and color shift in the oblique direction in the black state in a dark room.

(Evaluation Criteria for Light Leakage)

◎: Little light leakage found in every polar angle direction and every azimuth angle direction.
○: Some but a little light leakage found in a region in which the polar angle is larger than 60 degrees.
Δ: Some light leakage found in a region in which the polar angle is smaller than 60 degrees.

(Evaluation Criteria for Color Shift)

◎: Little color shift found in every polar angle direction and every azimuth angle direction.
○: Some but slight color shift found in the polar angle direction of 60 degrees, when rotated by 360 degrees around the normal direction of the liquid-crystal cell.
Δ: Definite color shift found in the polar angle direction of 60 degrees, when rotated by 360 degrees around the normal direction of the liquid-crystal cell.

[Results of Detailed Evaluation of Liquid-Crystal Display Devices 51 to 67]

Liquid-Crystal Display Device 57:

This had little light leakage and color shift at a polar angle of 60 degrees and at a azimuth angle of 45 degrees; but some light leakage and color shift were shown in a shallow viewing azimuth angle direction and a deep viewing azimuth angle direction.

Liquid-Crystal Display Device 58:

Red color was shown at a polar angle of 60 degrees and in a deep viewing azimuth angle direction.

Liquid-Crystal Display Device 59:

Blue color was shown.

Liquid-Crystal Display Device 60:

Red color was shown.

Liquid-Crystal Display Devices 63 to 67:

As compared with the liquid-crystal display devices 51 to 62, the amount of light leakage was large.

The optical characteristics of the first and second optically-anisotropic layers used in the liquid-crystal display devices 51 to 67, and the results of their evaluation are shown in the following Table. Re and Rth of the first optically-anisotropic layer of the liquid-crystal display devices 51 to 67 are plotted on the graphs of Figs. 9 to 11. In FIG. 9, further shown are the range of (1) $-2.5 \times Re(550) + 300 < Rth(550) < -2.5 \times Re(550) + 500$ and the range of Nz falling from 1.1 to 5.0; in FIG. 10, further shown are the range of (2) $-2.5 \times Re(450) + 250 < Rth(450) < -2.5 \times Re(450) + 450$ and the range of Nz falling from 1.1 to 5.0; and in FIG. 11, further shown are the range of (3)$-2.5 \times Re (630) + 350 < Rth (630) < -2.5 \times Re(630) + 550$ and the range of Nz falling from 1.1 to 5.0. The symbols of the plotting points that indicate the optical characteristics of the films are shown in the lowermost column of the following Table.

Table 7

| LCD No. | | | 51 | 52 | 53 | 54 | 55 | 56 | 57 | 58 |
|---|---|---|---|---|---|---|---|---|---|---|
| First Optically anisotropic layer | Re(nm) | Wavelength 450nm | 90 | 75 | 102 | 78 | 90 | 77 | 100 | 48 |
| | | Wavelength 550nm | 105 | 90 | 120 | 85 | 115 | 80 | 148 | 50 |
| | | Wavelength 630nm | 109 | 95 | 124 | 82 | 120 | 81 | 164 | 51 |
| | Rth(nm) | Wavelength 450nm | 99 | 88 | 132 | 150 | 83 | 198 | 52 | 246 |
| | | Wavelength 550nm | 119 | 110 | 150 | 160 | 95 | 200 | 76 | 250 |
| | | Wavelength 630nm | 126 | 115 | 147 | 163 | 103 | 201 | 87 | 252 |
| | Relation (2) | -2.5×Re(450)+250 | 25 | 62.5 | -5 | 55 | 25 | 57.5 | 0 | 130 |
| | | -2.5×Re(450)+450 | 225 | 262.5 | 195 | 255 | 225 | 257.5 | 200 | 330 |
| | | *1 | O | O | O | O | O | O | O | O |
| | Relation (1) | -2.5×Re(550)+300 | 37.5 | 75 | 0 | 87.5 | 12.5 | 100 | -70 | 175 |
| | | -2.5×Re(550)+500 | 237.5 | 275 | 200 | 287.5 | 212.5 | 300 | 130 | 375 |
| | | *1 | O | O | O | O | O | O | O | O |
| | Relation (3) | -2.5×Re(630)+350 | 77.5 | 112.5 | 40 | 145 | 50 | 147.5 | -60 | 222.5 |
| | | -2.5×Re(630)+550 | 277.5 | 312.5 | 240 | 345 | 250 | 347.5 | 140 | 422.5 |
| | | *1 | O | O | O | O | O | O | O | O |
| | Nz value | | 1.63 | 1.72 | 1.75 | 2.38 | 1.33 | 3.00 | 1.01 | 5.50 |
| Second opitcally anisotropic layer | Re(nm) | Wavelength 450nm | 6 | 4 | 6 | 4 | 5 | 3 | 4 | 3 |
| | | Wavelength 550nm | 5 | 4 | 5 | 3 | 4 | 3 | 3 | 3 |
| | | Wavelength 630nm | 4 | 2 | 4 | 3 | 4 | 2 | 3 | 2 |
| | Rth(nm) | Wavelength 450nm | 125 | 130 | 125 | 90 | 160 | 65 | 190 | 60 |
| | | Wavelength 550nm | 100 | 120 | 100 | 80 | 140 | 60 | 160 | 40 |
| | | Wavelength 630nm | 95 | 115 | 95 | 70 | 135 | 58 | 150 | 39 |
| | \|Rth(550)\|/\|Re(550)\| | | 20 | 30 | 20 | 27 | 35 | 20 | 53 | 13 |
| Evaluation | Light leakage | | ◎ | O | O | ◎ | ◎ | O | O | O |
| | Color shift | | ◎ | ◎ | ◎ | O | ◎ | O | △ | △ |
| Symbol in the graph | | | ● | | | | | | ◆ | |

contd.

| LCD No. | | | 59 | 60 | 61 | 62 | 63 | 64 | 65 | 66 | 67 |
|---|---|---|---|---|---|---|---|---|---|---|---|
| First Optically anisotropic layer | Re(nm) | Wavelength 450nm | 74 | 83 | 45 | 89 | 128 | 58 | 140 | 60 | 32 |
| | | Wavelength 550nm | 110 | 85 | 50 | 100 | 150 | 70 | 167 | 70 | 40 |
| | | Wavelength 630nm | 121 | 87 | 52 | 103 | 156 | 73 | 177 | 73 | 43 |
| | Rth(nm) | Wavelength 450nm | 55 | 100 | 145 | 255 | 150 | 72 | 103 | 50 | 140 |
| | | Wavelength 550nm | 80 | 105 | 148 | 270 | 175 | 90 | 125 | 60 | 160 |
| | | Wavelength 630nm | 86 | 107 | 153 | 274 | 180 | 94 | 127 | 62 | 165 |
| | 式(2) | -2.5×Re(450)+250 | 65 | 42.5 | 137.5 | 27.5 | -70 | 105 | -100 | 100 | 170 |
| | | -2.5×Re(450)+450 | 265 | 242.5 | 337.5 | 227.5 | 130 | 305 | 100 | 300 | 370 |
| | | *1 | × | O | O | × | × | × | × | × | × |
| | 式(1) | -2.5×Re(550)+300 | 25 | 87.5 | 175 | 50 | -75 | 125 | -117.5 | 125 | 200 |
| | | -2.5×Re(550)+500 | 225 | 287.5 | 375 | 250 | 125 | 325 | 82.5 | 325 | 400 |
| | | *1 | O | O | × | × | × | × | × | × | × |
| | 式(3) | -2.5×Re(630)+350 | 47.5 | 132.5 | 220 | 92.5 | -40 | 167.5 | -92.5 | 167.5 | 242.5 |
| | | -2.5×Re(630)+550 | 247.5 | 332.5 | 420 | 292.5 | 160 | 367.5 | 107.5 | 367.5 | 442.5 |
| | | *1 | O | × | × | O | × | × | × | × | × |
| | Nz value | | 1.23 | 1.74 | 3.46 | 3.20 | 1.67 | 1.79 | 1.25 | 1.36 | 4.50 |
| Second opitcally anisotropic layer | Re(nm) | Wavelength 450nm | 4 | 4 | 3 | 2 | 7 | 5 | 5 | 6 | 3 |
| | | Wavelength 550nm | 4 | 4 | 2 | 2 | 6 | 4 | 5 | 6 | 3 |
| | | Wavelength 630nm | 2 | 2 | 2 | 2 | 6 | 4 | 4 | 5 | 2 |
| | Rth(nm) | Wavelength 450nm | 130 | 130 | 53 | 11 | 130 | 160 | 140 | 192 | 95 |
| | | Wavelength 550nm | 120 | 120 | 50 | 10 | 120 | 140 | 130 | 170 | 80 |
| | | Wavelength 630nm | 115 | 115 | 48 | 9 | 115 | 135 | 125 | 164 | 78 |
| | \|Rth(550)\|/\|Re(550)\| | | 30 | 30 | 25 | 5 | 20 | 35 | 26 | 28 | 27 |
| Evaluation | Light leakage | | O | O | Δ | Δ | Δ | Δ | Δ | Δ | Δ |
| | Color shift | | Δ | Δ | Δ | Δ | Δ | Δ | Δ | Δ | Δ |
| Symbol in the graph | | | ▲ | ▲ | ■ | ▩ | × | | | | |

*1 "O" means that each relation is satisfied, and "×" means that each relation is not satisfied.

From the evaluation results shown in the above Table 7 and from the plotting of the optical characteristics of the first optically-anisotropic layer shown in the graphs of Figs. 9 to 11, it is understandable that, of the VA-mode liquid-crystal display devices comprising the optical film of the invention serving as the first optically-anisotropic layer, those in which the optical film of the invention serving as the first optically-anisotropic layer satisfies the formulae (1) to (3) and has an Nz value falling from 1.1 to 5 have little trouble of light leakage and color shift.

## Claims

1. A liquid crystal display device comprising:

    first and second polarizing elements of which transmission axes are perpendicular to each other, and, disposed between the polarizing elements,
    a liquid crystal layer vertically aligned in a black state, and
    first and second optically anisotropic layer;

    wherein the first optically anisotropic layer is a biaxial optically anisotropic layer of which in-plane retardation (Re) and thickness-direction retardation (Rth) are larger at a longer wavelength range within a range of from 400 nm to 700 nm, and
    the second optically anisotropic layer satisfies Onm<|Re(550)|<10nm and |Rth(550)|/|Re(550)|>10
    in which Re (550) is in-plane retardation (Re) at a wavelength of 550 nm and Rth (550) is thickness-direction retardation at the same wavelength.

2. The liquid crystal display device of claim 1, wherein the first optically anisotropic layer has an Nz value (Nz=Rth (550)/Re(550)+0.5) falling within the range from 0.5 to 10.

3. The liquid crystal display device of claim 1, wherein the first optically anisotropic layer has an Nz value (Nz=Rth (550)/Re(550)+0.5) falling within the range from 1.1 to 5.

**4.** The liquid crystal display device of any one of claims 1 to 3, wherein the first optically anisotropic layer satisfies $Re(550)>20nm$.

**5.** The liquid crystal display device of any one of claims 1 to 4, wherein the first optically anisotropic layer satisfies the following relational formulae (1) to (3):

(1) $-2.5\times Re(550)+300 < Rth(550) < -2.5\times Re(550)+500$
(2) $-2.5\times Re(450)+250 < Rth(450) < -2.5\times Re(450)+450$
(3) $-2.5\times Re(630)+350 < Rth(630) < -2.5\times Re(630)+550$.

**6.** The liquid crystal display device of claim 1, wherein the first optically anisotropic layer satisfies all of the three following relational formulae:

$$Re(550) > 20nm$$

$$0.5 < Nz < 10$$

$$-2.5\times Re(550)+300 < Rth(550) < -2.5\times Re(550)+500$$

where $Re(\lambda)$ and $Rth(\lambda)$ (unit:nm) mean in-plane retardation and thickness direction retardation for an incident light having a wavelength of $\lambda$nm respectively and Nz is defined as $Nz=Rth(550)/Re(550)+0.5$.

**7.** The liquid crystal display device of claim 6, wherein the first optically anisotropic layer further satisfies the following relational formula:

$$-2.5\times Re(450)+250 < Rth(450) < -2.5\times Re(450)+450 \ .$$

**8.** The liquid crystal display device of claim 5 or 6, wherein the first optically anisotropic layer further satisfies the following relational formula:

$$-2.5\times Re(630)+350 < Rth(630) < -2.5\times Re(630)+550 \ .$$

**9.** The liquid crystal display device of any one of claims 1 to 8, wherein the first optically anisotropic layer further satisfies the following relational formulae (6) to (9):

(6) $0.60 \leqq Re(450)/Re(550) \leqq 1$
(7) $1 \leqq Re(630)/Re(550) \leqq 1.25$
(8) $0.60 \leqq Rth(450)/Rth(550) \leqq 1$
(9) $1 \leqq Rth(630)/Rth(550) \leqq 1.25$ .

**10.** The liquid crystal display device of any one of claims 1 to 9, wherein the first optically anisotropic layer is a cellulose acylate film.

**11.** The liquid crystal display device of claim 10, wherein the cellulose acylate film comprises an Re enhancer.

**12.** The liquid crystal display device of claim 11, wherein the Re enhancer comprises at least one compound represented by formula (A):

Formula (A)

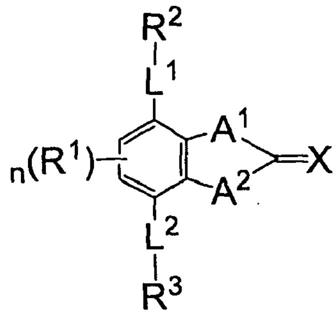

where $L^1$ and $L^2$ independently represent a single bond or a divalent linking group; $A^1$ and $A^2$ independently represent a group selected from the group consisting of -O-,-NR- where R represents a hydrogen atom or a substituent, -S- and -CO-;$R^1$, $R^2$ and $R^3$ independently represent a substituent; X represents a nonmetal atom selected from the groups VI, V and IV atoms; and n is an integer from 0 to 2.

**13.** The liquid crystal display device of claim 11 or 12, wherein the Re enhancer comprises at least two types of compounds different from each other.

**14.** The liquid crystal display device of claim 12, wherein the Re enhancer comprises at least one compound represented by the formula (A) and at least one compound represented by formula (a):

Formula (a) $Ar^1$-$L^{12}$-X-$L^{13}$-$Ar^2$

where $Ar^1$ and $Ar^2$ independently represent an aromatic group; $L^{12}$ and $L^{13}$ independently represent -O-CO- or -CO-O-;X represents 1, 4-cyclohexylen, vinylene or ethynylene.

**15.** The liquid crystal display device of any one of claims 1 to 14, wherein the first optically anisotropic layer has a thickness of from 30 to 200 μm.

**16.** The liquid crystal display device of any one of claims 1 to 15, wherein the second optically anisotropic layer satisfies the following relational formula (4):

(4) $Rth(630)-Rth(450) \leqq 0$.

**17.** The liquid crystal display device of any one of claims 1 to 15, wherein the second optically anisotropic layer satisfies the following relational formula (5):

(5) $Rth(630)-Rth(450) > 0$ .

**18.** The liquid crystal display device of any one of claims 1 to 17, wherein the second optically anisotropic layer is or comprises a cellulose acylate film.

**19.** The liquid crystal display device of claim 18, wherein the cellulose acylate film comprises an Rth enhancer.

**20.** The liquid crystal display device of any one of claims 1 to 19, wherein the Rth enhancer comprises at least one compound showing an absorption peak at a wavelength from 250nm to 380nm.

**21.** The liquid crystal display device of any one of claims 1 to 17, wherein the second optically anisotropic layer is or comprises a layer formed of a liquid crystal composition.

**22.** The liquid crystal display device of any one of claims 1 to 21, wherein the second optically anisotropic layer has a thickness of from 30 to 200 μm.

**23.** The liquid crystal display device of any one of claims 1 to 22, further comprising an outer protective film having a degree of moisture permeation of at most 300 g/($m^2$·day) on the other surface of the first and/or second polarizing element.

**24.** The liquid crystal display device of claim 23, wherein the outer protective film is a norbornene-base polymer film.

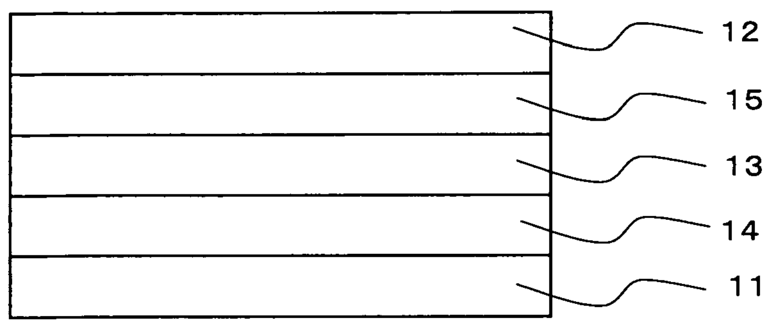


FIG. 1

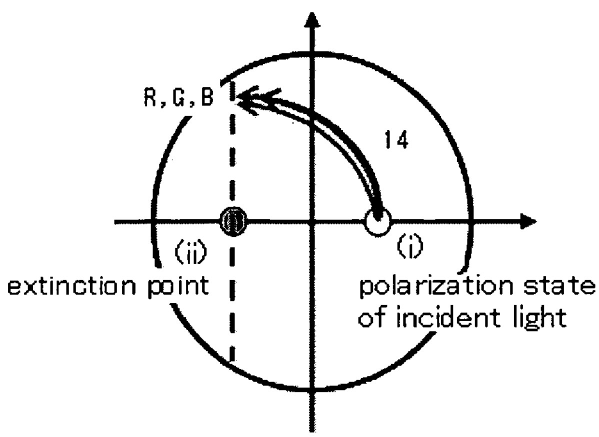
R,G,B
14
(ii)
extinction point
(i)
polarization state
of incident light

FIG. 2

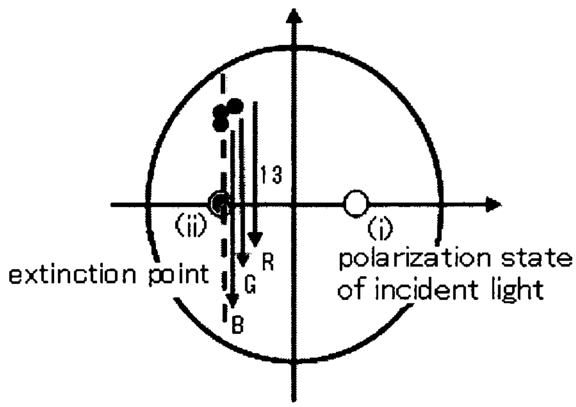
13
(ii)
(i)
R
G
B
extinction point
polarization state
of incident light

FIG. 3

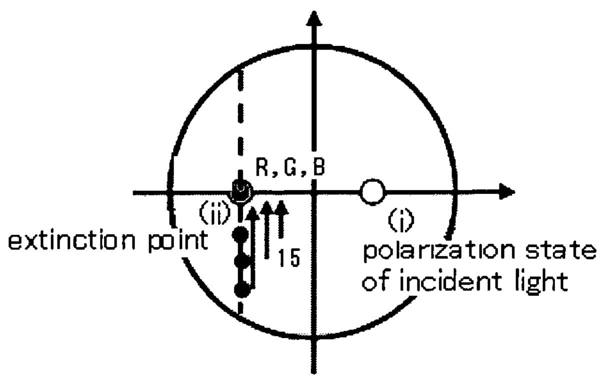
R, G, B
(ii)
extinction point
15
(i)
polarization state
of incident light

FIG. 4

Re-Rth relation of
First optically anisotropic layer

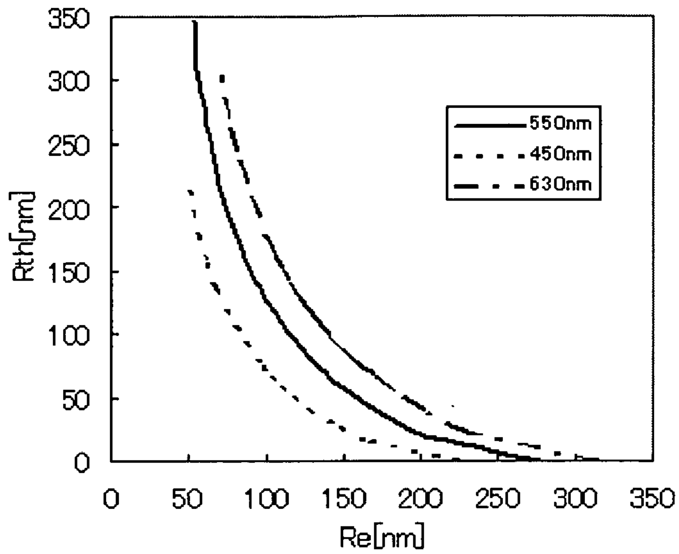


FIG. 5

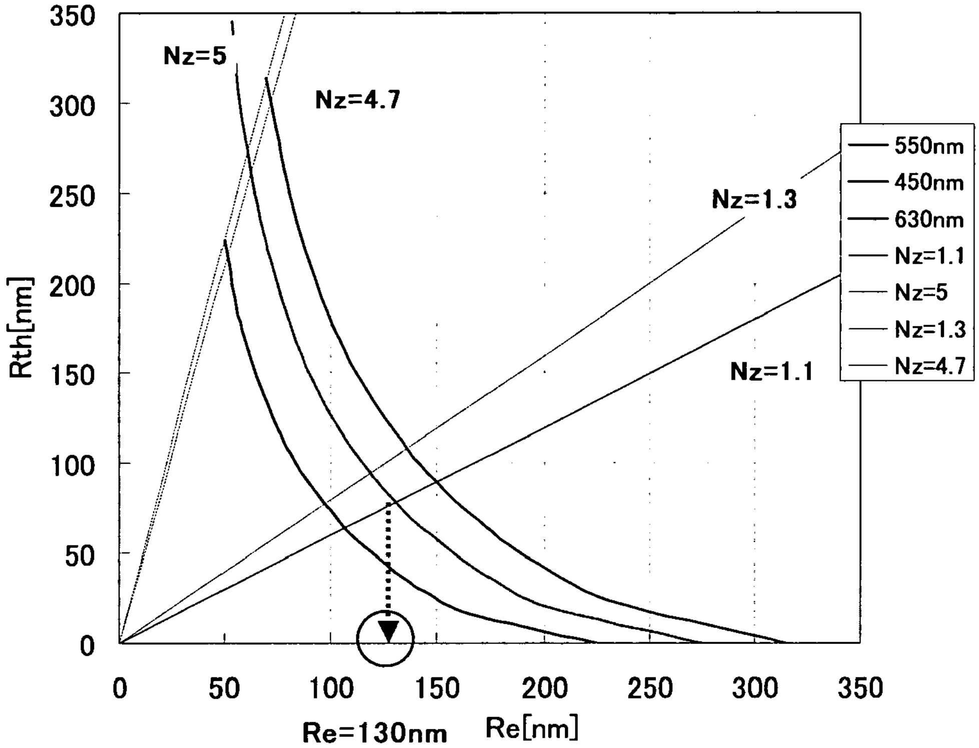
350
300
250
200
150
100
50
0
Rth[nm]
0
50
100
150
200
250
300
350
Re[nm]
Re=130nm
Nz=5
Nz=4.7
Nz=1.3
Nz=1.1
550nm
450nm
630nm
Nz=1.1
Nz=5
Nz=1.3
Nz=4.7

FIG. 6

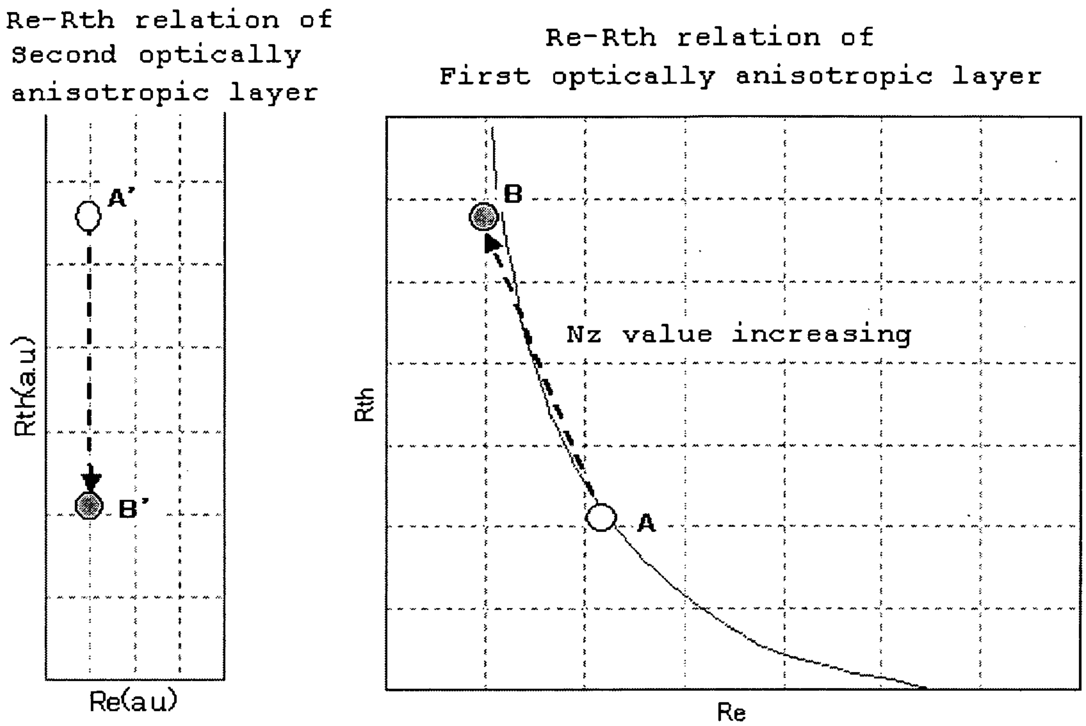
Re-Rth relation of
Second optically
anisotropic layer
A'
B'
Rth(a.u)
Re(a.u)
Re-Rth relation of
First optically anisotropic layer
B
Nz value increasing
A
Rth
Re

FIG. 7

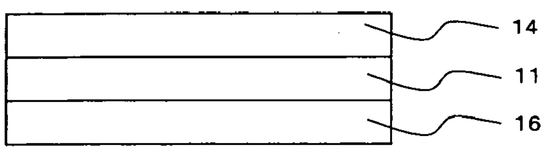


FIG. 8A

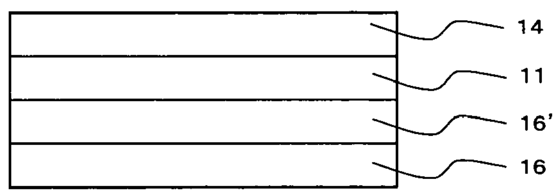


FIG. 8B

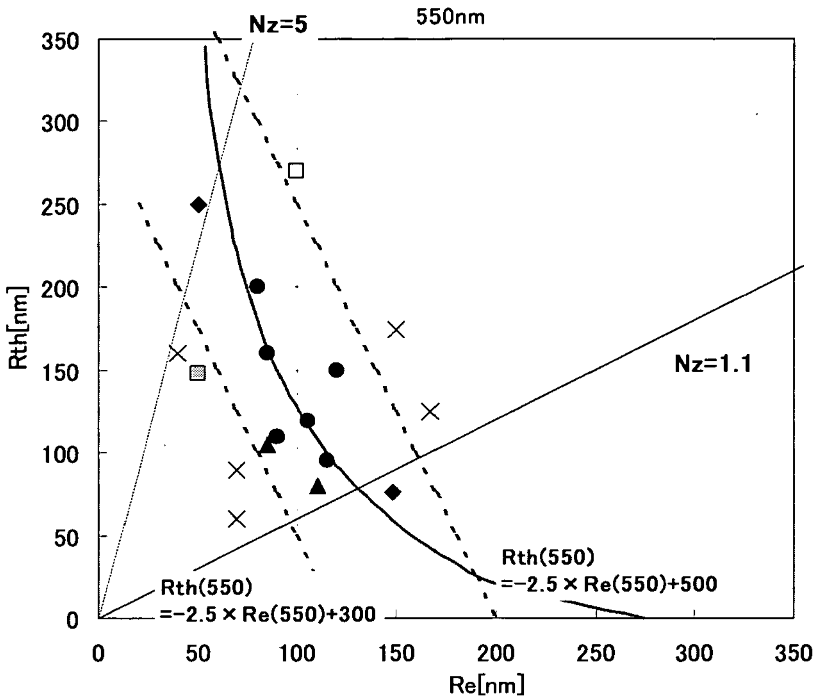

550nm
Nz=5
Nz=1.1
Rth[nm]
Re[nm]
0
50
100
150
200
250
300
350
Rth(550)
=-2.5 × Re(550)+300
Rth(550)
=-2.5 × Re(550)+500


FIG. 9

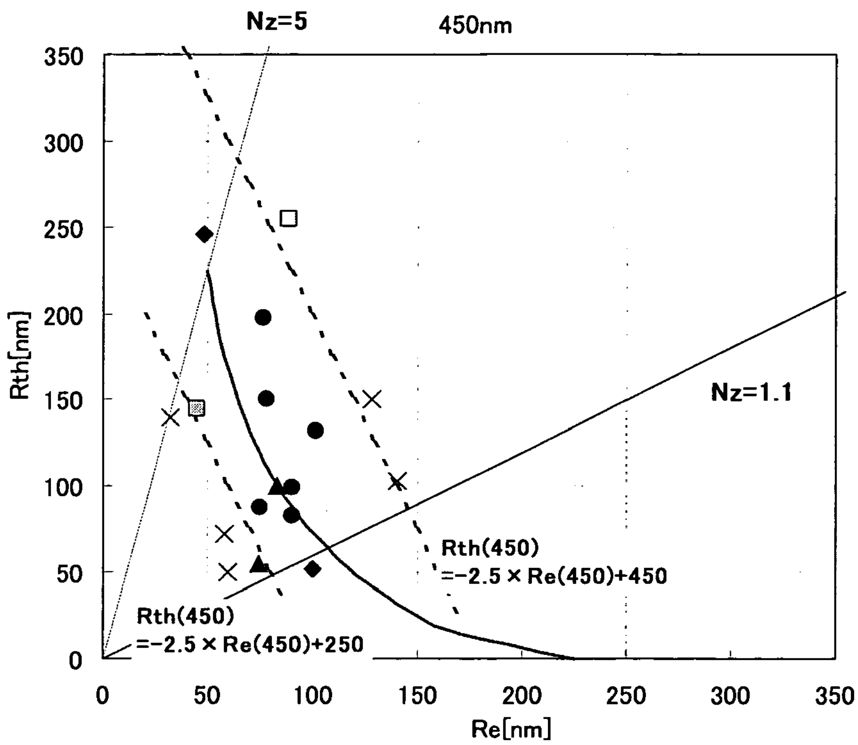
Nz=5
450nm
350
300
250
200
150
100
50
0
Rth[nm]
Nz=1.1
Rth(450)
=-2.5 × Re(450)+450
Rth(450)
=-2.5 × Re(450)+250
0
50
100
150
200
250
300
350
Re[nm]

FIG. 10

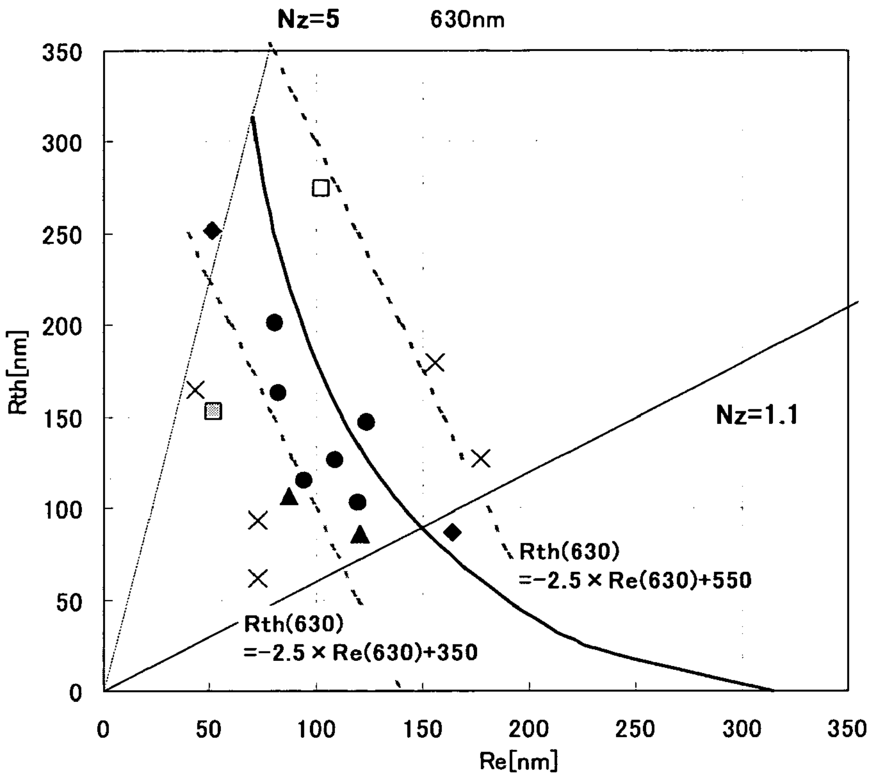
Nz=5
630nm
Rth[nm]
Re[nm]
0
50
100
150
200
250
300
350
Nz=1.1
Rth(630)
=-2.5×Re(630)+550
Rth(630)
=-2.5×Re(630)+350

FIG. 11

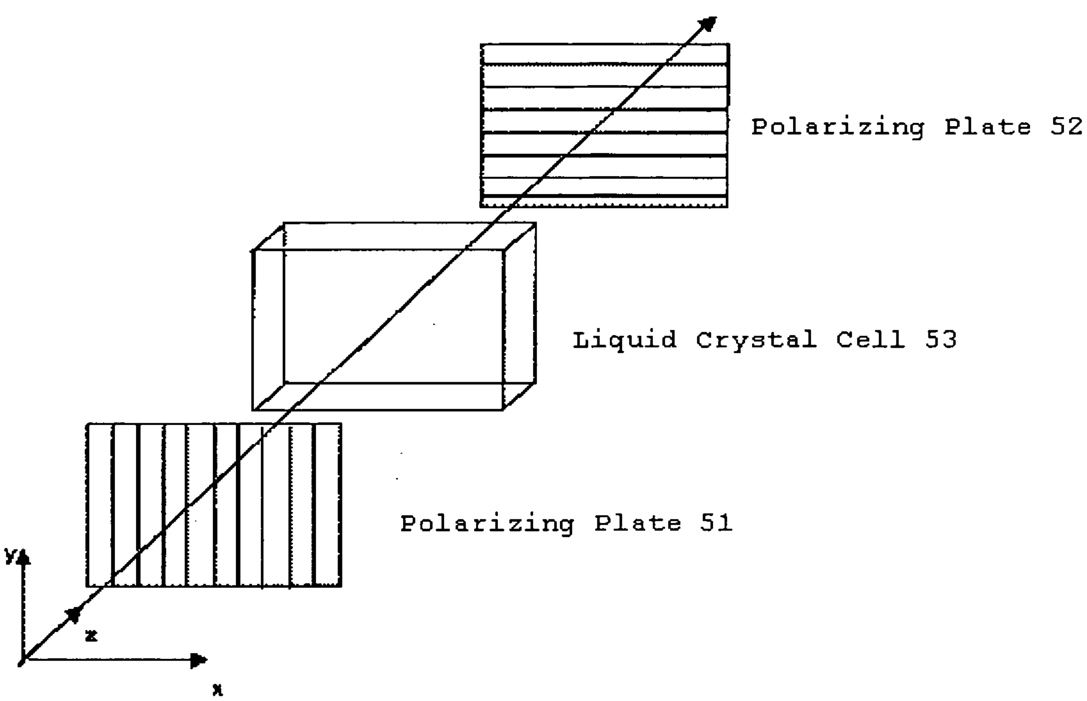
Polarizing Plate 52
Liquid Crystal Cell 53
Polarizing Plate 51
y
z
x

FIG. 12

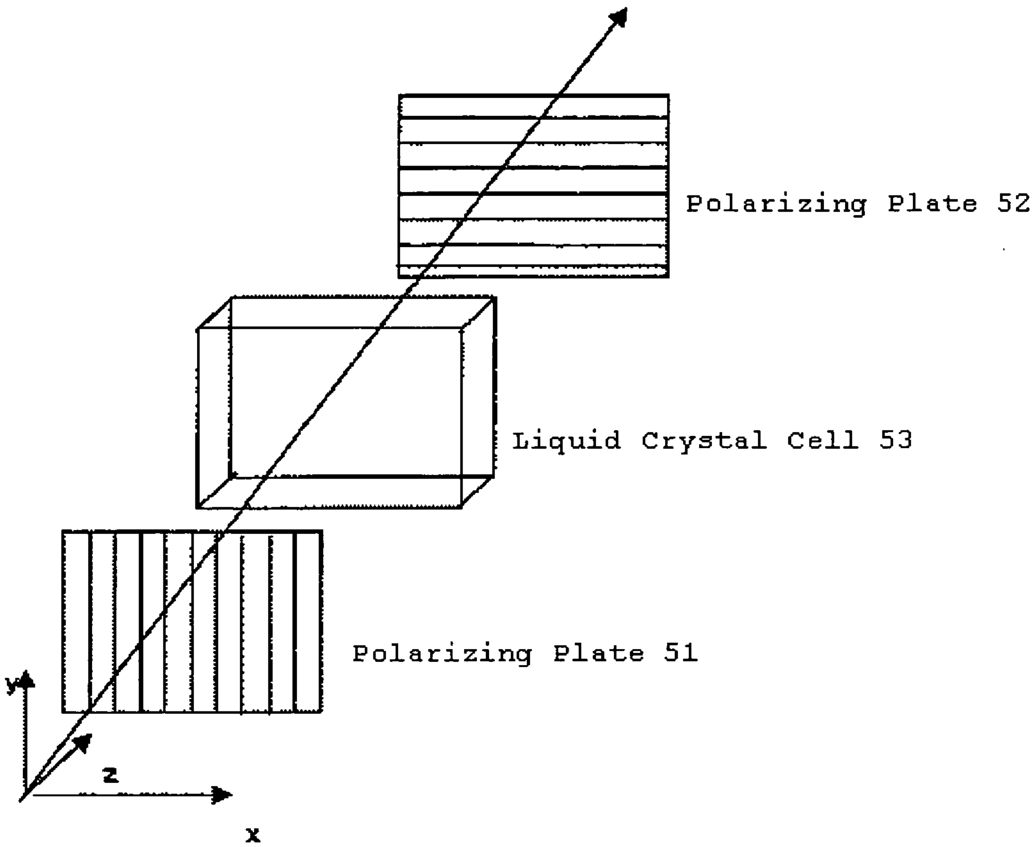
Polarizing Plate 52
Liquid Crystal Cell 53
Polarizing Plate 51
y
z
x

FIG. 13

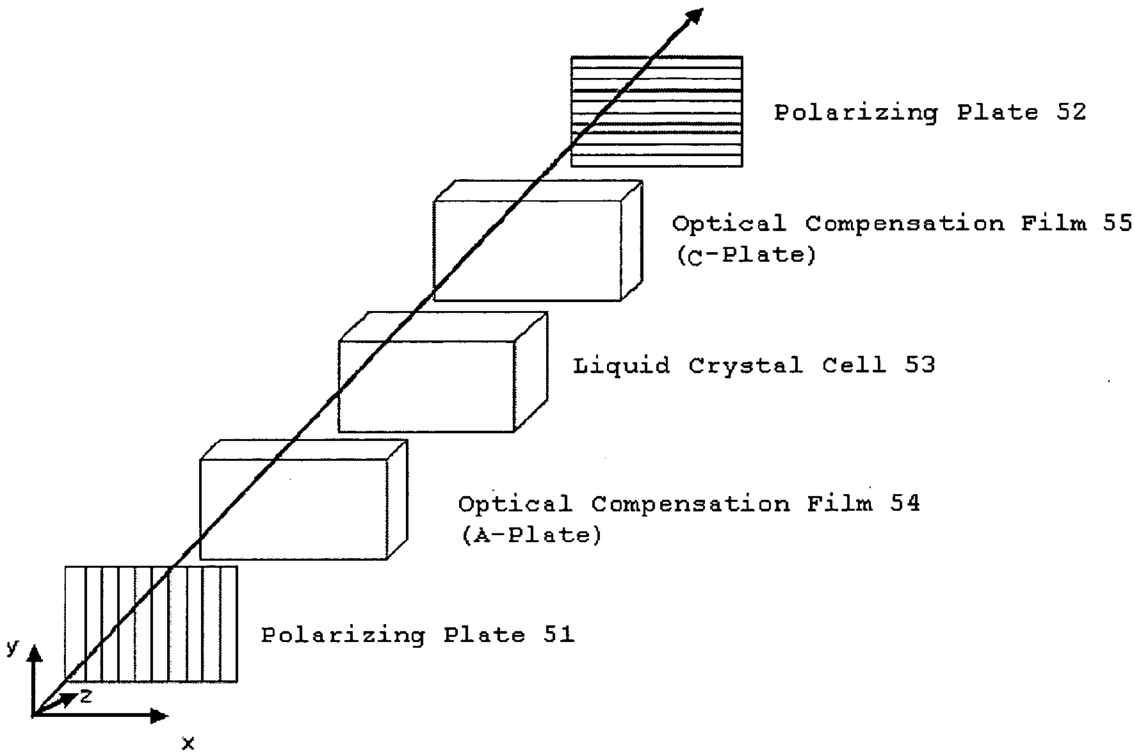
Polarizing Plate 52
Optical Compensation Film 55
(C-Plate)
Liquid Crystal Cell 53
Optical Compensation Film 54
(A-Plate)
Polarizing Plate 51
y
z
x

FIG. 14

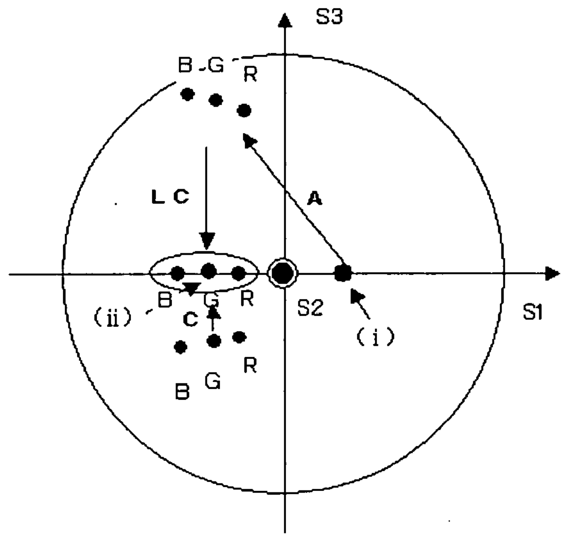


FIG. 15

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003344856 A
- JP 3648240 B
- US 2336310 A
- US 2367603 A
- US 2492078 A
- US 2492977 A
- US 2492978 A
- US 2607704 A
- US 2739069 A
- US 2739070 A
- GB 640731 A
- GB 736892 A
- JP 454554 B
- JP 49005614 B
- JP 60176834 A
- JP 60203430 A
- JP 62115035 A
- JP 4152125 A
- JP 4284511 A
- JP 4298310 A
- JP 11048271 A
- JP 2004050516 A
- JP 4284211 A
- JP 10182621 A
- JP 8337574 A
- JP 6148430 A
- JP 2001027706 A
- JP 2005138375 A


### Non-patent literature cited in the description


- Polymer Handbook. John Wiley & Sons, Inc,
- **MARUSAWA ; UDA'S.** Plastic Material Lecture (17), Cellulose Resin. Nikkan Kogyo Shinbun, 1970
- *Hatsumei Kyokai's Disclosure Bulletin 2001-1745,* 7-8
- **NAOKI INAMOTO.** Hammeto soku -Kozo to Hanohsei. Maruzen
- Shin Jikken Kagaku Koza 14 Yuuki Kagoubutsu no Gousei to Hannou. Maruzen, 2605
- **TADAO NAKATANI.** Riron Yuuki Kagaku Gaisetsu. TOKYO KAGAKU DOZIN CO. LTD, 217
- *Chemical Reviews,* 1991, vol. 91 (2), 165-195
- *Journal of Chemical Crystallography,* 1997, vol. 27 (9), 515-526
- *Mol. Cryst. Liq. Cryst.,* 1979, vol. 53, 229
- *Mol. Cryst. Liq. Cryst.,* 1982, vol. 89, 93
- *Mol. Cryst. Liq. Cryst.,* 1987, vol. 145, 111
- *Mol. Cryst. Liq. Cryst.,* 1989, vol. 170, 43
- *J. Am. Chem. Soc.,* 1991, vol. 113, 1349
- *J. Am. Chem. Soc.,* 1996, vol. 118, 5346
- *J. Am. Chem. Soc.,* 1970, vol. 92, 1582
- *J. Org. Chem.,* 1975, vol. 40, 420
- *Tetrahedron,* 1992, vol. 48 (16), 3437